# EUROPEAN PATENT SPECIFICATION

(11) **EP 4 290 841 B1**
(45) Date of publication and mention of the grant of the patent: **30.07.2025**
(21) Application number: 22921726.0
(22) Date of filing: 23.12.2022
(51) Int. Cl.: G06F 3/04817, G06F 3/0482, G06F 3/0485, G06F 3/0486, G06F 3/0488, G06F 3/04883, H04M 1/72403, H04M 1/72448, H04M 1/72406

(54) **CARD DISPLAY METHOD, ELECTRONIC DEVICE, AND COMPUTER READABLE STORAGE MEDIUM**
KARTENANZEIGEVERFAHREN, ELEKTRONISCHE VORRICHTUNG UND COMPUTERLESBARES SPEICHERMEDIUM
PROCÉDÉ D'AFFICHAGE DE CARTES, DISPOSITIF ÉLECTRONIQUE ET MOYEN DE STOCKAGE LISIBLE PAR ORDINATEUR

(30) Priority: 20.01.2022 CN 202210068707
(43) Date of publication of application: 13.12.2023
(73) Proprietor: Honor Device Co., Ltd., Shenzhen, Guangdong 518040 (CN)
(72) Inventor: BAO, Xintong, Shenzhen, Guangdong 518040 (CN); WANG, Long, Shenzhen, Guangdong 518040 (CN)
(74) Representative: Gill Jennings & Every LLP
(86) International application number: PCT/CN2022/141601
(87) International publication number: WO 2023/138305

(56) References cited:
- CN-A- 103 136 301
- CN-A- 110 018 761
- CN-A- 110 837 398
- CN-A- 110 879 679
- CN-A- 113 835 580
- US-A1- 2015 193 135
- US-A1- 2016 092 043
- US-A1- 2024 231 563

## Description

### TECHNICAL FIELD

The present application relates to the field of information display, and in particular, to a card display method and an electronic device.

### BACKGROUND

Generally, users can implement various functions through different applications (application, APP) installed on electronic devices, thus storing a large number of files, for example, receiving or sending files such as documents, audios, videos, or images through third-party APPs such as instant messaging APPs, or downloading installation packages through application market APPs, or downloading audio files through audio APPs, or capturing image or video files through camera APPs. Correspondingly, electronic devices need to store a large number of files and files from different sources are stored in different storage paths.

At present, cards can be created on the desktop, and various file information can be displayed through the cards to implement rapid file management. A card is an information carrier that intuitively and quickly provides important or closely related information in a condensed form for the display of important information. Users can view related information intuitively and conveniently by looking at the cards on the desktop.

In the prior art, CN113835580A relates to an application icon display method and device, electronic equipment and a storage medium.

However, there are deficiencies in the existing manner of displaying information through cards. For example, an amount of displayed information is limited, which cannot meet the needs of displaying a large amount of information in practical applications. Besides, the existing manner of displaying information through cards leaks user personal information, deteriorating the user experience.

### SUMMARY

The present application provides a card display method and an electronic device, which solves the problem of a limited amount of displayed information and low security in the manner of displaying information through cards.

To achieve the foregoing objective, the following technical solutions are used in the present application:

According to a first aspect, the present application provides a card display method, including: receiving a first operation performed by a user on an electronic device; displaying a first card on the desktop of the electronic device in response to the first operation, where the first card includes M folder icons, each of the M folder icons corresponds to a folder of the electronic device, and M is a positive integer; receiving a second operation performed by the user on a first folder icon in the first card, where the first folder icon corresponds to a first folder in the electronic device; and switching from displaying the desktop to: displaying an interface of the first folder in response to the second operation.

Through the solution of the present application, a card including a plurality of folders can be added on the desktop according to the need of the user. For example, each folder in the card can be set as a folder commonly used by the user or a folder for storing files downloaded or received by the electronic device. In this way, when needed, the user can quickly view corresponding information of some folders only through the card on the desktop. Compared with the solution in the related art that only displays content of recently downloaded files, the solution of the present application can display a larger amount of information. Besides, because the folder is displayed instead of specific file information, the confidentiality is good. The solution of the present application is convenient, quick, and secure in file management.

The first operation may be an operation of adding a card by the user on the card adding interface set by the system, or may be an operation of adding a card in other manners, which may be determined according to actual usage requirements, and is not limited in this embodiment of the application.

The card display method further includes: receiving a third operation performed by the user on the first card; and displaying a card menu bar in response to the third operation, where the card menu bar includes at least one of the following: an editing option, a more card option, and a removing option.

The third operation is an operation in which the user slides in a preset direction on the first card, for example, an upward sliding operation. Alternatively, the third operation is an operation in which the user touches the first card for a duration greater than or equal to a first duration, and may be referred to as a long press operation for short.

The card menu bar includes the editing option. After the displaying a card menu bar, the method further includes:
receiving a fourth operation (for example, a click operation) performed by the user on the editing option; and displaying a first folder path option and a second folder path option in response to the fourth operation; and
when receiving an operation (for example, a click operation) performed by the user on the first folder path option, setting, as M folders in the first card, M folders recommended by the system; or
when receiving an operation (for example, a click operation) performed by the user on the second folder path option, setting N folders in the first card according to a folder selected by the user, where N is a positive integer less than or equal to M.

In some possible implementations, the setting, when receiving an operation performed by the user on the first folder path option, at least one folder in the first card according to a folder selected by the user includes:
displaying N folder setting items when receiving the operation performed by the user on the second folder path option;
displaying a folder selection interface when receiving an operation (for example, a click operation) performed by the user on a first setting item of the N folder setting items, where one or more folder options are displayed in the folder selection interface, and each folder option corresponds to a folder; and
setting a folder corresponding to a target folder option in the folder selection interface as a folder in the first card when receiving an operation (for example, a click operation) performed by the user on the target folder option.

Through the proposal of the present application, cards of various specifications on the desktop are provided for users to choose, and users can choose to add cards suitable for their own usage habits to the desktop for display according to actual usage needs. Moreover, the user can customize a storage path of each folder in the card on the desktop. When needed, the user only needs to open the folder in the card on the desktop to view corresponding information, which can display a large amount of information and is convenient, quick, and secure.

In some possible implementations, the folder selection interface includes a system folder option and/or an application folder option, the system folder option corresponds to a folder preset in the system in the electronic device, and the application folder option corresponds to a folder corresponding to an application installed in the electronic device;
where the target folder option is the system folder option and/or the application folder option.

In some possible implementations, the first folder is any one of the following: folder 1, used to store a user personal file; folder 2, used to store a file downloaded by the electronic device within the latest preset period; folder 3, used to store all files downloaded and received by the electronic device; and folder 4, used to store all files downloaded through a first application installed in the electronic device.

Through the solution of the present application, since a folder form or a file name is presented to the user in the card on the desktop, instead of specific information of the file, user personal information is not leaked.

In some possible implementations, the card menu bar includes the more card option. After the displaying a card menu bar, the method further includes:
receiving a fifth operation (for example, a click operation) performed by the user on the more card option; and displaying a plurality of card preview images in response to the fifth operation, where the plurality of card preview images respectively correspond to cards of different specifications;
receiving a sixth operation (for example, a click operation) performed by the user on a second card preview image of the plurality of card preview images, where the second card preview image corresponds to a second card; and adding and displaying the second card on the desktop of the electronic device in response to the sixth operation.

In some possible implementations, the second card is used to display file attribute information of a file recently downloaded by the electronic device, and the file attribute information includes at least one of the following: a file name, a file download time, an occupied file space size, and a file type.

In some possible implementations, after the displaying the second card, the method further includes: receiving a seventh operation (for example, a click operation) performed by the user on the second card; and opening the recently downloaded file in response to the seventh operation, and displaying file content of the recently downloaded file.

In some possible implementations, the second card includes a first control, and the first control is used to trigger the transmission of a file displayed in the second card to another electronic device; and
after the displaying the second card, the method further includes:
displaying a first interface when receiving an operation (for example, a click operation) performed by the user on the first control, where the first interface includes one or more sharing mode icons, and each sharing mode icon corresponds to a file transfer mode and/or a file transfer object; and
sending a file displayed in the second card to a first file transfer object when receiving an operation (for example, a click operation) performed by the user on the first sharing mode icon and the first sharing mode icon corresponds to the first file transfer object; or
displaying a plurality of file transfer objects when receiving an operation (for example, a click operation) performed by the user on the second sharing mode icon and the second sharing mode icon corresponds to a first file transfer mode; and sending a file displayed in the second card to a first object of the plurality of file transfer objects in the first file transfer mode when receiving an operation performed by the user on the first object;
where the first sharing mode icon and the second sharing mode icon are icons of the one or more sharing mode icons respectively.

In some possible implementations, the second card includes a second control, and the second control is used to trigger moving the file displayed in the second card to a storage path in the electronic device.

After the displaying the second card, the method further includes: displaying a second interface when receiving an operation (for example, a click operation) performed by the user on the second control, where the second interface includes one or more folder identifiers, and each folder identifier corresponds to a folder and a storage path of the folder; and when receiving an operation (for example, a click operation) performed by the user on a first folder identifier, moving, according to a storage path corresponding to the first folder identifier, a file displayed in the second card to a folder corresponding to the first folder identifier.

In some possible implementations, after the displaying the second card, the method further includes: receiving an eighth operation (for example, a sliding operation) performed by the user on the second card; and sequentially updating and displaying, in the second card in response to the eighth operation, file attribute information of files downloaded by the electronic device within a recent preset period.

In the solution of the present application, cards of various specifications on the desktop are provided for users to choose. For example, the cards on the desktop can support scrolling switching display of recently processed files. Users only need to slide cards on the desktop to intuitively view all files recently used on the electronic device, which is convenient.

In some possible implementations, the sequentially updating and displaying file attribute information of files downloaded by the electronic device within a recent preset period includes: sequentially updating and displaying, according to an order of file download times, the file attribute information of the files downloaded by the electronic device within the recent preset period.

In some possible implementations, the first card may include a first area and a second area, where the first area is used to display the M folder icons, and the second area is used to display file attribute information of a file recently downloaded on the electronic device; and the file attribute information includes at least one of the following: a file name, a file download time, an occupied file space size, and a file type.

In some possible implementations, the method further includes: receiving a drag operation performed by the user on a target card, where the target card is the first card or the second card; and updating a display location of the target card on the desktop in response to the drag operation.

In some possible implementations, the card menu bar includes the removing option. After the displaying a card menu bar, the method further includes: receiving a ninth operation (for example, a click operation) performed by the user on the removing option; and removing the first card from the desktop in response to the ninth operation.

Through the proposal of the present application, users can choose to add cards suitable for their own usage habits to the desktop for display according to actual usage needs. When needed, the user only needs to open the folder in the card on the desktop to view corresponding information, or simply slide the card on the desktop to intuitively view all the files recently used on the electronic device, which can display a large amount of information and is convenient, quick, and secure.

According to a second aspect, the present application provides a card display apparatus, including units configured to perform the method according to the first aspect. The apparatus may correspondingly perform the method described in the first aspect. For relevant description of the units in the apparatus, reference may be made to the description of the first aspect. For brevity, details are not described herein again.

The method according to the first aspect may be implemented by hardware or may be implemented by hardware executing corresponding software. The hardware or the software includes one or more modules or units corresponding to the function, for example, a processing module or unit and a display module or unit.

According to a third aspect, the present application provides an electronic device, including a processor, where the processor is coupled to a memory, the memory is configured to store a computer program or instructions, and the processor is configured to execute the computer program or instructions stored in the memory, to cause the method according to the first aspect to be performed. For example, the processor is configured to execute the computer program or instructions stored in the memory to cause the apparatus to perform the method according to the first aspect.

According to a fourth aspect, the present application provides a computer-readable storage medium. The computer-readable storage medium stores a computer program (which may also be referred to as an instruction or code) for implementing the method according to the first aspect. For example, the computer program, when executed by a computer, causes the computer to perform the method according to the first aspect.

According to a fifth aspect, the present application provides a chip, including a processor. The processor is configured to read and execute a computer program stored in a memory, to perform the method according to the first aspect and any possible implementation of the first aspect. Optionally, the chip further includes a memory, and the memory and the processor are connected through a circuit or a wire.

According to a sixth aspect, the present application provides a system-on-chip, including a processor. The processor is configured to read and execute a computer program stored in a memory, to perform the method according to the first aspect and any possible implementation of the first aspect. Optionally, the system-on-chip further includes a memory, where the memory and the processor are connected through a circuit or a wire.

According to a sixth aspect, the present application provides a computer program product. The computer program product includes a computer program (also referred to as an instruction or code), and the computer program, when executed by a computer, causes the computer to implement the method according to the first aspect.

It may be understood that, for beneficial effects of the second aspect to the seventh aspect, reference may be made to the relevant description in the first aspect, and details are not described herein again.

### BRIEF DESCRIPTION OF DRAWINGS

FIG. 1 is a schematic structural diagram of an electronic device to which a card display method is applied according to an embodiment of the present application;
FIG. 2 is a block diagram of a software structure of an electronic device to which a card display method is applied according to an embodiment of the present application.
FIG. 3A, FIG. 3B, FIG. 3C, FIG. 3D, and FIG. 3E are schematic diagrams of an interface for searching for a file through file management according to an embodiment of the present application;
FIG. 4 is a schematic diagram of an interface of a card display method according to an embodiment of the present application;
FIG. 5A, FIG. 5B, FIG. 5C, and FIG. 5D are schematic diagrams of an interface of a card display method according to an embodiment of the present application;
FIG. 6A(A), FIG. 6A(B), and FIG. 6A(C) are interactive schematic diagrams of a setting interface for calling up a card on the desktop according to an embodiment of the present application;
FIG. 6B(A), FIG. 6B(B), and FIG. 6B(C) are schematic diagrams of an interface of cards of different specifications according to an embodiment of the present application;
FIG. 6C(A), FIG. 6C(B), FIG. 6C(C), and FIG. 6C(D) are schematic diagrams of an interface of adding a card of a specification to the desktop on an electronic device after a user selects the card according to an embodiment of the present application;
FIG. 7(a) and FIG. 7(b) are schematic diagrams of an interface for calling up a plurality of functional options by operating a card on the desktop according to an embodiment of the present application;
FIG. 8(a), FIG. 8(b), and FIG. 8(c)-1 and FIG. 8(c)-2 are schematic diagrams of an interface for calling up cards of a plurality of specifications for a user to select and adding the card to the desktop according to an embodiment of the present application;
FIG. 9(a), FIG. 9(b), and FIG. 9(c)-1 and FIG. 9(c)-2 are schematic diagrams of an interface for calling up cards of a plurality of specifications for a user to select and adding the card to the desktop according to an embodiment of the present application;
FIG. 10A(a), FIG. 10A(b), FIG. 10A(c), FIG. 10A(d), FIG. 10A(e), and FIG. 10A(f) are schematic diagrams of an interface for displaying a customized file after operating an editing option of a plurality of functional options according to an embodiment of the present application;
FIG. 10B(a), FIG. 10B(b), FIG. 10B(c), and FIG. 10B(d) are schematic diagrams of an interface for customizing a folder path by a user according to an embodiment of the present application;
FIG. 11(a), FIG. 11(b), FIG. 11(c), FIG. 11(d), FIG. 11(e), and FIG. 11(f) are schematic diagrams of an interface in which display of a plurality of files in a file card can be switched according to an embodiment of the present application;
FIG. 12(a) and FIG. 12(b) are schematic diagrams of an interface of a sharing control in a file card during application according to an embodiment of the present application;
FIG. 13(a) and FIG. 13(b) are schematic diagrams of an interface for a send-to control in a file card during application according to an embodiment of the present application;
FIG. 14(a) and FIG. 14(b) are schematic diagrams of an interface for a "my file" folder in a folder card during application according to an embodiment of the present application;
FIG. 15(a) and FIG. 15(b) are schematic diagrams of an interface of a "recent" folder in a folder card during application according to an embodiment of the present application;
FIG. 16(a) and FIG. 16(b) are schematic diagrams of an interface of a "download and receive" folder in a folder card during application according to an embodiment of the present application;
FIG. 17(a) and FIG. 17(b) are schematic diagrams of an interface for an "instant messaging" folder in a folder card during application according to an embodiment of the present application;
FIG. 18 is a schematic diagram of file cards in various display forms according to an embodiment of the present application;
FIG. 19(a), FIG. 19(b), and FIG. 19(c) are schematic diagrams of file cards in various content forms according to an embodiment of the present application;
FIG. 20(a), FIG. 20(b), FIG. 20(c), and FIG. 20(d) are schematic diagrams of a file card when a card display method is applied to camera photographing management according to an embodiment of the present application;
FIG. 21 is a diagram of a software architecture for applying a card display method according to an embodiment of the present application;
FIG. 22 is a schematic flowchart of a card display method according to an embodiment of the present application; and
FIG. 23 is a schematic structural diagram of a card display apparatus according to an embodiment of the present application.

### DETAILED DESCRIPTION

To make the objectives, technical solutions, and advantages of the embodiments of the present application clearer, the following clearly and completely describes the technical solutions in the embodiments of the present application with reference to the accompanying drawings in the embodiments of the present application. Apparently, the described embodiments are merely some embodiments of the present application rather than all of the embodiments. All other embodiments obtained by a person of ordinary skill in the art based on the embodiments of the present application without creative efforts shall fall within the protection scope of the present application.

The term "and/or" used herein describes only an association relationship for describing associated objects and represents that three relationships may exist. For example, A and/or B may represent the following three cases: the following three cases: Only A exists, both A and B exist, and only B exists. The symbol "/" in this specification represents an "or" relationship between associated objects. For example, "A/B" means A or B.

In the specification and claims in the embodiments of the present application, the terms such as "first" and "second" are intended to distinguish between different objects, but do not indicate a particular order of the objects. For example, a first card, a second card, and the like are used to distinguish between different cards, but are not used to describe a particular sequence of the cards.

In the embodiments of the present application, the word "exemplary" or "for example" is used to represent giving an example, an illustration, or a description. Any embodiment or design scheme described by using "exemplarily" or "for example" in the embodiments of the present application should not be explained as being more preferred or having more advantages than another embodiment or design scheme. In particular, the terms such as "exemplary" and "example" as used herein are intended to present the related concept in a specific implementation.

In the description of the embodiments of the present application, unless otherwise stated, "a plurality of" means two or more. For example, "a plurality of processing units" means two or more processing units. "A plurality of elements" means two or more elements.

The card display method provided in the embodiments of the present application is applicable to an electronic device such as a mobile phone, a tablet computer, a wearable device, an in-vehicle device, an augmented reality (augmented reality, AR) device/virtual reality (virtual reality, VR) device, a notebook computer, an ultra-mobile personal computer (ultra-mobile personal computer, UMPC), a netbook, or a personal digital assistant (personal digital assistant, PDA), which is not limited in the embodiments of the present application.

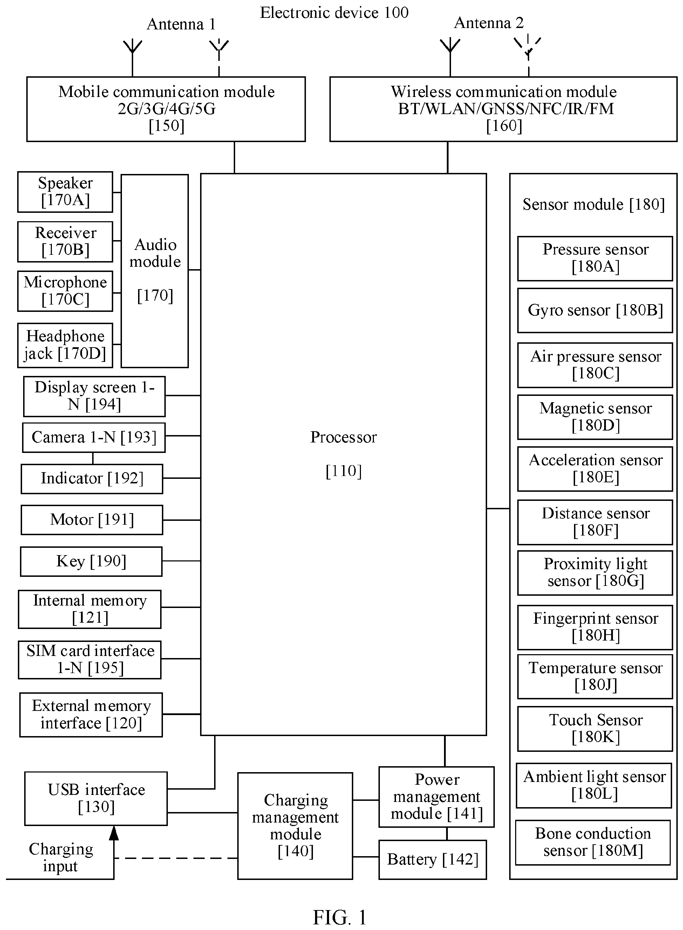

For example, FIG. 1 is a schematic structural diagram of an electronic device 100 according to an embodiment of the present application. The electronic device 100 may include a processor 110, an external memory interface 120, an internal memory 121, a universal serial bus (universal serial bus, USB) interface 130, a charge management module 140, a power management module 141, a battery 142, an antenna 1, an antenna 2, a mobile communication module 150, a wireless communication module 160, an audio module 170, a loudspeaker 170A, a receiver 170B, a microphone 170C, a headphone jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, a proximity light sensor 180G, a fingerprint sensor 180H, a temperature sensor 180J, a touch sensor 180K, an ambient light sensor 180L, a bone conduction sensor 180M, and the like.

It may be understood that an example structure in this embodiment of the present application does not constitute a specific limitation on the electronic device 100. In some other embodiments of the present application, the electronic device 100 may include more or fewer components than those shown in the figure, or some components may be combined, or some components may be divided, or different component arrangements may be used. The components in the portrait may be implemented by hardware, software, or a combination of software and hardware.

The processor 110 may include one or more processing units. For example, For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and a command center of the electronic device 100. The controller may generate an operation control signal according to instruction operation code and a time-sequence signal, and control obtaining and executing of instructions.

A memory may also be disposed in the processor 110, configured to store instructions and data. In some embodiments the memory in processor 110 is a cache memory. The memory may store instructions or data recently used or cyclically used by the processor 110. If the processor 110 needs to use the instruction or the data again, the processor may directly call the instruction or the data from the memory, Repeated access is avoided, and waiting time of the processor 110 is reduced, thereby improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (derail clock line, SCL). In some embodiments, the processor 110 may include a plurality of I2C buses. The processor 110 may be coupled to the touch sensor 180K, a charger, a flash, the camera 193, and the like by using different I2C bus interfaces respectively. For example, the processor 110 may be coupled to the touch sensor 180K by using the I2C interface, so that the processor 110 communicates with the touch sensor 180K by using the I2C bus interface, to implement a touch function of the electronic device 100.

The I2S interface may be configured to perform audio communication. In some embodiments, the processor 110 may include a plurality of I2S buses. The processor 110 may be coupled to the audio module 170 through the I2S bus to implement communication between the processor 110 and the audio module 170. In some embodiments, the audio module 170 may transmit an audio signal to the wireless communications module 160 through the I2S interface, to perform a function of answering a call through a Bluetooth headset.

The PCM interface may also be configured to perform audio communication, to sample, quantize, and encode an analog signal. In some embodiments, the audio module 170 may be coupled to the wireless communications module 160 through a PCM bus interface. In some embodiments, the audio module 170 may also transfer an audio signal to the wireless communications module 160 through the PCM interface, to perform the function of answering a call through the Bluetooth headset. Both the I2S interface and the PCM interface may be configured to perform audio communication.

The UART interface is a universal serial data bus and is configured to perform asynchronous communication. The bus may be a bidirectional communications bus. The bus converts data to be transmitted between serial communication and parallel communication. In some embodiments, the UART interface is usually configured to connect the processor 110 to the wireless communications module 160. For example, the processor 110 communicates with a Bluetooth module in the wireless communication module 160 by using a UART interface, to implement a Bluetooth function. In some embodiments, the audio module 170 may transfer an audio signal to the wireless communications module 160 through the UART interface, to perform a function of playing music through the Bluetooth headset.

The MIPI may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 by using the CSI interface, to implement a photographing function of the electronic device 100. The processor 110 communicates with the display screen 194 by using the DSI interface, to implement a display function of the electronic device 100.

A GPIO interface may be configured by software. The GPIO interface may be configured as a control signal or a data signal. In some embodiments, the GPIO interface may be configured to connect the processor 110 to the camera 193, the display screen 194, the wireless communications module 160, the audio module 170, the sensor module 180, and the like. The GPIO interface may also be configured as an I2C interface, an I2S interface, a UART interface, a MIPI, and the like.

The USB interface 130 is an interface that complies with the USB standard specification, and may be specifically a Mini USB interface, a Micro USB interface, a USB Type C interface, and the like. The USB interface 130 may be configured to be connected to the charger to charge the electronic device 100, or may be used for data transmission between the electronic device 100 and the peripheral device, The USB interface 130 may also be configured to connect to a headset to play audio through the headset. The interface may alternatively be configured to connect to another electronic device such as an AR device.

It may be understood that a schematic interface connection relationship between the modules in the embodiments of the present application is merely an example for description, and constitutes no limitation on the structure of the electronic device 100. In some other embodiments of the present application, the electronic device 100 may alternatively use an interface connection manner different from that in the foregoing embodiment, or use a combination of a plurality of the interface connection manners.

The charging management module 140 is configured to receive charging input from the charger. The charger may be a wireless charger or a wired charger. In some embodiments of wired charging, the charging management module 140 may receive charging input of the wired charger through the USB interface 130. In some embodiments of wireless charging, the charging management module 140 may receive a wireless charging input by using a wireless charging coil of the electronic device 100. While the charging management module 140 charges the battery 142, a power management module 141 may also supply power to the electronic device.

The power management module 141 is configured to be connected to the battery 142, the charging management module 140, and the processor 110. The power management module 141 receives input from the battery 142 and/or the charging management module 140, and supplies power to the processor 110, the internal memory 121, the external memory, the display screen 194, the camera 193, the wireless communications module 160, and the like. The power management module 141 may be further configured to monitor parameters such as a battery capacity, a cycle count of a battery, and a battery health state (leakage and impedance). In some other embodiments, the power management module 141 may alternatively be disposed in the processor 110. In some other embodiments, the power management module 141 and the charging management module 140 may also be disposed in a same device.

A wireless communication function of the electronic device 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. The structures of antenna 1 and antenna 2 in FIG. 1 are just an example. Each antenna of the electronic device 100 may be configured to cover one or more communication frequency bands. Different antennas may further be multiplexed to improve utilization of the antennas. For example, the antenna 1 may be multiplexed into a diversity antenna of a wireless local area network. In some other embodiments, the antennas may be used with a tuning switch.

The mobile communication module 150 may provide a solution to wireless communication such as 2G/3G/4G/5G applied to the electronic device 100. The mobile communications module 150 may include at least one filter, a switch, a power amplifier, a low noise amplifier (low noise amplifier, LNA), and the like. The mobile communications module 150 may receive an electromagnetic wave by using the antenna 1, perform processing such as filtering and amplification on the received electromagnetic wave, and send the electromagnetic wave to the modem processor for demodulation. The mobile communications module 150 may further amplify a signal modulated by the modem processor, and convert the signal into an electromagnetic wave by using the antenna 1 for radiation. In some embodiments, at least some function modules of the mobile communications module 150 may be disposed in the processor 110. In some embodiments, at least some of the functional modules of the mobile communications module 150 may be disposed in a same device as at least some of modules of the processor 110.

The modulation and demodulation processor may include a modulator and a demodulator. The modulator is configured to modulate a low frequency baseband signal to be sent into a medium and high frequency signal. The demodulator is configured to demodulate the received electromagnetic wave signal into a low-frequency baseband signal. Then the demodulator transfers the low-frequency baseband signal obtained through demodulation to the baseband processor for processing. The low-frequency baseband signal is processed by the baseband processor and then transferred to an application processor. The application processor outputs a sound signal through an audio device (which is not limited to the speaker 170A, the telephone receiver 170B, and the like), or displays an image or a video through the display screen 194. In some embodiments, the modulation and demodulation processor may be an independent device. In some other embodiments, the modem processor may be independent of the processor 110, and the modem processor and the mobile communication module 150 or another functional module may be disposed in the same component.

The wireless communications module 160 may provide a solution to wireless communication applied to the electronic device 100, for example, a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology. The wireless communications module 160 may be one or more components into which at least one communication processing module is integrated. The wireless communications module 160 receives an electromagnetic wave by using the antenna 2, performs frequency modulation on and filters the electromagnetic wave signal, and sends a processed signal to the processor 110. The wireless communications module 160 may further receive a to-be-sent signal from the processor 110, perform frequency modulation on and amplify the to-be-sent signal, and convert the to-be-sent signal into an electromagnetic wave by using the antenna 2 for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, and/or IR technologies, and the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS) and/or satellite-based augmentation systems (SBAS).

The electronic device 100 implements a display function by using the GPU, the display screen 194, the application processor, and the like. The GPU is a microprocessor for image processing and connects the display 194 and the application processor. The GPU is configured to perform mathematical and geometric calculations, and is configured to render graphics. The processor 110 may include one or more GPUs that execute a program instruction to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED) , a flexible light-emitting diode (flex light-emitting diode, FLED), a Miniled, a MicroLed, a Micro-oLed, quantum dot light emitting diodes (quantum dot light emitting diodes, QLED), and the like. In some embodiments, the electronic device 100 may include 1 or N display screens 194. N is a positive integer greater than 1.

The electronic device 100 may implement a photographing function by using the ISP, the camera 193, the video codec, the GPU, the display screen 194, the application processor, and the like.

The ISP is configured to process data fed back by the camera 193. For example, during photographing, a shutter is enabled. Light is transmitted to a photosensitive element of the camera through a lens, and an optical signal is converted into an electrical signal. The photosensitive element of the camera transmits the electrical signal to the ISP for processing, and the electrical signal is converted into an image visible to a naked eye. The ISP may also optimize noise point, brightness, and skin tone algorithms. The ISP may also optimize parameters such as exposure and color temperature of a photographed scene. In some embodiments, the ISP may be arranged in the camera 193.

The camera 193 is configured to capture a still image or video. An optical image is generated for an object by using the lens and is projected onto the photosensitive element. The photosensitive element may be a charge-coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in standard RGB and YUV formats. In some embodiments, the electronic device 100 may include 1 or N cameras 193, and N is a positive integer greater than 1.

The digital signal processor is configured to process a digital signal, and may further process another digital signal in addition to a digital image signal. For example, when the electronic device 100 performs frequency selection, the digital signal processor is configured to perform Fourier transform and the like on frequency energy.

The video encoder and decoder is configured to compress or decompress a digital video. The electronic device 100 may support one or more video codecs. In this way, the electronic device 100 may play or record videos in a plurality of encoding formats, for example, moving image experts group (moving image experts group, MPEG) 1, MPEG 2, MPEG 3, and MPEG 4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement an application such as intelligent cognition of the electronic device 100, for example, image recognition, facial recognition, voice recognition, and text understanding.

The external memory interface 120 may be configured to be connected to an external storage card such as a micro SD card, to expand a storage capability of the electronic device 100. The external storage card communicates with the processor 110 by using the external memory interface 120, to implement a data storage function, for example for example, store files such as music and a video into the external storage card.

The internal memory 121 may be configured to store computer-executable program code. The executable program code includes an instruction. The processor 110 runs the instructions stored in the internal memory 121, to implement various functional applications and data processing of the electronic device 100. The internal memory 121 may include a program storage area and a data storage area. The program storage area may store an operating system, an application required by at least one function (such as a voice playing function and an image playing function), and the like. The data storage region may store data (for example, audio data and an address book) and the like created when the electronic device 100 is used. In addition, the internal memory 121 may include a high-speed random access memory, and may further include a non-volatile memory, for example, at least one disk storage device, a flash memory device, or a universal flash storage (universal flash storage, UFS).

The electronic device 100 may implement an audio function such as music playing or recording by using the audio module 170, the speaker 170A, the telephone receiver 170B, the microphone 170C, the headset jack 170D, the AP, and the like.

The audio module 170 is configured to convert digital audio information into analog audio signal output, and is also configured to convert analog audio input into a digital audio signal. The audio module 170 may further be configured to encode and decode audio signals. In some embodiments, the audio module 170 may be disposed in the processor 110, or some function modules in the audio module 170 are disposed in the processor 110.

The speaker 170A, also referred to as "horn", is configured to convert an electrical audio signal into a sound signal. Music may be listened to or a hands-free call may be answered by using the speaker 170A in the electronic device 100.

The telephone receiver 170B, also referred to as "handset", is configured to convert an electrical audio signal into a sound signal. When the electronic device 100 is configured to answer a call or receive voice information, the phone receiver 170B may be put close to a human ear to receive a voice.

The microphone 170C, also referred to as "voice tube" or "mike", is configured to convert a sound signal into an electrical signal. When making a call or sending voice information, a user may make a sound approaching the microphone 170C through the mouth of the user, to input a sound signal into the microphone 170C. At least one microphone 170C may be disposed in the electronic device 100. In some other embodiments, two microphones 170C may be disposed in the electronic device 100, to obtain a sound signal and implement a noise reduction function. In some other embodiments, three, four, or more microphones 170C may be alternatively disposed in the electronic device 100, to obtain a sound signal, implement noise reduction, recognize a sound source, implement a directional recording function, and the like.

The headset jack 170D is configured to be connected to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may be a parallel plate including at least two conductive materials. In a case that a force is applied onto the pressure sensor 180A, a capacitance between electrodes changes. The electronic device 100 determines pressure strength based on a change in the capacitance. When a touch operation is performed on the display screen 194, the electronic device 100 detects intensity of the touch operation according to the pressure sensor 180A. The electronic device 100 may also calculate a touch location based on a detection signal of the pressure sensor 180A. In some embodiments, touch operations that are applied to a same touch location but have different touch operation intensity may correspond to different operation instructions. For example, when a touch operation whose touch operation strength is less than a first pressure threshold is performed on an SMS message application icon, an instruction of checking an SMS message is executed. When a touch operation whose touch operation strength is greater than or equal to the first pressure threshold is performed on the short message application icon, an instruction of creating a new short message is executed.

The gyroscope sensor 180B may be configured to determine a motion posture of the electronic device 100. In some embodiments, an angular velocity of the electronic device 100 around three axes (i.e., x, y, and z axes) may be determined through the gyroscope sensor 180B. The gyro sensor 180B may be used for image stabilization during photographing. For example, when the shutter is pressed, the gyroscope sensor 180B detects an angle at which the electronic device 100 jitters, and calculates, based on the angle, a distance for which a lens module needs to compensate, and allows the lens to cancel the jitter of the electronic device 100 through reverse motion, thereby implementing image stabilization. The gyro sensor 180B may also be used in navigation and a motion sensing game scenario.

The air pressure sensor 180C is configured to measure an air pressure. In some embodiments, the electronic device 100 calculates an altitude by using a barometric pressure value measured by the barometric pressure sensor 180C, to assist in positioning and navigation.

A magnetic sensor 180D includes a Hall sensor. The electronic device 100 may detect an opening state or a closing state of a flip leather case by using the magnetic sensor 180D. In some embodiments, when the electronic device 100 is a clamshell phone, the electronic device 100 may detect opening and closing of a flip cover based on the magnetic sensor 180D. Further, features such as automatic unlocking of the flip cover are set based on the detected opening and closing states of the leather case or opening and closing states of the flip cover.

The acceleration sensor 180E may detect an acceleration value of the electronic device 100 all directions (generally in three axes). When the electronic device 100 is stationary, a magnitude and a direction of a gravity may be detected. The acceleration sensor may be further configured to recognize a posture of the electronic device, and is applied to applications such as switching between landscape and portrait modes and a pedometer.

The distance sensor 180F is configured to measure a distance. The electronic device 100 may measure a distance by infrared light or laser. In some embodiments, in a shooting scenario, the electronic device 100 may measure a distance by using the distance sensor 180F, to implement quick focusing.

The optical proximity sensor 180G may include, for example, a light emitting diode (LED) and an optical detector. The light-emitting diode may be an infrared light-emitting diode. The electronic device 100 emits infrared light by using the light emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, so as to implement automatic screen-off to save power. The optical proximity sensor 180G may be further configured to automatically unlock and lock the screen in a leather cover mode and a pocket mode.

The ambient light sensor 180L is configured to perceive ambient light brightness. The electronic device 100 may adaptively adjust a luminance of the display screen 194 according to the perceived ambient light brightness. The ambient light sensor 180L may also be configured to automatically adjust white balance during photographing. The ambient light sensor 180L may also cooperate with the optical proximity sensor 180G to detect whether the electronic device 100 is in a pocket to prevent a false touch.

The fingerprint sensor 180H is configured to obtain a fingerprint. The electronic device 100 may implement fingerprint unlock, application lock accessing, fingerprint photographing, fingerprint-based call answering, and the like by using a feature of the obtained fingerprint.

The temperature sensor 180J is configured to detect temperature. In some embodiments, the electronic device 100 executes a temperature processing policy by using a temperature detected by the temperature sensor 180J. For example, when a temperature reported by the temperature sensor 180J exceeds a threshold, the electronic device 100 reduces performance of a processor near the temperature sensor 180J, to reduce power consumption and implement heat protection. In some other embodiments, when the temperature is lower than another threshold, the electronic device 100 heats the battery 142, to avoid an abnormal shutdown of the electronic device 100 caused by a low temperature. In some other embodiments, when the temperature is lower than still another threshold, the electronic device 100 boosts an output voltage of the battery 142, to avoid an abnormal shutdown caused by a low temperature.

The touch sensor 180K is also referred to as a "touch panel". The touch sensor 180K may be disposed on the display screen 194. The touch sensor 180K and the display screen 194 form a touchscreen. The touch sensor 180K is configured to detect a touch operation on or near the touch sensor 180K. The touch sensor may transfer the detected touch operation to the application processor to determine a type of the touch event. The touch sensor 180K may provide a visual output related to the touch operation by using the display screen 194. In some other embodiments, the touch sensor 180K may alternatively be arranged on a surface of the electronic device 100 at a location different from that of the display screen 194.

The bone conduction sensor 180M may collect a vibration signal. In some embodiments, the bone conduction sensor 180M may obtain a vibration signal of an acoustic portion vibrating bone of a human body. The bone conduction sensor 180M may also come into contact with a human pulse to receive a blood pressure pulse signal. In some embodiments, the bone conduction sensor 180M may also be disposed in the headset, to combine into a bone conduction headset. The audio module 170 may obtain a speech signal through parsing based on the vibration signal, of the vibration bone of the vocal-cord part, that is obtained by the bone conduction sensor 180M, to implement a speech function. The application processor may parse heart rate information based on the blood pressure beating signal obtained by the bone conduction sensor 180M, to implement a heart rate measurement function.

The button 190 includes a power button, a volume button, and the like. The button 190 may be a mechanical button, or a touch-type button. The electronic device 100 may receive a button input, and generate a button signal input related to user setting and function control of the electronic device 100.

The motor 191 may generate a vibration prompt. The motor 191 may be used for an incoming call vibration prompt and touch vibration feedback. For example, touch operations performed on different applications (for example, photo taking and audio playing) may correspond to different vibration feedback effects. The motor 191 may also correspond to different vibration feedback effects for touch operations applied to different areas of the display screen 194. Different application scenarios (for example, a time reminder, information receiving, an alarm clock, and a game) may further correspond to different vibration feedback effects. Customization of a touch vibration feedback effect may also be supported.

The indicator 192 may be an indicator light that may be configured to indicate a charging state and a power change, or may be configured to indicate a message, a missed call, a notification, and the like.

The SIM card interface 195 is configured to connect a SIM card. The SIM card may be inserted into the SIM card interface 195 or plugged from the SIM card interface 195, to come into contact with or be separated from the electronic device 100. The electronic device 100 may support one or N SIM card interfaces, N being a positive integer greater than 1. The SIM card interface 195 can support a nano SIM card, a micro SIM card, a SIM card, and the like. A plurality of cards may be inserted into a same SIM card interface 195 at the same time. The plurality of cards may be of a same type or different types. The SIM card interface 195 may further be compatible with different types of SIM cards. The SIM card interface 195 may also be compatible with an external memory card. The electronic device 100 interacts with a network by using a SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

A software system of the electronic device 100 may use a layered architecture, an event-driven architecture, a micro core architecture, a micro service architecture, or a cloud architecture. In this embodiment of the present application, the software structure of the electronic device 100 is illustrated by using an Android system with a layered architecture as an example.

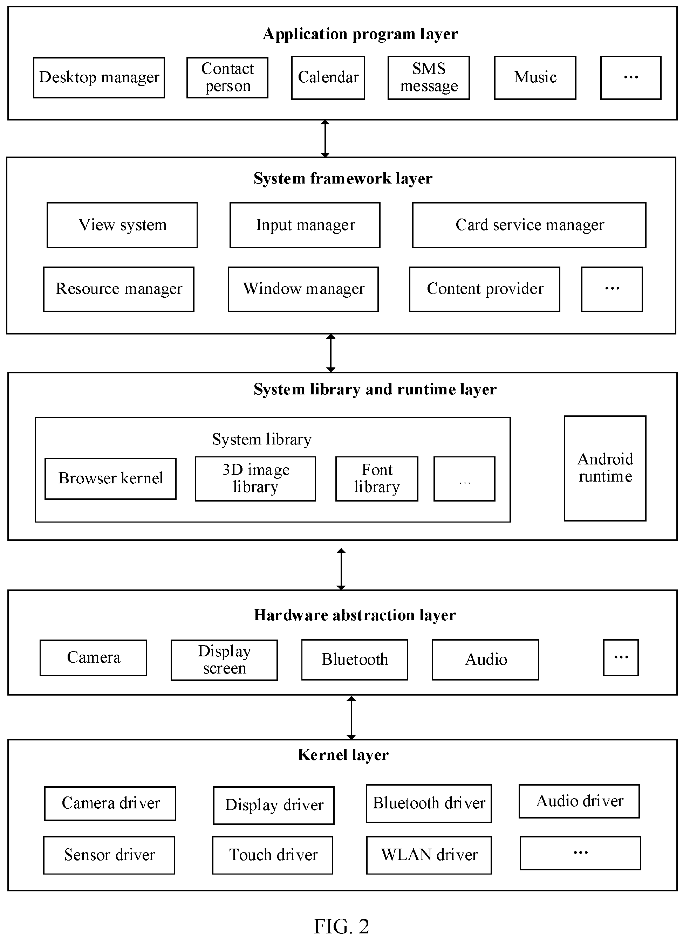

FIG. 2 is a block diagram of a software structure of an electronic device 100 according to an embodiment of the present application. In a layered architecture, software is divided into several layers, and each layer has a clear role and task. The layers communicate with each other through a software interface. In some embodiments, the Android system is divided into three layers that are respectively an application layer, middleware, and an operating system layer from top to bottom. The application layer may include a series of application packages.

As shown in FIG. 2, the application package may include programs such as desktop manager, contact person, calendar, SMS message, and music. Desktop manager is used to manage and display icons of all common application programs and corresponding card information, and has no icon on the desktop. When a user triggers a card display operation, card information is loaded and displayed. Common applications, such as contact person and calendar whose icons can be clicked on the desktop are used to provide data related to card display.

The system framework layer provides an application programming interface (Application Programming Interface, API) and a programming framework for the applications in the application layer, including various components and services to support Android development of developers. The system framework layer includes some predefined functions.

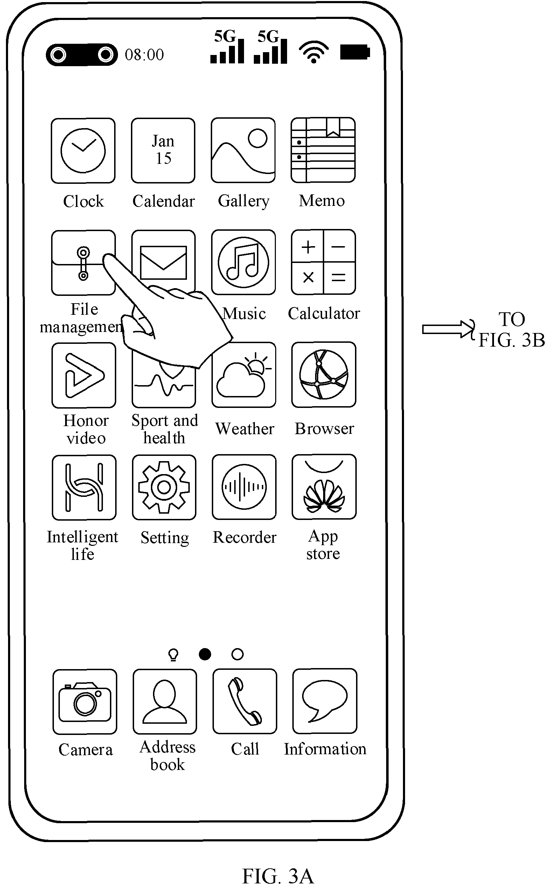

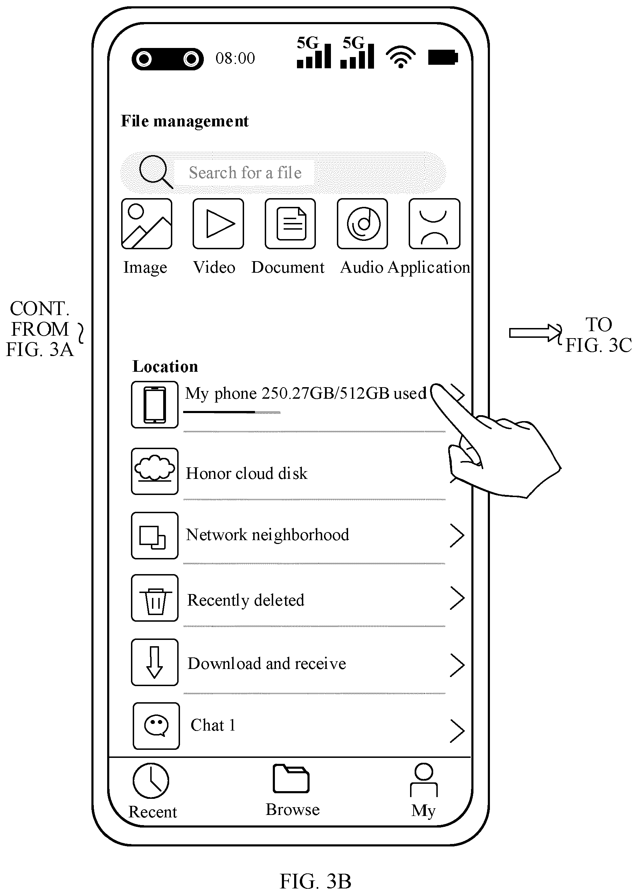

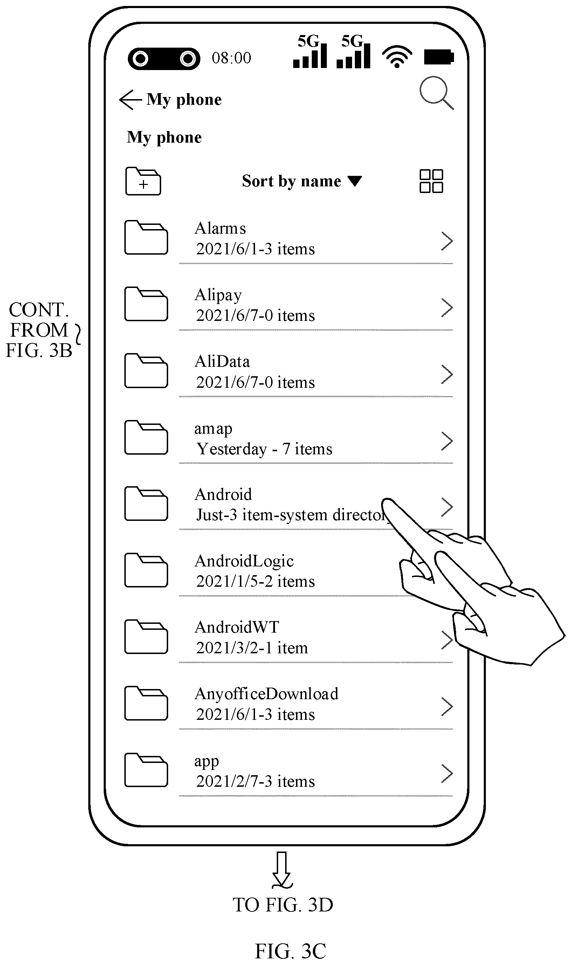

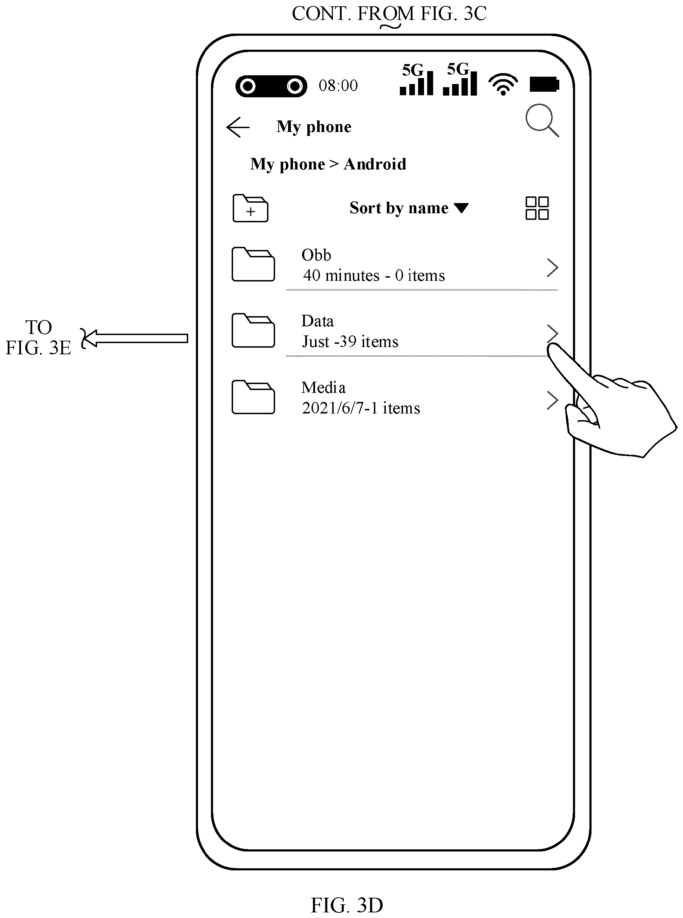

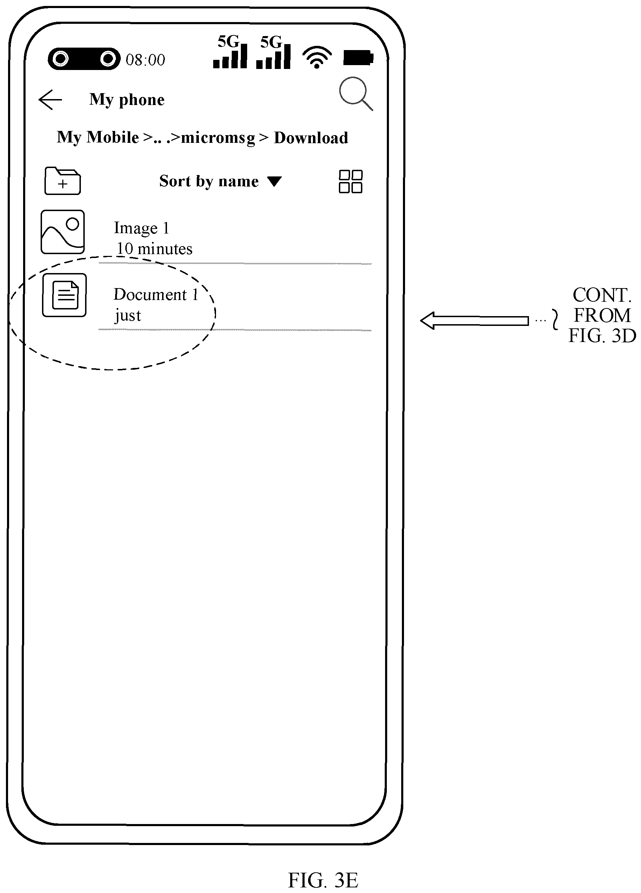

As shown in FIG. 3A, FIG. 3B, FIG. 3C, FIG. 3D, and FIG. 3E, the system framework layer may include view system, input manager, card service manager, resource manager, window manager, content provider and so on. The view system includes visual controls such as a control for displaying a text and a control for display an image. The view system may be configured to construct an application program. A display interface may include one or more views. The window manager is configured to manage a window application. The window manager may obtain a size of a display, determine whether there is a status bar, perform screen locking, take a screenshot of the screen, and the like. The input manager is configured to manage a touch event and distribute the touch event.

The card service manager is configured to receive and save card information issued by an application (application, APP) on the desktop, and at the same time provide an interface for a program on the desktop to query card information of the APP. Taking the Android system as an example, the card service manager may be used as a service process resident in the Andorid system, provide a remote invoking interface to receive card information issued by the APP, and at the same time provide another remote invoking interface for a program on the desktop to query card information. The card service manager saves a unique ID of the APP and the corresponding card information of the APP. The corresponding card information of the APP is issued and saved in the form of a data structure. The unique ID of the APP may be an application package name (PackageName) of the APP or a hash code of the application package name.

The resource manager provides various resources such as a localized character string, an icon, an image, a layout file, and a video file for an application program. The window manager is configured to manage a window application. The window manager may obtain a size of a display, determine whether there is a status bar, perform screen locking, take a screenshot of the screen, and the like. The content provider is configured to store and obtain data and make the data accessible to an application. The data may include a video, an image, audio, calls that are made and answered, a browsing history and a bookmark, a phonebook, and the like.

The system library and Android runtime layer includes a system library and Android runtime (Android Runtime). The system library may include a plurality of function modules, for example, a browser kernel, a 3D graphics library (for example: OpenGL ES), and a font library. The browser kernel is responsible for interpreting the syntax of a webpage (such as an application HTML and JavaScript under the standard general markup language) and rendering (displaying) the webpage. The three-dimensional graphics processing library is used to implement three-dimensional graphics drawing, image rendering, composition, layer processing, and the like. The font library is configured to perform input of different fonts. The android runtime includes a kernel library and a virtual machine. The android runtime is responsible for scheduling and management of an android system.

The core library includes two parts: one part is a performance function that the Java language needs to invoke, and the other part is a core library of Android. The application layer and the application framework layer are run in the virtual machine. The virtual machine executes Java files of the application layer and the application framework layer as binary files. The virtual machine is used to execute functions such as object lifecycle management, stack management, thread management, security and exception management, and garbage collection.

The hardware abstraction layer is an abstract interface driven by the device kernel, and provides an application programming interface for accessing the underlying device to a higher-level Java API framework. The HAL includes a plurality of library modules, where each library module implements an interface for a specific type of hardware component.

The kernel layer is a layer between hardware and software. The kernel layer at least includes a camera driver, a display driver, a Bluetooth driver, an audio driver, a sensor driver, a touch driver, and a WLAN. The kernel layer is the foundation of the Android^{®}TM system. The final function implementation of the Android^{®}TM system is completed through the kernel layer.

For ease of understanding, in the following embodiments of the present application, for example, the electronic device 100 having the structures in FIG. 1 and

FIG. 2 is used in combination with the accompanying drawings and application scenarios to specifically illustrate the card display method provided in the embodiments of the present application.

At present, an electronic device can receive and download documents, images, audios, videos, and other files sent by other electronic devices through third-party APPs such as instant messaging APPs and email APPs, and can also download various files from a network through third-party APPs such as browser APPs and video APPs. In actual usage, an electronic device receives and downloads a large number of files through different APPs. In the traditional Android system, paths used by the electronic device to store received files are complicated, storage paths of files received by different APPs are not necessarily the same, and files from third-party APPs are not easy to find when saved locally on electronic devices.

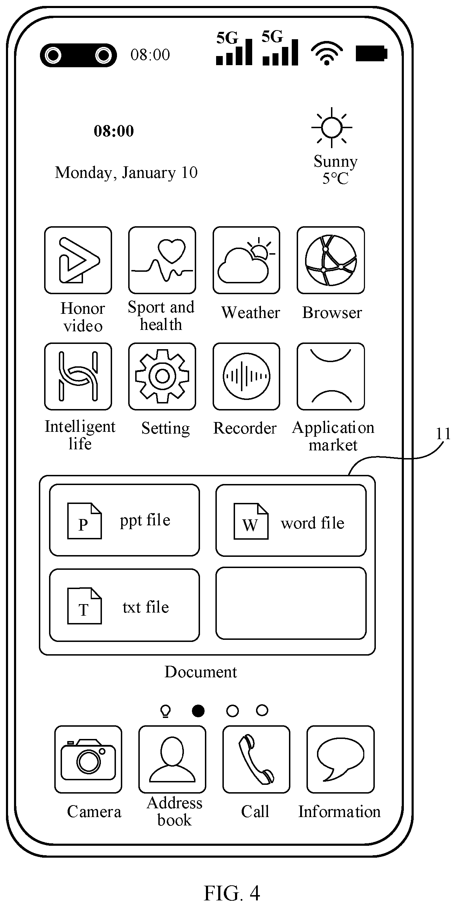

Specifically, if a user wants to find a file named "document 1" received from an instant messaging APP, the user needs to know a default file storage path of the instant messaging APP in the Android system, then operate the electronic device, enter a file management APP, and search in the default storage path of the instant messaging APP in the Android system. Usually, files received by the third-party APP can be saved in the "my phone" folder. Assuming that the default file storage path of the three-party APP is Android>Data>com.tencent.mm>MicroMsg>Download, as shown in FIG. 3A, FIG. 3B, FIG. 3C, FIG. 3D, and FIG. 3E, a user first clicks on an icon of the file management APP on the desktop to enter an interface of the file management APP, then clicks on the "my phone" folder, then accesses the directory Data>com.tencent.mm>MicroMsg>Download level by level (not all levels of the directory are shown in FIG. 4), can see an icon of the document 1 in the Download folder (as shown in a dotted box in FIG. 3A, FIG. 3B, FIG. 3C, FIG. 3D, and FIG. 3E), and then can operate the document 1. Because the user usually does not know the file storage path of the Android system, it is difficult to find the required file, resulting in difficulty in finding the file and poor user experience.

In view of this, the electronic device can display a file-type card on the desktop, and display recently received and downloaded files through the file-type card, so that the user can quickly view recently used files. Exemplarily, as shown in FIG. 4, the mobile phone may display a card 11 on the desktop, the card 11 includes four file bars, and each file bar is used to display information of recently used (for example, downloaded) files.

For example, assuming that a preset path is a storage path of an instant messaging APP, when the mobile phone successfully downloads files through the instant messaging APP each time, the mobile phone sequentially displays, in each file bar in the card 11, related information of files recently downloaded through the instant messaging APP. For another example, assuming that a preset path is a storage path of a browser APP, when the mobile phone successfully downloads files through the browser APP each time, the mobile phone sequentially displays, in each file bar in the card 11, related information of files recently downloaded through the browser APP.

The related information of the file displayed in the file bar may include a file name, a download time, a file size, and/or a file type. In addition, when a number of recently downloaded files is less than four, the remaining file bar does not display content.

However, there are various deficiencies in the manner of displaying information of recently used files through a card, for example, the card has a single form and is inflexible and can only display information of one or more files located in a same preset storage path or location. For another example, a number of files displayed is limited, related information of a maximum of four files can be displayed in the card shown in FIG. 4, and an amount of information is relatively small. For another example, since the card displays specific information of the file, user personal information may be leaked, which may be undesirable for the user.

The embodiments of the present application provide a card display method, and cards of various specifications on the desktop are provided for users to choose. For example, a card on the desktop provides a common folder path customizable by a user, and/or a card on the desktop can support scrolling switching display of recently processed files. Users can choose to add cards suitable for their own usage habits to the desktop for display according to actual usage needs. Since a card on the desktop presents a folder form or a file name to the user, instead of specific file information, user personal information is not leaked. When needed, the user only needs to open the folder in the card on the desktop to view corresponding information, or simply slide the card on the desktop to intuitively view all the files recently used on the electronic device, which can display a large amount of information and is convenient, quick, and secure.

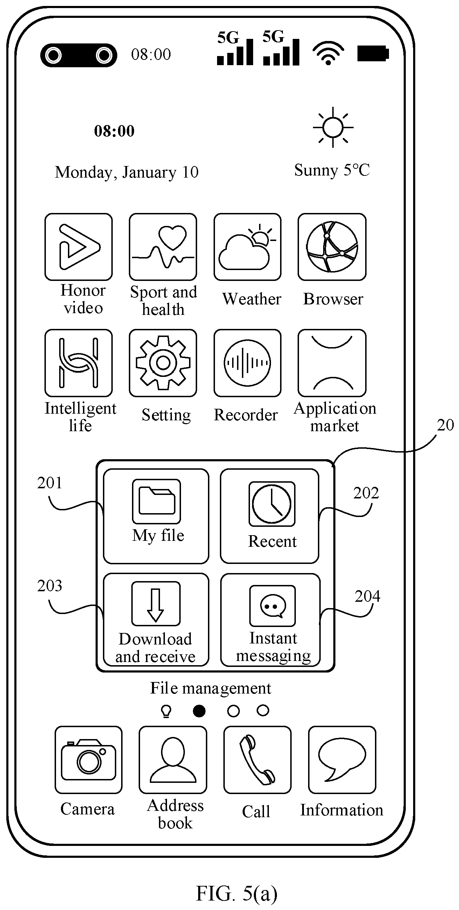

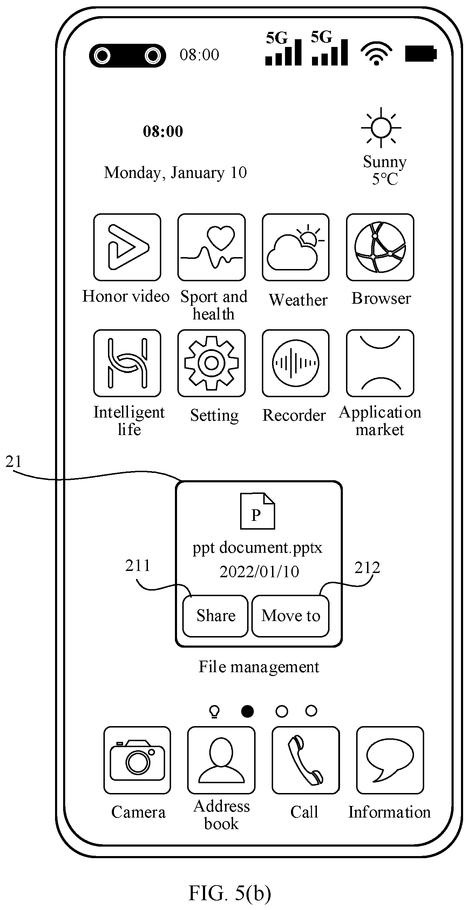

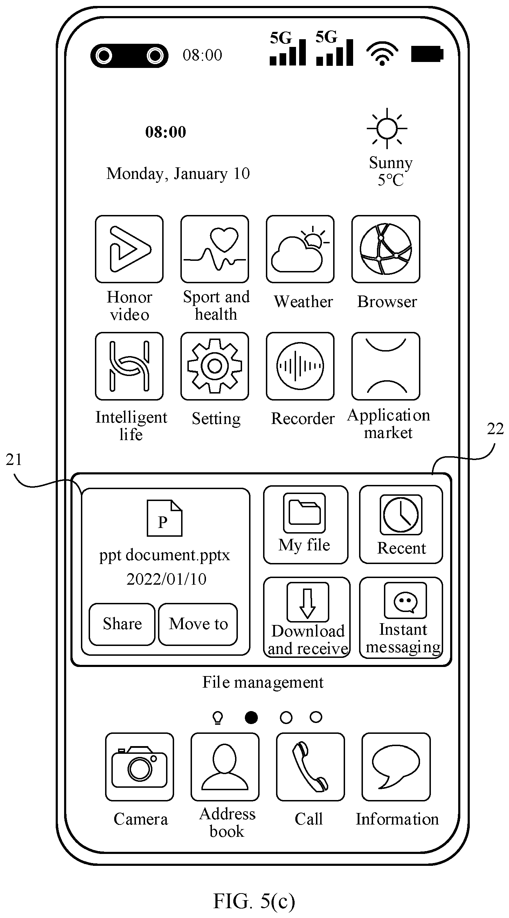

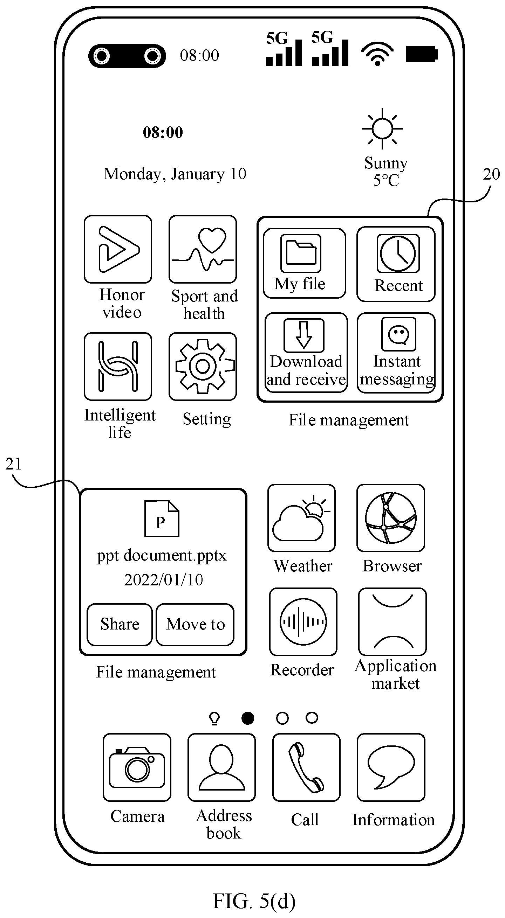

The implementations of cards of various specifications on the desktop provided by the embodiments of the present application are exemplarily described below with reference to FIG. 5A, FIG. 5B, FIG. 5C, and FIG. 5D.

### Implementation 1

As shown in (a) of FIG. 5A, FIG. 5B, FIG. 5C, and FIG. 5D, an electronic device can display a folder card 20 on the desktop, the folder card 20 is in the form of a 2×2 four-palace grid, and icons of four folders are respectively displayed in the four-palace grid: for example, "my file" 201, "recent" 202, "download and receive" 203, and "instant messaging" 204. In this embodiment of the present application, the following functions may be performed through the folder card 20:
(1) If the electronic device receives an operation performed by the user on "my file" 201, the electronic device can quickly jump to an interface of the "my file " folder, and display folders and/or files in the preset "my file" folder of the electronic device to the user.

Since the "my file" folder includes one or more folders preset by the user, and is used for classifying and storing various files of the user, the folder card 20 provides the entry of "my file", so that the user can quickly search for the "my file" folder, to facilitate the user to find files and improve user experience.

In the solution of the embodiment of the present application, the file is stored in "my folder", and there is no need to store the file repeatedly, and instead a user-specified path is regenerated for the original file stored in the default path, so that the user can find the file according to the specified path, which is convenient for the user to search and avoids repeated storage of the file, effectively utilizes the storage space, and improves the utilization rate of the storage space of the electronic device.

(2) If the electronic device receives an operation performed by the user on "recent" 202, the electronic device can quickly jump to an interface of the "recent" folder, and display all files recently operated on the electronic device to the user.

In the "recent" folder, all the files recently operated by the electronic device can be arranged in order according to operation times, for example, a file with the latest operation time can be arranged at the front, which is convenient for the user to find.

(3) If the electronic device receives an operation performed by the user on "download and receive" 203, the electronic device can quickly jump to an interface of the "download and receive" folder, and display all files downloaded and received on the electronic device to the user.

In the "download and receive" folder, all the files recently downloaded and received by the electronic device can be arranged in order according to download times, for example, a file with the latest download time can be arranged at the front, which is convenient for the user to find.

(4) If the electronic device receives an operation performed by the user on "instant messaging" 204, the electronic device can quickly jump to an interface of a file corresponding to the instant messaging APP, and display all files recently downloaded on the electronic device through the instant messaging APP to the user.

In the folder corresponding to the instant messaging APP, the files downloaded through the instant messaging APP can be arranged in the order of downloading, for example, the file with the latest download time can be arranged at the front, which is convenient for the user to find.

Optionally, some or all of the above four folders can be preset by the system. Alternatively, some or all of the above four folders may also be customized by the user. For example, in this embodiment of the present application, the electronic device supports the following functions: In the folder card 20, the user can customize two folder paths.

Exemplarily, the above four folders are pre-defaulted by the system as "my files" 201 , "recent" 202 , "download and receive" 203 , and "instant messaging" 204 . "My files" 201 and "recent" 202 do not support user customization, while "download and receive" 203 and "instant messaging" 204 can support user customization. That is, the electronic device may replace "download and receive" 203 and/or "instant messaging" 204 with other folders in response to user operations. The specific replacement process of the folder will be described in detail below and will not be repeated herein.

It should be noted that this embodiment of the present application takes the form of a 2×2 four-palace grid as an example for illustration. In actual implementation, the folder card can also be presented in other forms, such as a 2×3 six-palace form, which may be specifically determined according to actual usage requirements and is not limited in this embodiment of the present application. For the convenience of description, the folder card is displayed as the folder card 20 as shown in (a) of FIG. 5A, FIG. 5B, FIG. 5C, and FIG. 5D as an example for exemplary description below.

Since the file card provided by this embodiment of the present application presents a folder form to the user, instead of specific file information, user personal information is not leaked. When needed, the user only needs to open the folder to view corresponding information, which is convenient, quick, and secure .

Optionally, in this embodiment of the present application, the electronic device may add an application lock to the folder card in response to a user operation. After the application lock is added, only when the electronic device detects that a password entered by the user is the same as a preset password, the electronic device unlocks the application lock of the folder card, allowing the folder card to be operated, which can improve the security of the folder card.

### Implementation 2

As shown in (b) of FIG. 5A, FIG. 5B, FIG. 5C, and FIG. 5D, the electronic device may display a file card 21 on the desktop, and the file card 21 is used to display related information of a file recently used (for example, downloaded or edited, taking download as an example) by the electronic device. In this embodiment of the present application, the file card 21 supports the following functions:
(1) A plurality of files in the file card 21 can be switched for display in response to a user operation (such as a sliding operation on the file card 21). For example, the user may slide the file card 21 to trigger switching for displaying recently downloaded files in the file card 21.
(2) The file in the file card 21 can be directly opened in response to a user operation (for example, a click operation on the file card 21) without first jumping to an interface of a third-party application for opening the file.

For example, in the traditional technical solution, after the user clicks on the document 1, the electronic device usually first jumps to a document application (such as a WPS application) interface, and then when the user confirms in the document application interface, the electronic device opens the document 1 through the document application. In this embodiment of the present application, in response to the operation performed by the user (for example, a click operation) on the document 1 in the file card 21, the electronic device can directly open the document 1 through the document application and display the content of the document 1.

Optionally, a "share" control 211 may be included in the file card 21. In response to the operation performed by the user on the "share" control 211, the electronic device can quickly call out a path available for sharing (such as an application icon). When the user selects a path, the electronic device can send the file currently displayed in the file card 21 to other electronic devices according to the selected path, so as to perform file sharing.

It should be noted that herein, the file card 21 has a file sharing function as an example for illustration. In actual implementation, the file card 21 can also have a file collection function, or a file copy function, or a file deletion function, or any other function that meets the actual use requirement, which is not limited in this embodiment of the present application.

(4) Optionally, a "move to" control 212 may be included in the file card 21. In response to the operation performed by the user on the "move to" control 212, the electronic device can quickly call out a path available for file storage. After the user selects a storage path, the electronic device can move, according to the selected path, the file currently displayed in the file card 21, so as to move the file from the current location to another location.

It should be noted that herein, the file card 21 has a function of moving a file to another storage path as an example for illustration. In actual implementation, the file card 21 may also have a function of copying a file to another storage path, which is not limited in this embodiment of the present application.

It should be noted that in this embodiment of the present application, a type of a file presented through the file card 21 is not limited. For example, the file card 21 can display files of various document types such as word, ppt, excel, or pdf, can also display files of an image type, can also display files of an audio type or a video type, or can display files of other arbitrary types, which may be determined according to actual usage cases, and is not limited in this embodiment of the present application.

It should be further noted that in this embodiment of the present application, displaying a file specifically refers to displaying related information of the file. For example, the related information of the file may include a file name, a download time, a file size, and/or a file type.

The file card provided by the embodiment of the present application can present related information of a large number of files that have been recently used by the electronic device and have different storage paths to the user. The user only needs to slide the file card to intuitively view, through the file card, all files that have been used recently on the electronic device, and therefore the amount of information is relatively large.

### Implementation 3

As shown in (c) of FIG. 5A, FIG. 5B, FIG. 5C, and FIG. 5D, the electronic device can display a combined card 22 on the desktop, and the combined card 22 includes the folder card 20 in the implementation 1 and the file card 21 in the implementation 2. Through the combined card 22, various functions of the folder card 20 can be performed, and it is convenient for the user to view the folders frequently used by the user in the electronic device. Moreover, various functions of the file card 21 can also be performed, and it is convenient for the user to view various files recently used by the electronic device.

The form of the card on the desktop provided by this embodiment of the present application can be an independent folder card, an independent file card, or a card combining different forms. The card forms are diverse and flexible, and information of a plurality of files in different storage paths or locations can be displayed.

### Implementation 4

As shown in (d) of FIG. 5A, FIG. 5B, FIG. 5C, and FIG. 5D, the electronic device can display the folder card 20 in the implementation 1 and the file card 21 in the implementation 2 on the desktop.

It can be understood that, in the implementation 3, the folder card 20 and the file card 21 are combined and displayed in an area of the desktop; region or location. In the implementation 4, the folder card 20 and the file card 21 are independently displayed in different areas or locations on the desktop. Although the two implementations of the cards on the desktops are different in display forms, the two implementations can achieve the same technical effect, namely: various functions of the folder card 20 can be performed, and it is convenient for the user to view the folders frequently used by the user in the electronic device. Moreover, various functions of the file card 21 can also be performed, and it is convenient for the user to view various files recently used by the electronic device.

Optionally, the electronic device may update a display location of the folder card 20 on the desktop in response to a drag operation performed by the user on the folder card 20.

Optionally, the electronic device may update a display location of the file card 21 on the desktop in response to a drag operation performed by the user on the file card 21.

Optionally, the electronic device may update a display location of the combined card 22 on the desktop in response to a drag operation performed by the user on the combined card 22.

It should be noted that in this embodiment, four types of card forms on the desktop are exemplarily listed. It can be understood that this embodiment of the present application includes but is not limited to the four types of card forms on the desktop. In actual implementation, this embodiment of the present application can also support other card forms similar to the four types of card forms, which can be specifically determined according to actual usage requirements, and is not limited in this embodiment of the present application.

In this embodiment of the present application, cards of various specifications on the desktop are provided for users to choose, and users can choose to add cards suitable for their own usage habits to the desktop for display according to actual usage needs. The card on the desktop provided by this embodiment of the present application presents, to the user, related information of various files recently used by the electronic device and stored in different paths, and can provide the user with a more intuitive and convenient file management form.

The above exemplifies the four types of cards on the desktop provided by this embodiment of the present application. The solution of the present application will be described in detail below through a process of adding a card on the desktop, setting a folder path of a card on the desktop, and using a function of a card on the desktop respectively.

### (1) The process of adding a card on the desktop

In this embodiment of the application, users can choose a card form suitable for their usage habits according to actual usage needs. Correspondingly, the electronic device can display any one of the above four types of card forms on the desktop according to the usage needs of users, so as to facilitate the users to find files.

Optionally, in this embodiment of the present application, when no card is displayed on the desktop, the user can select, in various manners, a card from various cards preset by the system and add the selected card to the desktop.

In some embodiments, the user can call out a setting interface of cards on the desktop by operating on the home page of the desktop, and then the user can perform a card adding operation on the setting interface of the cards on the desktop, so as to add a card to the desktop.

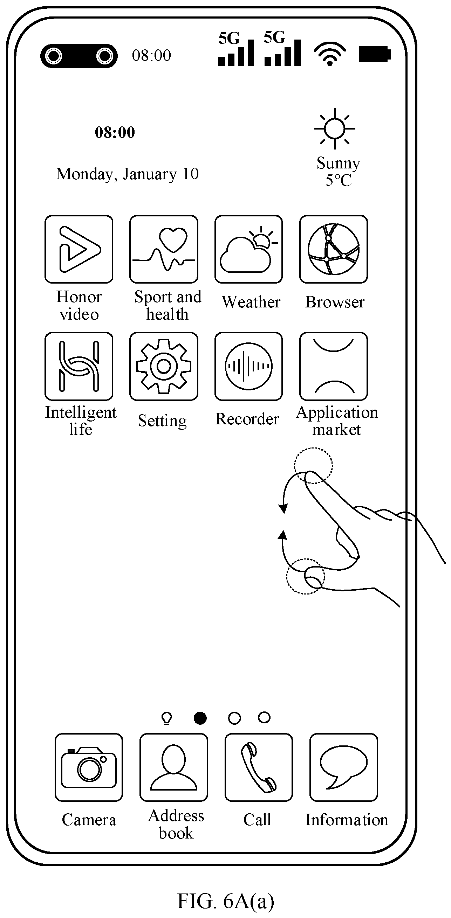

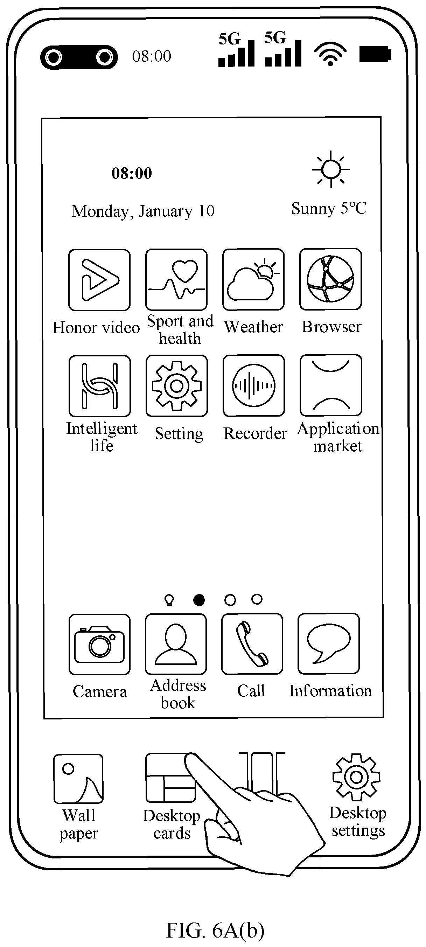

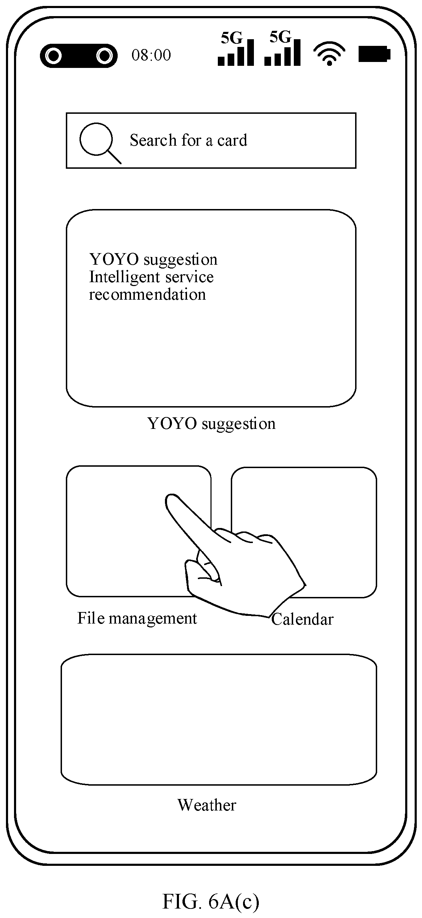

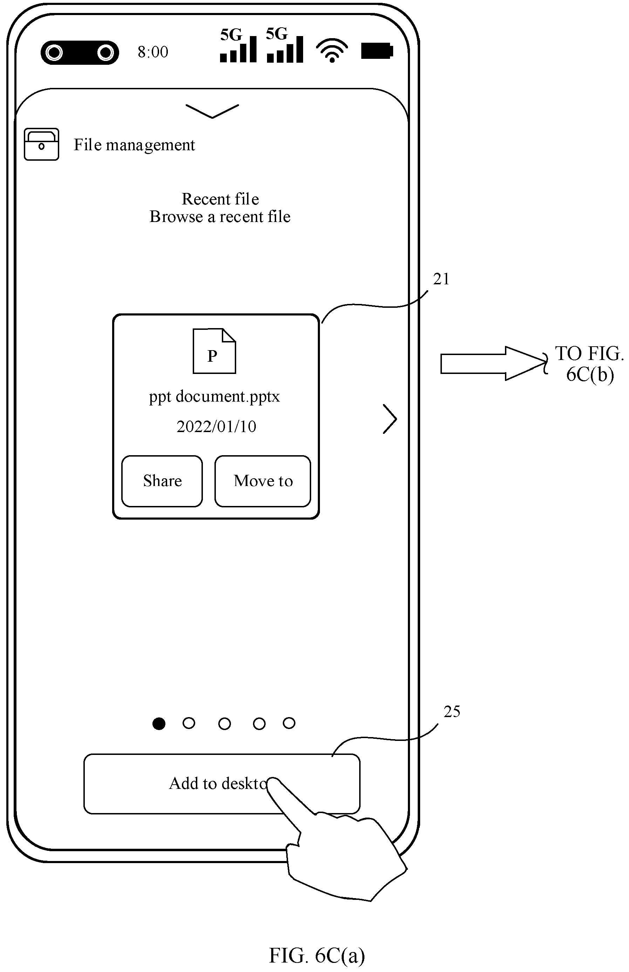

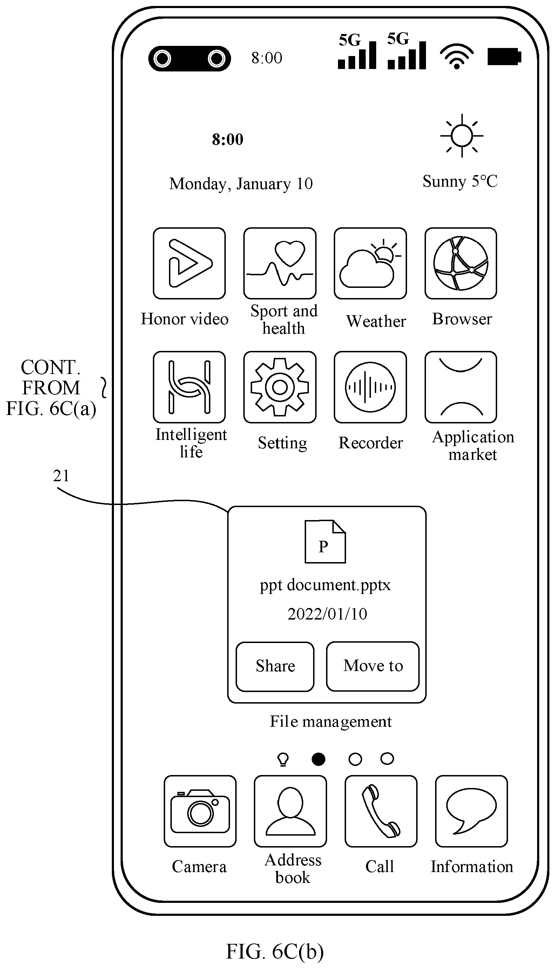

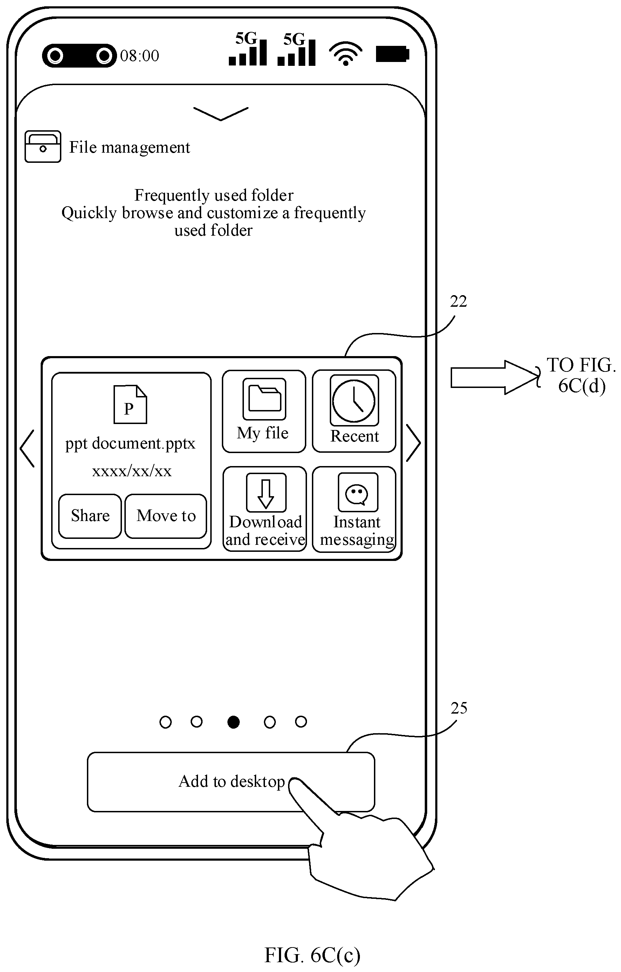

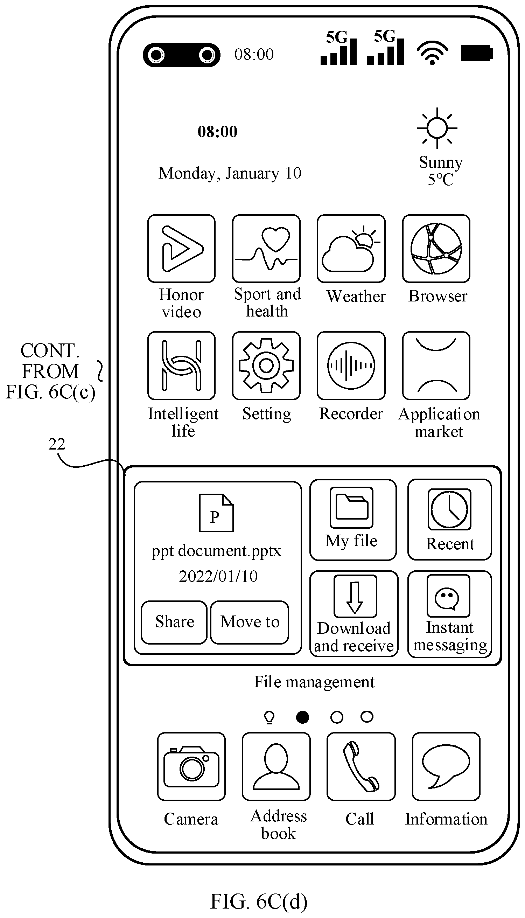

FIG. 6A(A), FIG. 6A(B), and FIG. 6A(C) to FIG. 6C(A), FIG. 6C(B), FIG. 6C(C), and FIG. 6C(D) are used to exemplarily illustrate a possible implementation in which the electronic device displays a plurality of card forms for the user to choose, and the electronic device displays, on the desktop according to a selection operation of the user, the card selected by the user.

As shown in (a) of FIG. 6A(A), FIG. 6A(B), and FIG. 6A(C), the electronic device receives an operation (such as a two-finger pinching operation) performed by the user on the desktop, and as shown in (b) of FIG. 6A(A), FIG. 6A(B), and FIG. 6A(C), the electronic device displays a plurality of controls on the desktop in response to the operation performed by the user, such as a wallpaper setting control, a desktop card setting control, and a desktop setting control. Further, the electronic device receives the operation (for example, a click operation) performed by the user on the desktop card setting control. As shown in (c) of FIG. 6A(A), FIG. 6A(B), and FIG. 6A(C),, the electronic device displays the setting interface of the cards on the desktop in response to the operation performed by the user. Various types of cards are displayed in the setting interface of the cards on the desktop, such as a YOYO suggestion card, a file management card, a calendar card, and a weather card, and certainly there may also be other possible cards.

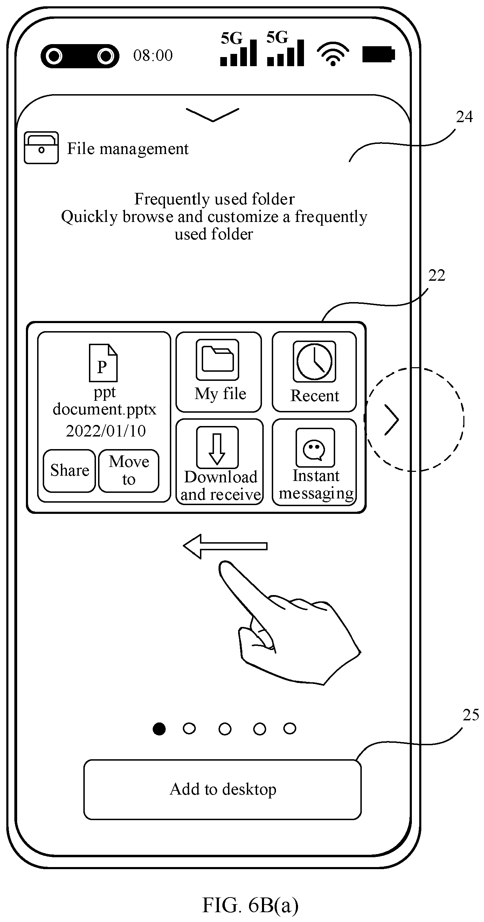

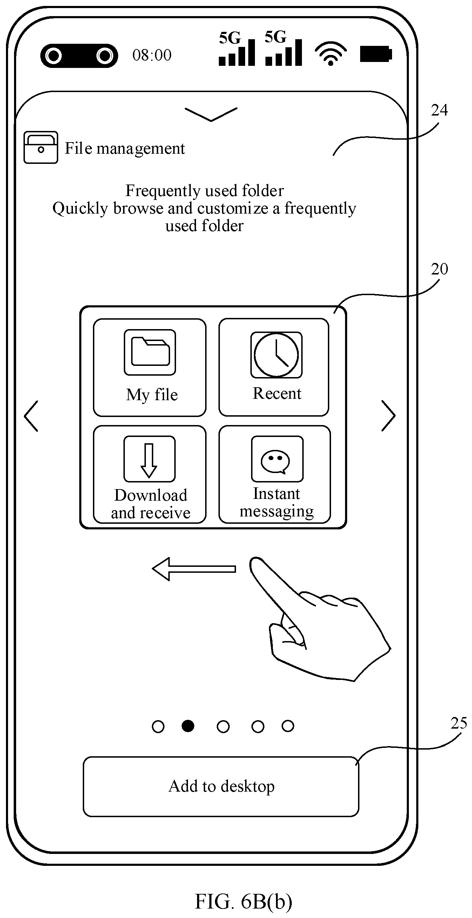

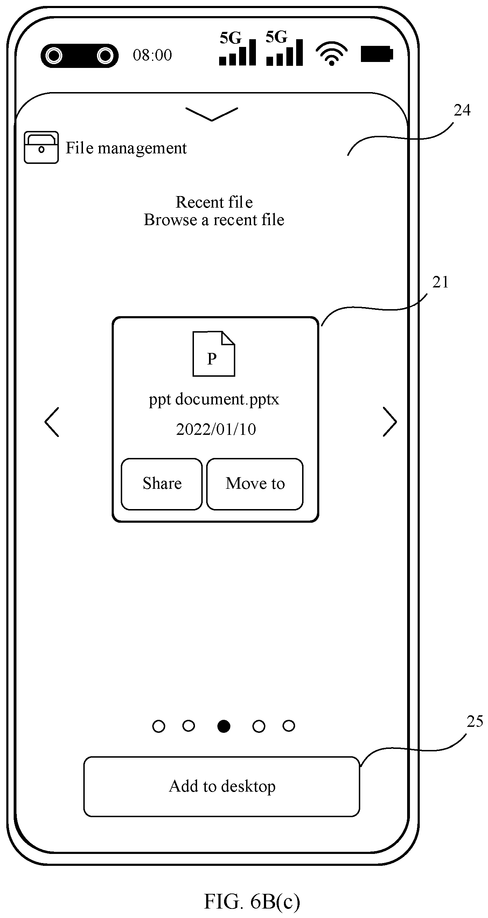

When the electronic device receives an operation (for example, a click operation) performed by the user on the file management card, as shown in (a) of FIG. 6B(A), FIG. 6B(B), and FIG. 6B(C), the electronic device displays a card display interface 24 for file management. As shown in (a) of FIG. 6B(A), FIG. 6B(B), and FIG. 6B(C), a combined card 22 and an "add to desktop" control 25 are displayed in the card display interface 24. By operating on the card display interface 24 (such as sliding a finger in a direction of an arrow or clicking a switching icon shown in a dotted-line box), the user can trigger the electronic device to update the card display interface 24 to display cards of other forms or specifications.

If the electronic device receives the sliding operation of the user as shown in (a) of FIG. 6B(A), FIG. 6B(B), and FIG. 6B(C), as shown in (b) of FIG. 6B(A), FIG. 6B(B), and FIG. 6B(C), the electronic device displays the folder card 20 in the card display interface 24.

If the electronic device receives the sliding operation of the user as shown in (b) of FIG. 6B(A), FIG. 6B(B), and FIG. 6B(C), as shown in (c) of FIG. 6B(A), FIG. 6B(B), and FIG. 6B(C), the electronic device displays the file card 21 in the card display interface 24.

Optionally, in this embodiment of the present application, the cards displayed in the card display interface 24 for file management are displayed in descending order of priorities. Exemplarily, the priority of the combined card 22 is higher than that of the folder card 20, and the priority of the folder card 20 is higher than that of the file card 21.

In some embodiments, the user can call out a setting interface of cards on the desktop by performing a negative one screen operation on the terminal device, and then the user can perform a card adding operation on the setting interface of the cards on the desktop, so as to add a card to the desktop.

In some embodiments, the user can call out a setting interface of cards on the desktop by operating on the system setting interface of the terminal device, and then the user can perform a card adding operation on the setting interface of the cards on the desktop, so as to add a card to the desktop.

The process of adding a card of a specification to the desktop on the electronic device after the user selects the card is further exemplarily described below with reference to FIG. 6C(A), FIG. 6C(B), FIG. 6C(C), and FIG. 6C(D).

Exemplarily, as shown in (a) of FIG. 6C(A), FIG. 6C(B), FIG. 6C(C), and FIG. 6C(D), the electronic device displays the file card 21 in the card display interface 24. After the electronic device receives an operation performed by the user on the "add to desktop" control 25, as shown in (b) of FIG. 6C(A), FIG. 6C(B), FIG. 6C(C), and FIG. 6C(D), the electronic device returns to display the desktop and the file card 21 has been added to the desktop.

As another example, as shown in (c) ofFIG. 6C(A), FIG. 6C(B), FIG. 6C(C), and FIG. 6C(D), the electronic device displays the combined card 22 in the card display interface 24. After the electronic device receives an operation performed by the user on the "add to desktop" control 25, as shown in (d) ofFIG. 6C(A), FIG. 6C(B), FIG. 6C(C), and FIG. 6C(D), the electronic device returns to display the desktop and the combined card 22 has been added to the desktop.

It can be understood that the above shows a possible manner for the user to add a card to the desktop when there is no card on the desktop, and it can be understood that there may also be other possible implementations. For example, when there are already cards displayed on the desktop, the user can operate existing cards on the desktop, to call out a setting interface of cards on the desktop, and then the user can perform a card adding operation on the setting interface of the cards on the desktop, so as to add a card to the desktop.

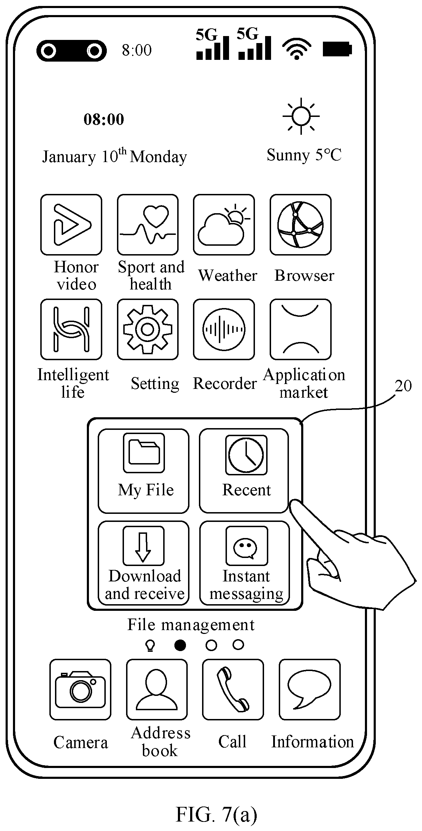

The process of setting a card on the desktop is exemplarily illustrated from FIG. 7(a) and FIG. 7(b) to FIG. 9(a), FIG. 9(b), and FIG. 9(c)-1 and FIG. 9(c)-2 below.

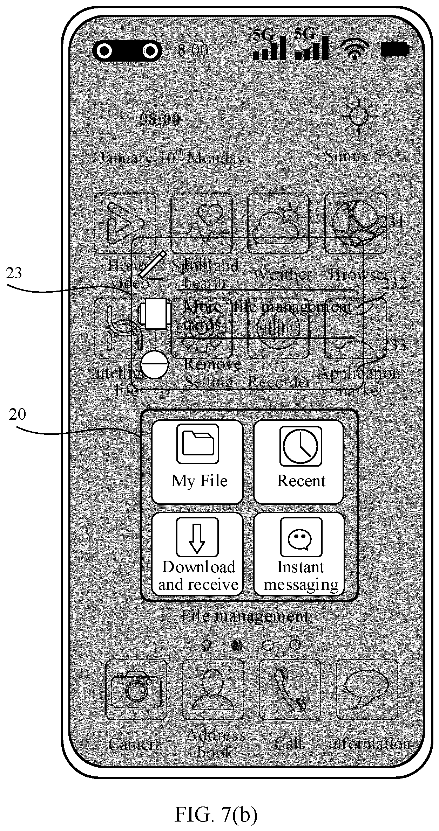

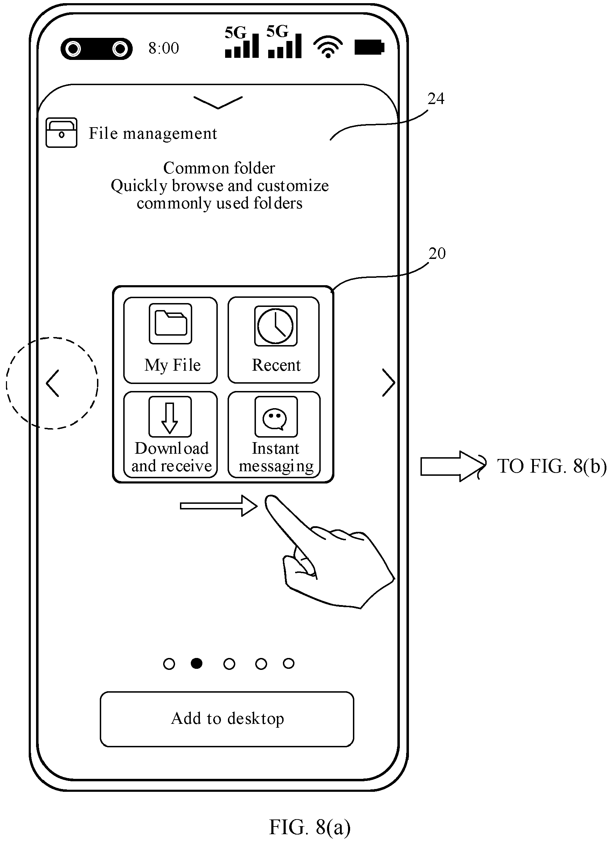

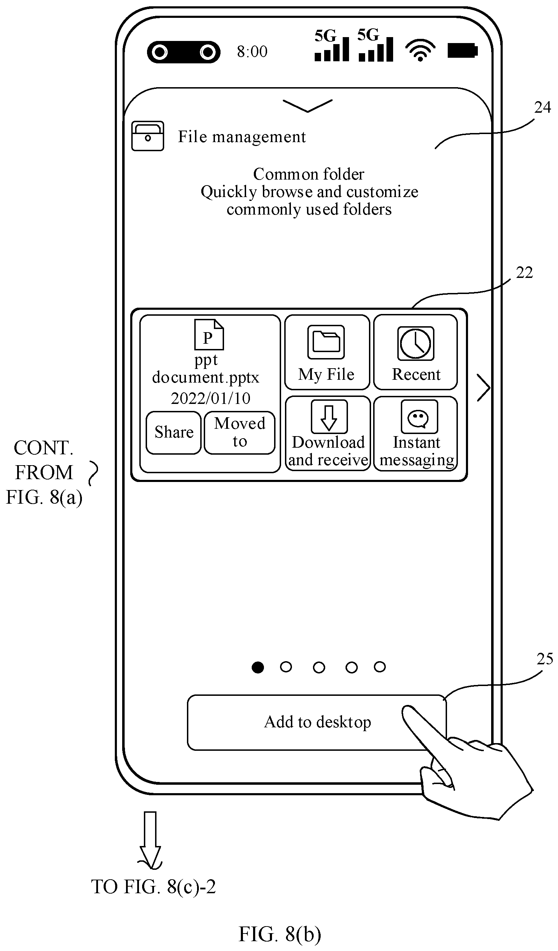

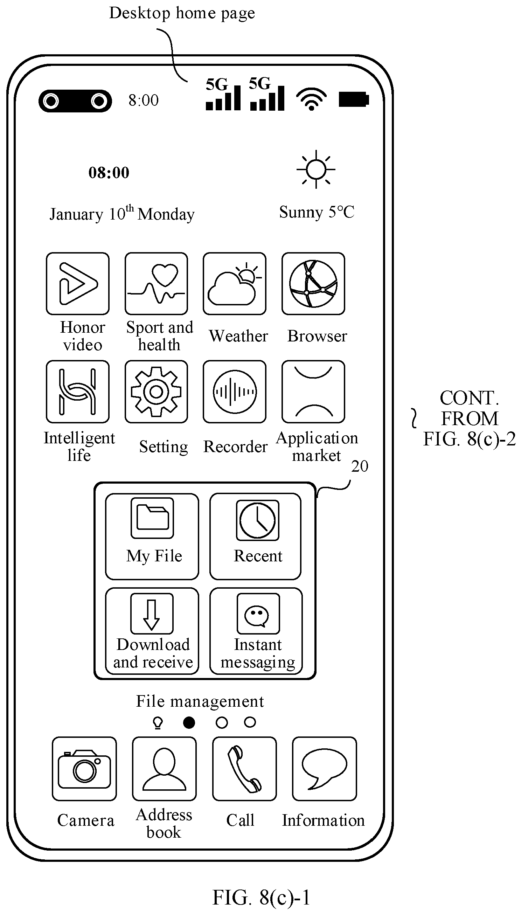

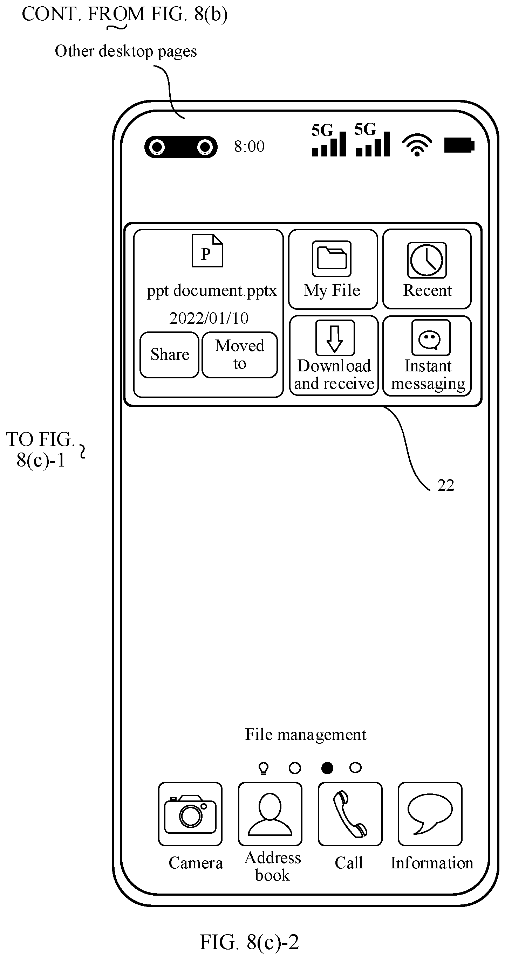

First, the process of calling out a plurality of function options by operating cards on the desktop is exemplarily illustrated with reference to FIG. 7(a) and FIG. 7(b), and then the process of calling out cards of various specifications for the user to choose by operating the more card option of the plurality of function options and then adding a card of a specific specification to the desktop by the electronic device after the user selects the card is exemplarily illustrated with reference to FIG. 8(a), FIG. 8(b), and FIG. 8(c)-1 and FIG. 8(c)-2 and FIG. 9(a), FIG. 9(b), and FIG. 9(c)-1.

For example, FIG. 7(a) and FIG. 7(b) are schematic diagrams of an interface for calling up a plurality of functional options by operating a card on the desktop according to an embodiment of the present application. As shown in (a) of FIG. 7(a) and FIG. 7(b), an electronic device displays the folder card 20 on the desktop, and the user can operate (for example, a long press operation or an upward slide operation) the folder card 20 to call out a function option for setting the folder card 20. As shown in (b) of FIG. 7(a) and FIG. 7(b), in response to the user operation, the electronic device may display a function option bar 23 corresponding to the folder card 20. Optionally, the electronic device can highlight the folder card 20 and the function option bar 23 thereof, and other content displayed on the desktop may not be highlighted (for example, blocked).

Optionally, the function option bar 23 may include the following function options: an editing option 231, a more "file management" card option 232 (referred to as a more card option for short), and a removing option 233.

The editing option 231 can be used to trigger folder path selection and replacement for a folder that supports editing in the folder card 20.

The more "file management" card option 232 can be used to trigger the display of cards of various specifications on the desktop for the user to choose.

The removing option 233 may be used to trigger removing of the currently displayed folder card 20 from the desktop. It can be understood that the folder card 20 is invisible to the user after being removed. In this embodiment of the application, all a folder card, a file card, and a combined card can be manually added or deleted according to user usage needs.

It should be noted that the function options in the function option bar 23 are illustrative, and other function options may also be displayed in the function option bar 23 during actual implementation, which is not limited in this embodiment of the present application.

Further, in response to an operation performed by the user (for example, a click operation) on the more "file management" card option 232 shown in (b) of FIG. 7(a) and FIG. 7(b), as shown in (a) of FIG. 8(a), FIG. 8(b), andFIG. 8(c)-1 and FIG. 8(c)-2 , the electronic device may display a card display interface 24 for file management. As shown in (a) of FIG. 8(a), FIG. 8(b), andFIG. 8(c)-1 and FIG. 8(c)-2 , a file card 20 and an "add to desktop" control 25 are displayed in the card display interface 24. By operating on the card display interface 24 (such as sliding a finger in a direction of an arrow or clicking a switching icon shown in a dotted-line box), the user can trigger the electronic device to update the card display interface 24 to display cards of other forms or specifications.

In some embodiments, if the electronic device receives the sliding operation of the user as shown in (a) of FIG. 8(a), FIG. 8(b), and FIG. 8(c)-1 and FIG. 8(c)-2 , as shown in (b) of FIG. 8(a), FIG. 8(b), and FIG. 8(c)-1 and FIG. 8(c)-2 , the electronic device displays the combined card 22 in the card display interface 24. If the electronic device receives an operation performed by the user on the "add to desktop" control 25, as shown in (c) of FIG. 8(a), FIG. 8(b), and FIG. 8(c)-1 and FIG. 8(c)-2 , the electronic device returns to display the desktop and the combined card 22 has been added to the desktop. It should be noted that the folder card 20 originally added to the home page of the desktop remains, and the newly added combined card 22 is displayed on another page of the desktop.

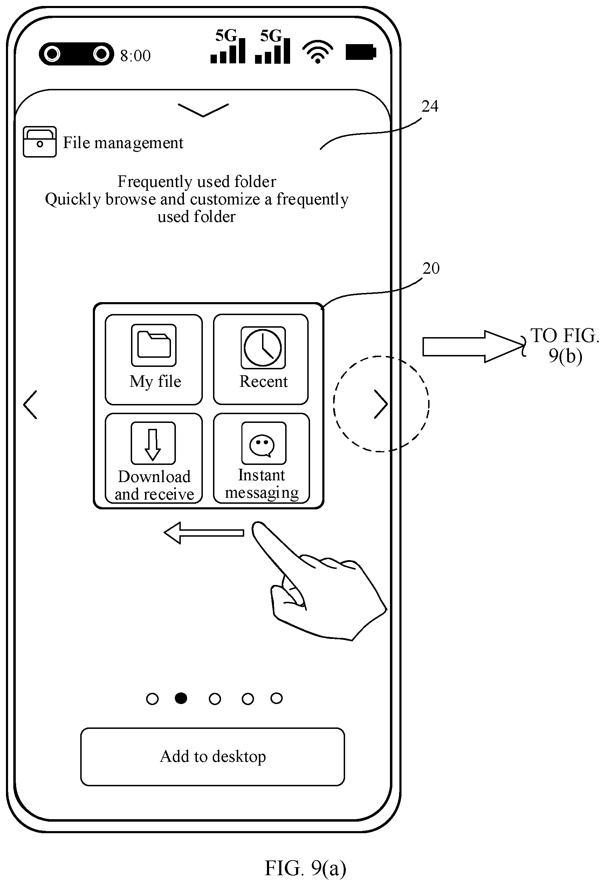

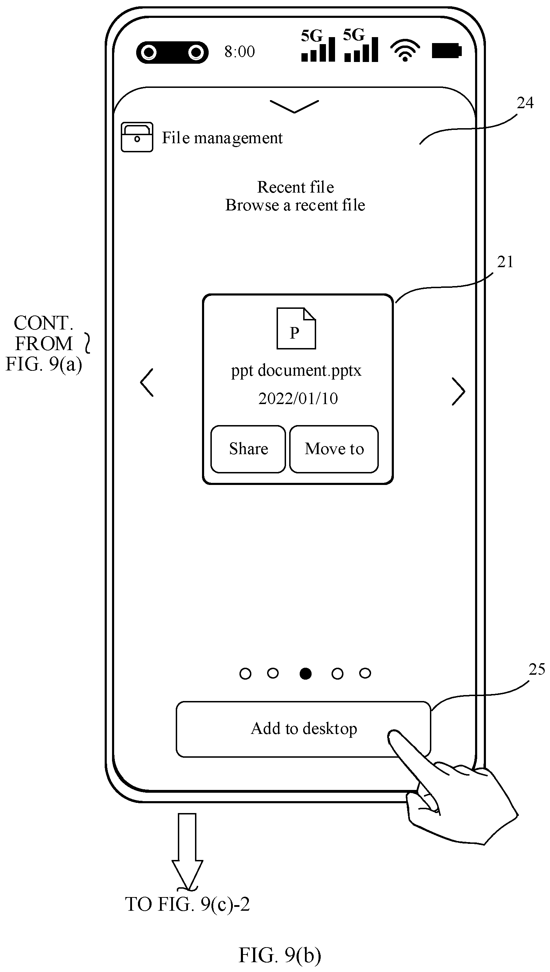

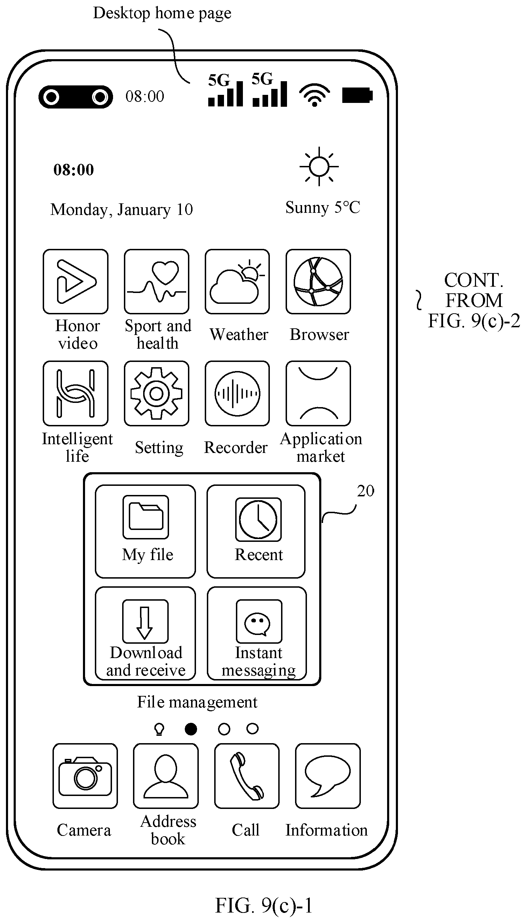

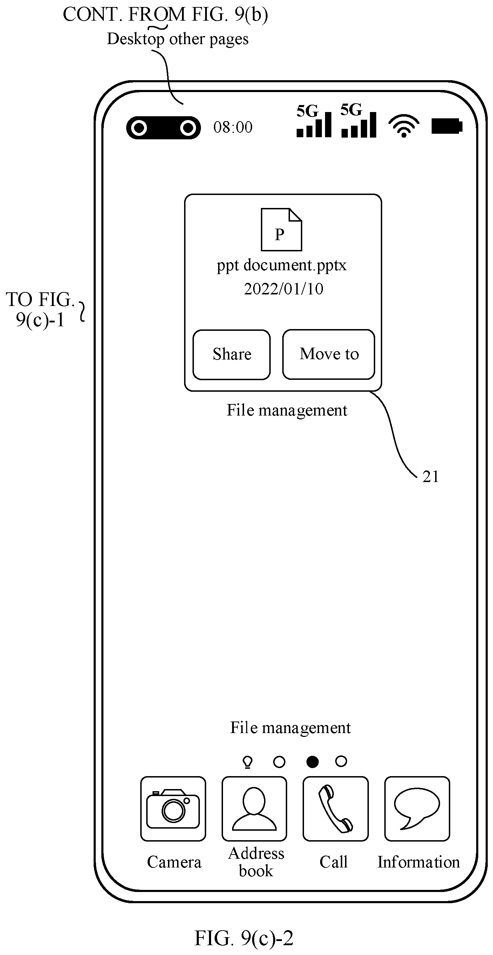

In some embodiments, if the electronic device receives the sliding operation of the user as shown in (a) of FIG. 9(a), FIG. 9(b), and FIG. 9(c)-1 and FIG. 9(c)-2, as shown in (b) of FIG. 9(a), FIG. 9(b), and FIG. 9(c)-1 and FIG. 9(c)-2,, the electronic device displays the file card 21 in the card display interface 24. If the electronic device receives an operation performed by the user on the "add to desktop" control 25, as shown in (c) of FIG. 9(a), FIG. 9(b), and FIG. 9(c)-1 and FIG. 9(c)-2,, the electronic device returns to display the desktop and the file card 21 has been added to the desktop. It should be noted that the folder card 20 originally added to the home page of the desktop remains, and the newly added file card 21 is displayed on another page of the desktop.

It should be noted that in the above implementation, if the user adds a new card to the desktop when a card is originally displayed on the desktop, the newly added card and the card originally displayed on the desktop can be displayed in different areas of the desktop. The electronic device may update a display location of the card on the desktop according to a drag operation performed by the user on the card. In this way, cards of different specifications can be displayed in different areas of the desktop, which is convenient for users to find files and improves user experience.

Through the proposal of the present application, cards of various specifications on the desktop are provided for users to choose, and users can choose to add cards suitable for their own usage habits to the desktop for display according to actual usage needs.

For the convenience of description, in the following embodiments, the combined card 22 is taken as an example to illustrate the card display method provided in the embodiments of the present application.

### (2) The process of setting a folder path of a card on the desktop

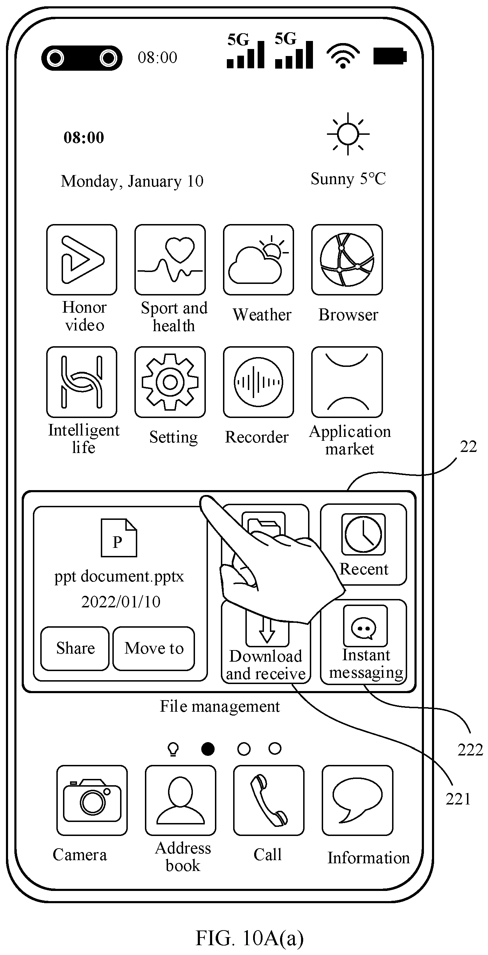

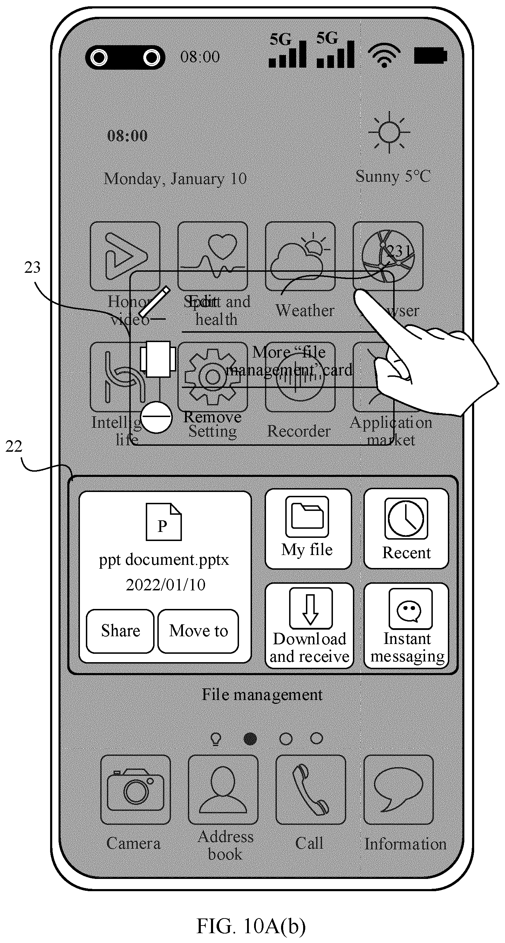

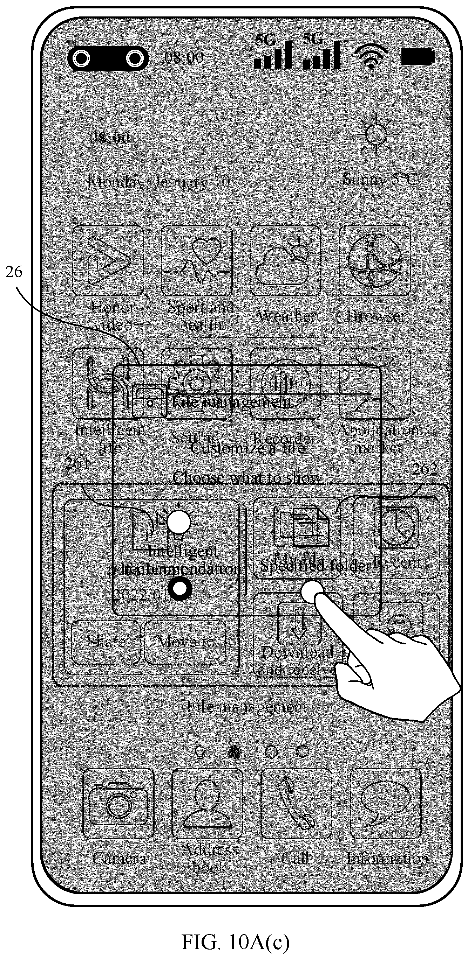

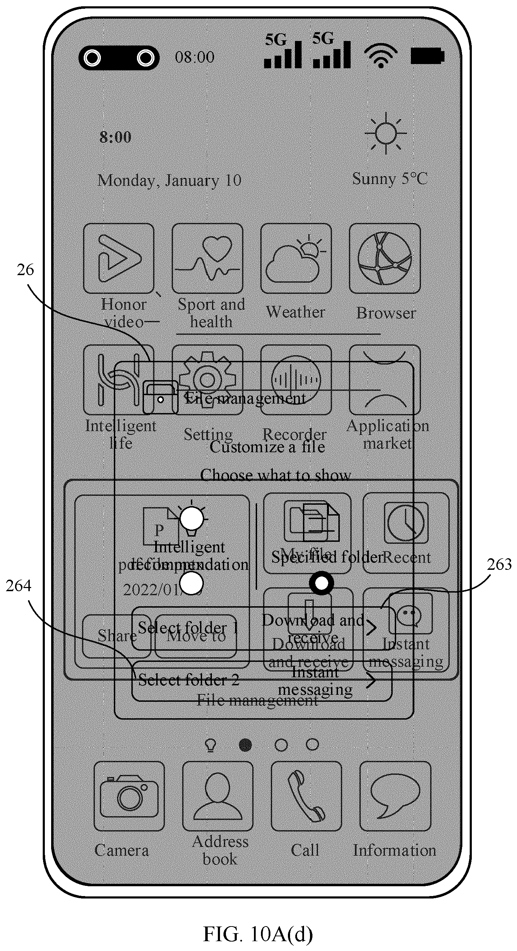

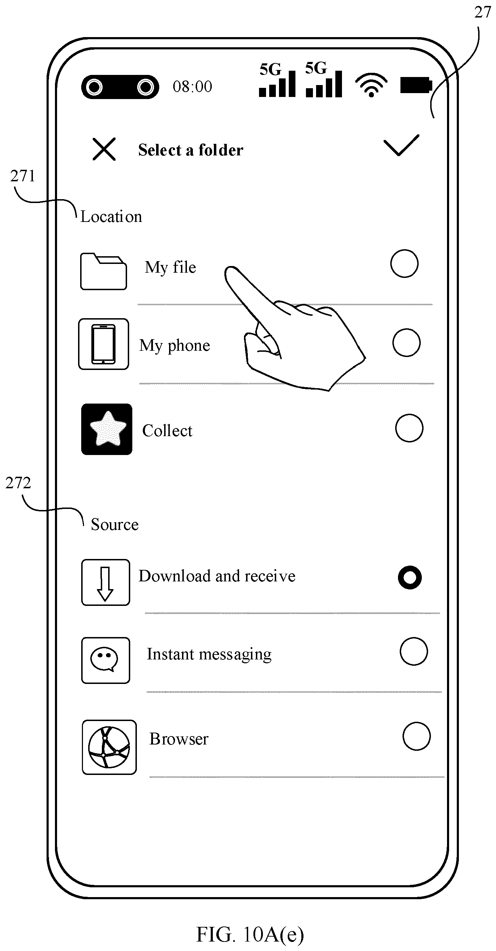

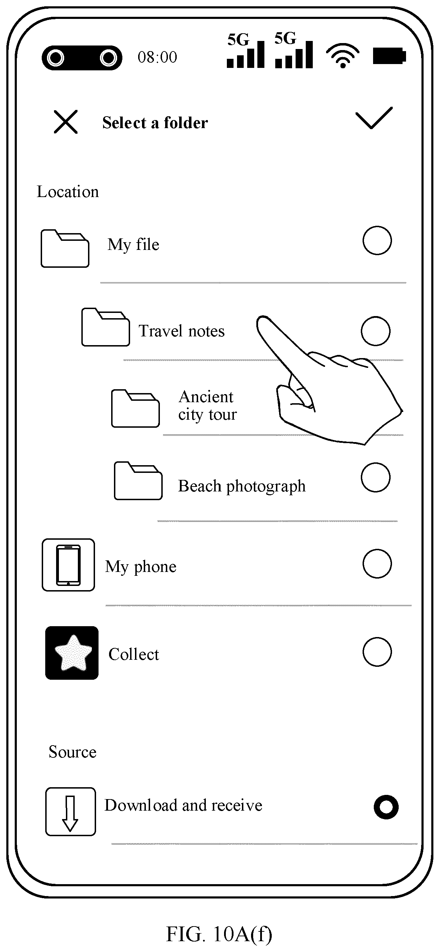

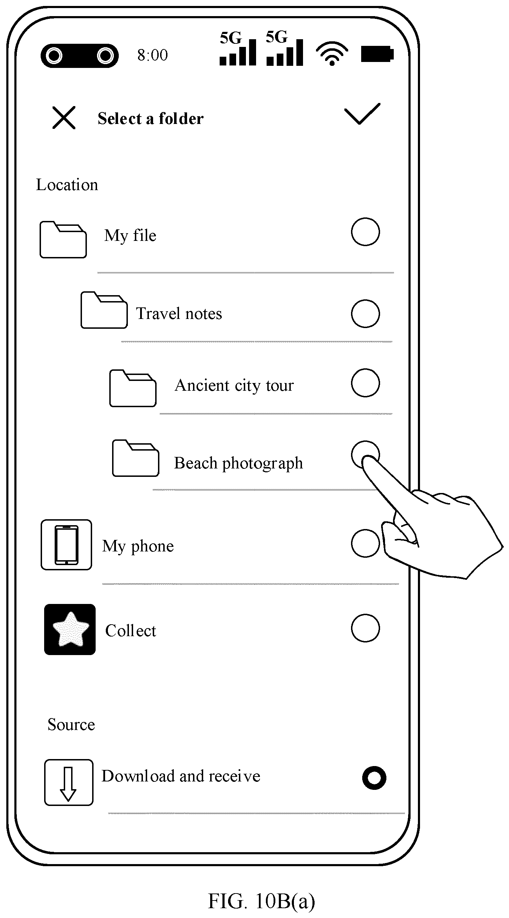

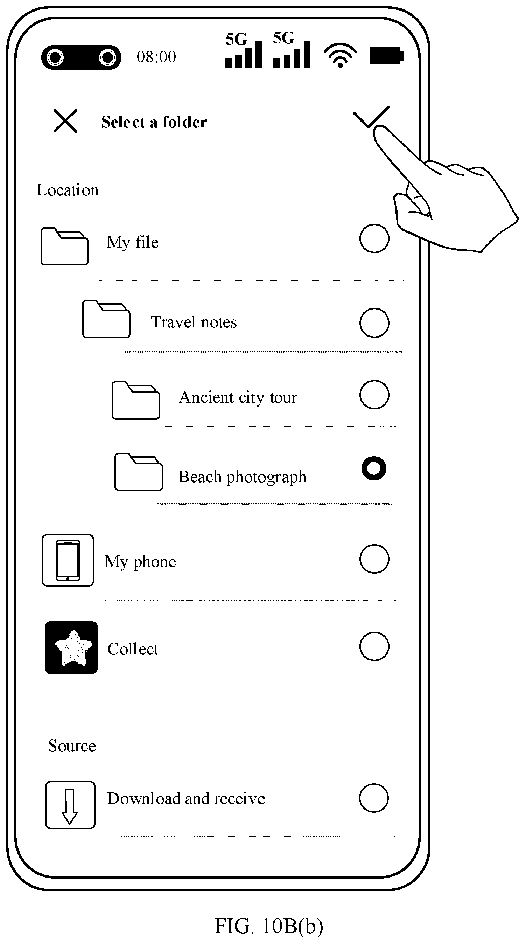

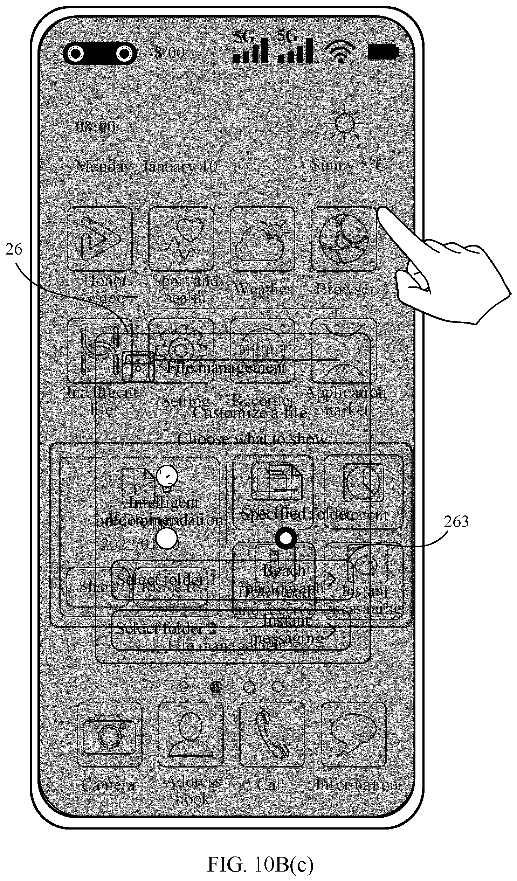

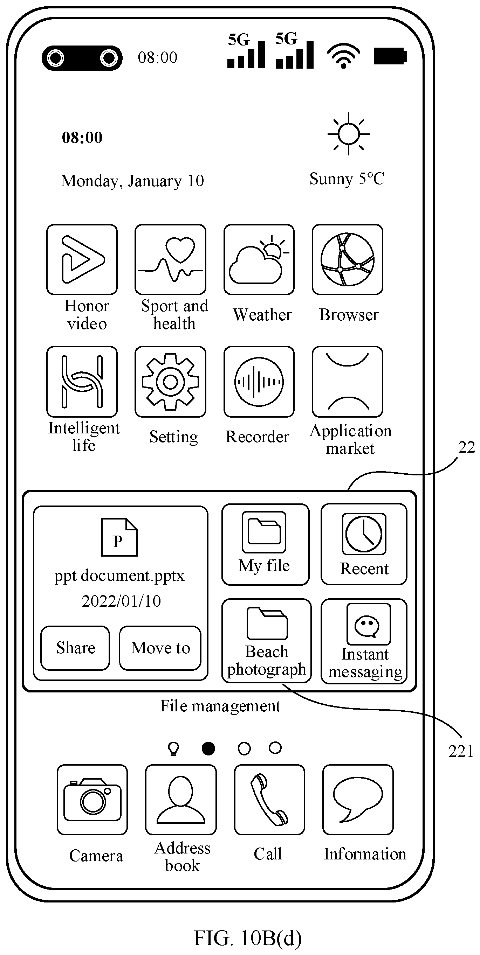

As described above, in this embodiment of the present application, the electronic device supports the following functions: In the folder card 20 shown in (a) of FIG. 5A, FIG. 5B, FIG. 5C, and FIG. 5D, the user can customize two folder paths. The process of setting a folder path of a card on the desktop in this embodiment of the present application is exemplarily described below with reference to FIG. 10A(a), FIG. 10A(b), FIG. 10A(c), FIG. 10A(d), FIG. 10A(e), and FIG. 10A(f) and FIG. 10B(a), FIG. 10B(b), FIG. 10B(c), and FIG. 10B(d).

As shown in (a) of FIG. 10A(a), FIG. 10A(b), FIG. 10A(c), FIG. 10A(d), FIG. 10A(e), and FIG. 10A(f), for example, an electronic device displays the combined card 22 on the desktop, and the user can operate (for example, a long press operation or an upward slide operation) the combined card 22 to call out a function option for setting the combined card 22. As shown in (b) ofFIG. 10A(a), FIG. 10A(b), FIG. 10A(c), FIG. 10A(d), FIG. 10A(e), and FIG. 10A(f), in response to the user operation, the electronic device may display a function option bar 23 corresponding to the combined card 22. An editing option 231 in the function option bar 23 can be used to trigger folder path setting for a folder that supports editing in the combined card 22.

As shown in (c) ofFIG. 10A(a), FIG. 10A(b), FIG. 10A(c), FIG. 10A(d), FIG. 10A(e), and FIG. 10A(f), in response to the operation performed by the user on the editing option 231, the electronic device can display a customization file bar 26 for file management, to set two folder paths in the folder card. The customization file bar 26 may include an intelligent recommendation mode 261 and a specified folder mode 262.

In the intelligent recommendation mode 261, the two source folders with the most files are displayed by default, for example, the two source folders of "download and receive" and "instant messaging".

In the specified folder mode 262, the user is allowed to select two commonly used folders and set the folders as two folders in the folder card. Optionally, in the initial state of the specified folder mode 262, two intelligently recommended folders may be displayed by default.

As shown in (c) of FIG. 10A(a), FIG. 10A(b), FIG. 10A(c), FIG. 10A(d), FIG. 10A(e), and FIG. 10A(f), in the intelligent recommendation mode 261, the user can operate the specified folder mode 262 to trigger switching from the intelligent recommendation mode to the specified folder mode. Correspondingly, as shown in (d) of FIG. 10A(a), FIG. 10A(b), FIG. 10A(c), FIG. 10A(d), FIG. 10A(e), and FIG. 10A(f), in response to the operation performed by the user on the specified folder mode 262, the electronic device additionally displays, in the customization file bar 26 for file management, an entry 263 and an entry 264 for selecting a folder.

A folder path currently displayed in the entry 263 is "download and receive", and the folder path is a folder path corresponding to a folder icon in the folder card.

A folder path currently displayed in the entry 264 is "instant messaging", and the folder path is a folder path corresponding to a folder icon in the folder card.

As shown in (d) of FIG. 10A(a), FIG. 10A(b), FIG. 10A(c), FIG. 10A(d), FIG. 10A(e), and FIG. 10A(f), the user can operate the entry 263 to set the folder path corresponding to the folder icon 203. Correspondingly, as shown in (e) of FIG. 10A(a), FIG. 10A(b), FIG. 10A(c), FIG. 10A(d), FIG. 10A(e), and FIG. 10A(f), in response to an operation performed by the user on the entry 263, the electronic device displays a folder selection interface 27. The folder selection interface 27 displays a folder 271 classified by location and a folder 272 classified by source. Exemplarily, the folder 271 classified by location may include folders such as "my file", "my phone", and "favorite". Exemplarily, the folder 272 classified by source may include folders such as "download and receive", "instant messaging", and "browser". As shown in (e) of FIG. 10A(a), FIG. 10A(b), FIG. 10A(c), FIG. 10A(d), FIG. 10A(e), and FIG. 10A(f), the folder "download and receive" is currently a default folder, and a circular selection icon corresponding to this folder indicates a selected state.

In this embodiment of the present application, the user can select any folder in the folder selection interface 27 to set the folder as a folder path corresponding to a folder icon in the folder card.

As shown in (e) in FIG. 10A(a), FIG. 10A(b), FIG. 10A(c), FIG. 10A(d), FIG. 10A(e), and FIG. 10A(f), when the electronic device receives a click operation performed by the user on the folder "my file", as shown in (f) of FIG. 10A(a), FIG. 10A(b), FIG. 10A(c), FIG. 10A(d), FIG. 10A(e), and FIG. 10A(f), the electronic device expands the directory of the folder "my file" to display sub-directories, such as the folder "travel notes ". When the electronic device receives a click operation performed by the user on the folder "travel notes ", as shown in (f) of FIG. 10A(a), FIG. 10A(b), FIG. 10A(c), FIG. 10A(d), FIG. 10A(e), and FIG. 10A(f), the electronic device expands the directory of the folder "travel notes " to display sub-directories, such as the folders "ancient city tour" and "beach photograph".

Further, as shown in (a) of FIG. 10B(a), FIG. 10B(b), FIG. 10B(c), and FIG. 10B(d), the electronic device receives an operation of selecting a circular selection icon of the folder "beach photograph" by the user. As shown in (b) of FIG. 10B(a), FIG. 10B(b), FIG. 10B(c), and FIG. 10B(d), in response to the user operation, the electronic device updates the circular selection icon of the folder "beach photograph" to a selected state. When the electronic device receives an operation performed by the user on a confirmation icon √, as shown in (c) of FIG. 10B(a), FIG. 10B(b), FIG. 10B(c), and FIG. 10B(d), the electronic device updates to display the customization file bar 26 for file management. In the customization file bar 26, it can be seen from the entry 263 for selecting a folder that the folder path has been updated from "download and receive" to "beach photograph".

Further, when the electronic device receives the operation (for example, a click operation) performed by the user on a blank area, as shown in (d) of FIG. 10B(a), FIG. 10B(b), FIG. 10B(c), and FIG. 10B(d), the electronic device returns to the desktop, and the folder icon 221 in the combined card 22 displayed on the desktop is updated from "download and receive" to "beach photograph".

### (3) The process of using a function of a card on the desktop

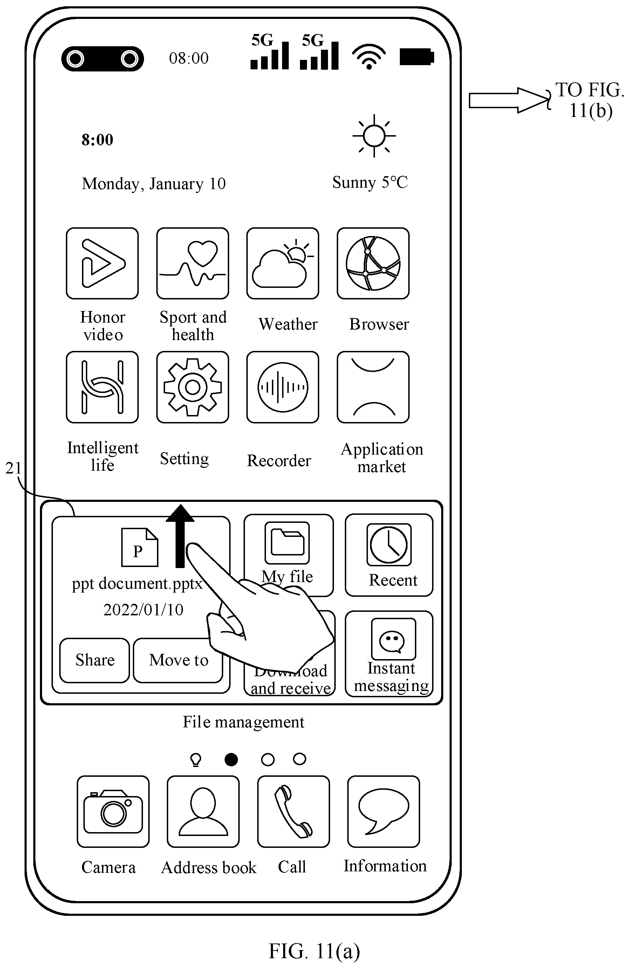

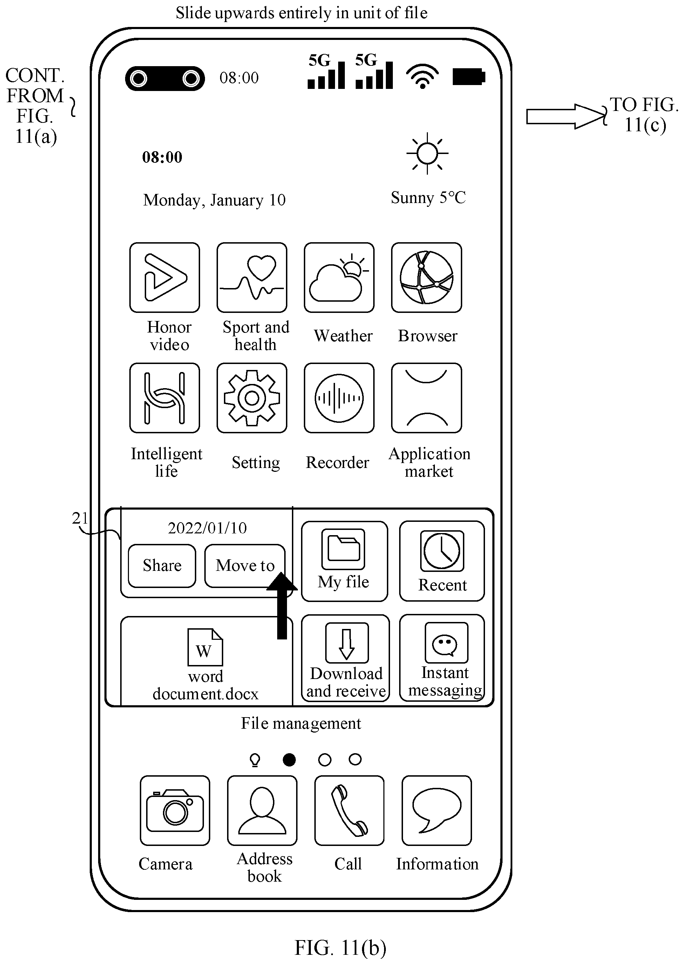

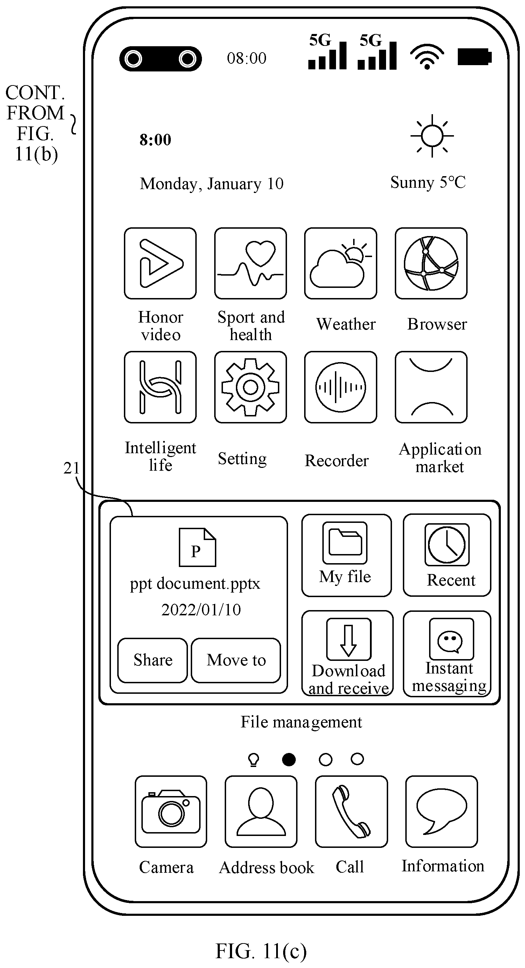

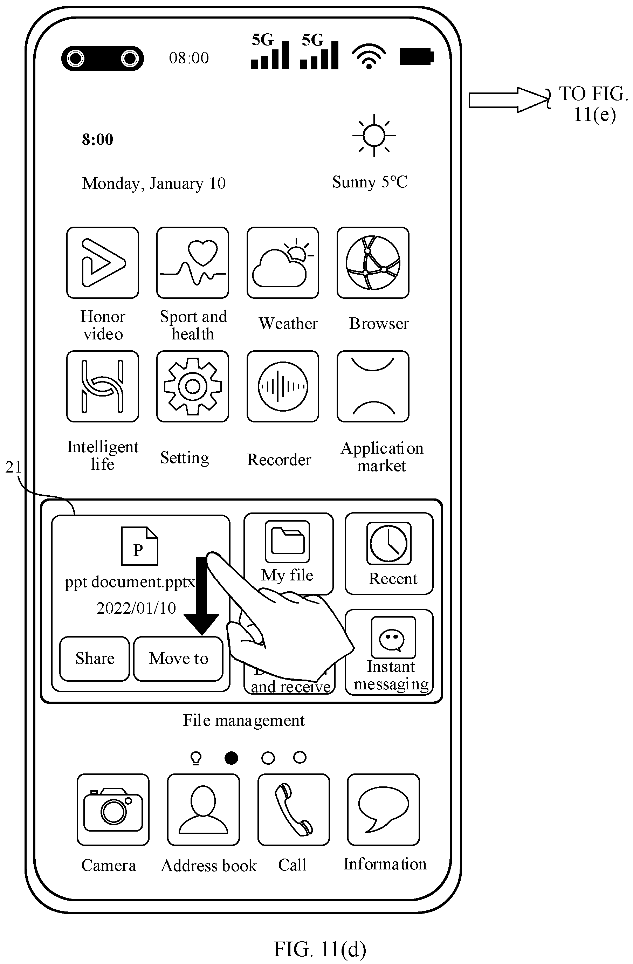

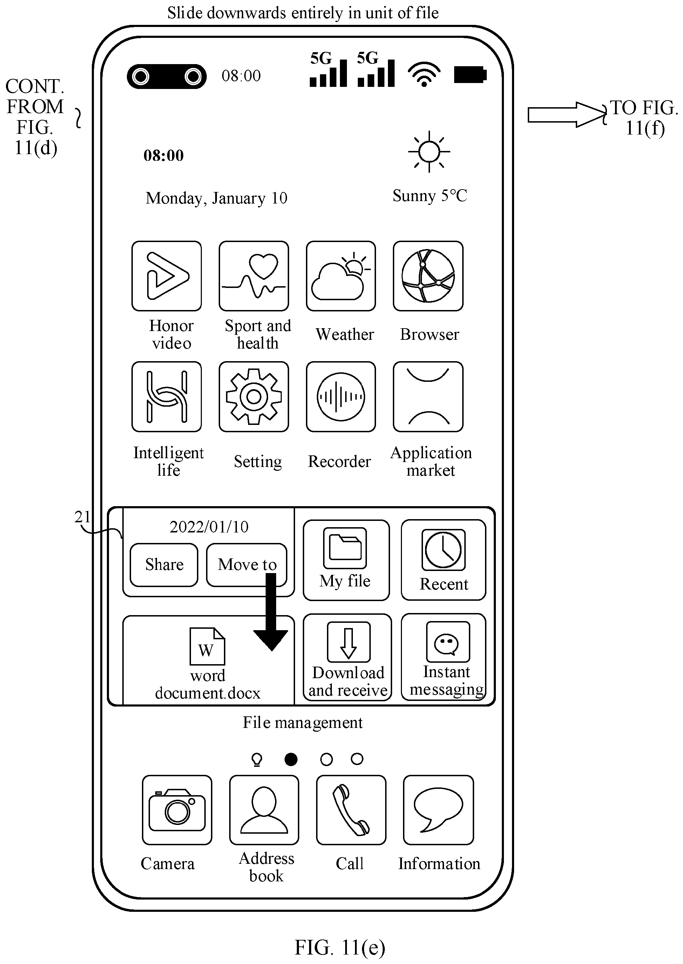

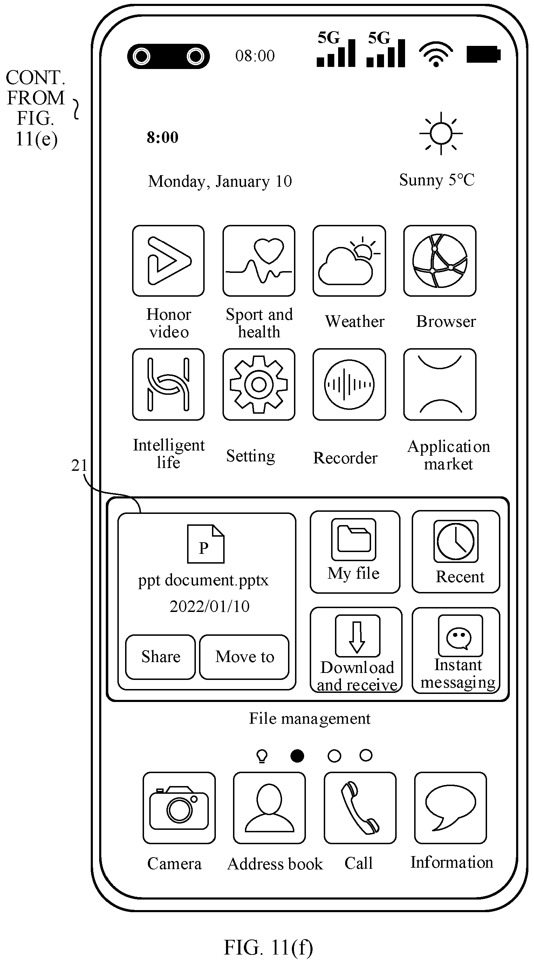

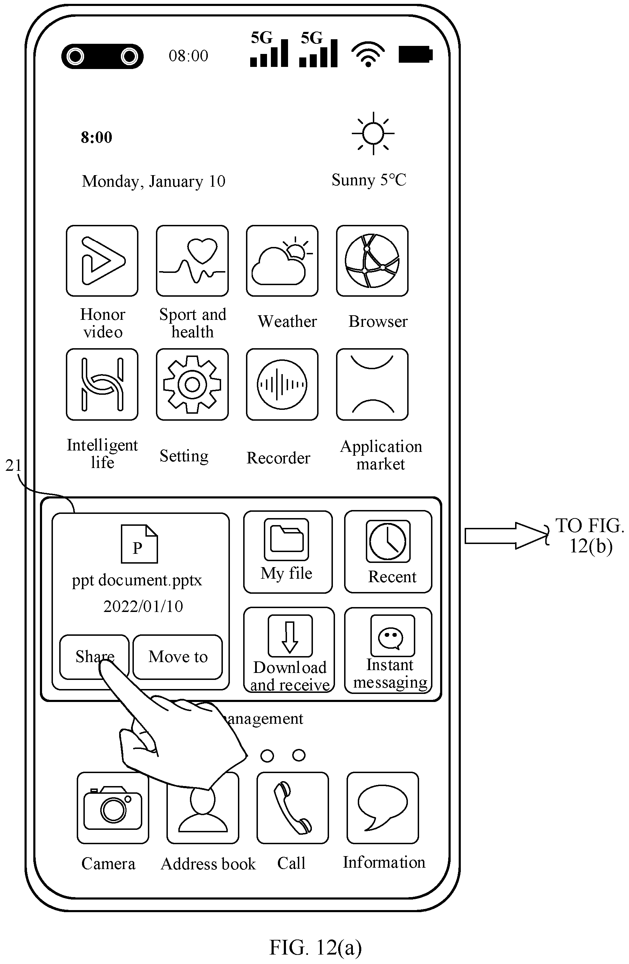

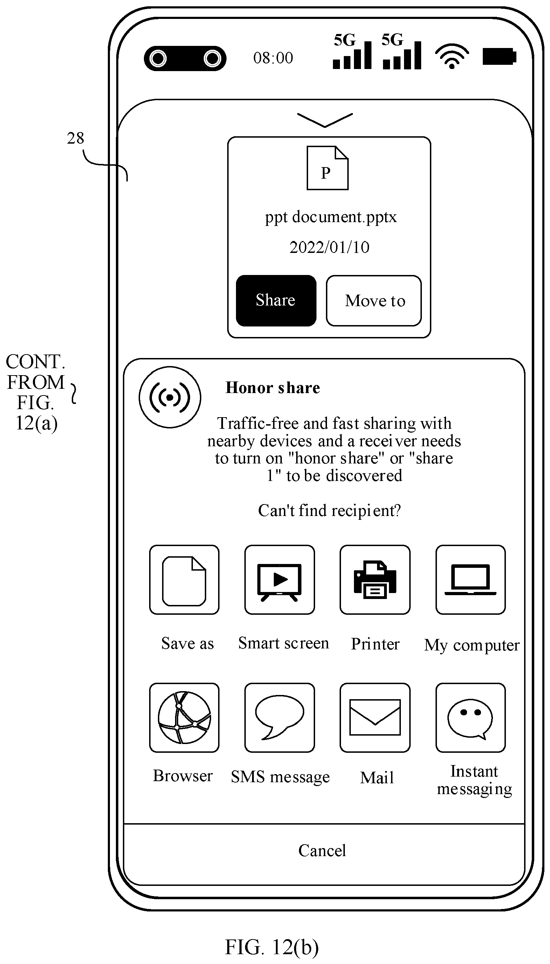

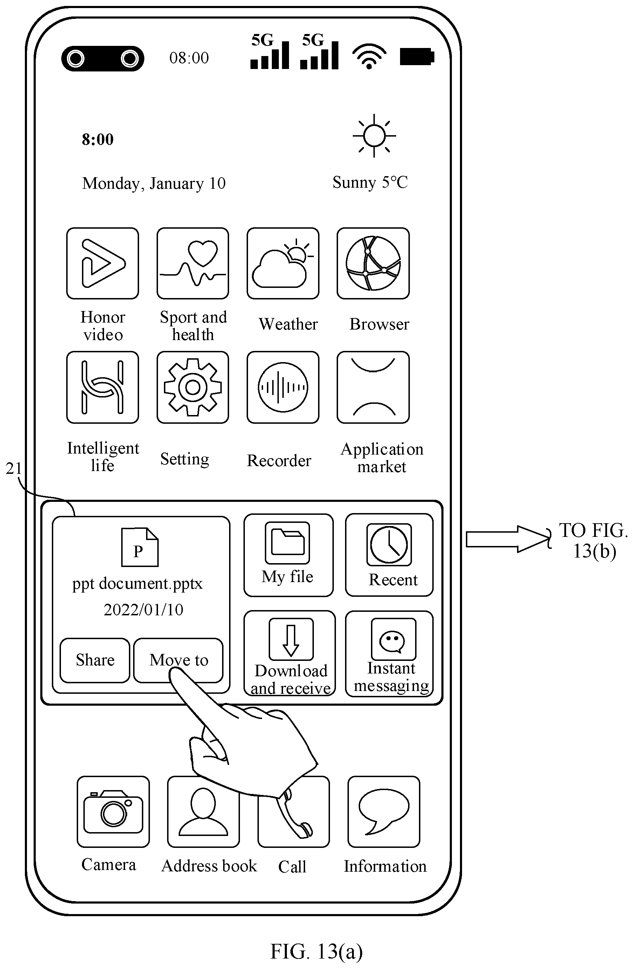

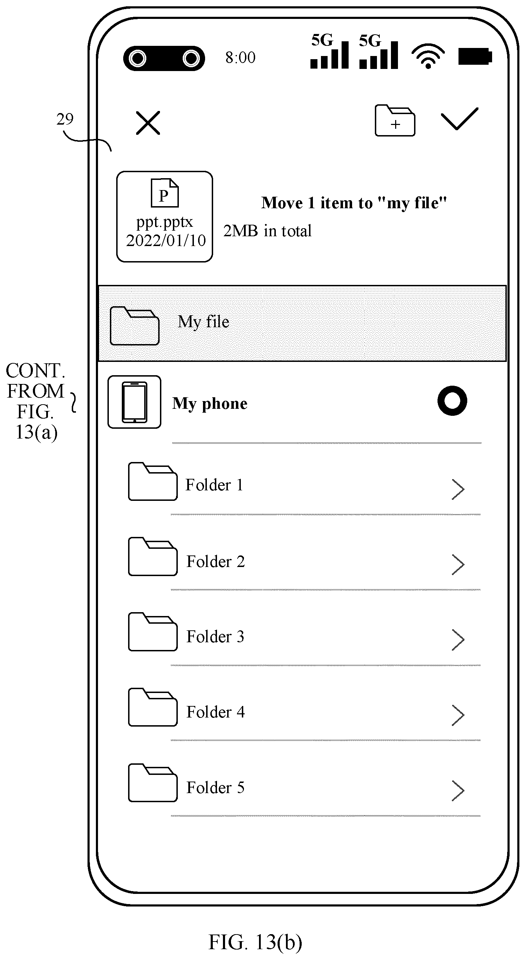

First, functions supported by the file card in actual usage are exemplarily described with reference to FIG. 11(a), FIG. 11(b), FIG. 11(c), FIG. 11(d), FIG. 11(e), and FIG. 11(f) to FIG. 13(a) and FIG. 13(b). FIG. 11(a), FIG. 11(b), FIG. 11(c), FIG. 11(d), FIG. 11(e), and FIG. 11(f) are schematic diagrams of an interface in which a file card supports a user sliding operation to trigger switching between a plurality of files for display according to an embodiment of the present application. FIG. 12(a) and FIG. 12(b) are schematic diagrams of an interface of a sharing control in a file card during application according to an embodiment of the present application. FIG. 13(a) and FIG. 13(b) are schematic diagrams of an interface for a send-to control in a file card during application according to an embodiment of the present application.

In some embodiments, as shown in (a) of FIG. 11(a), FIG. 11(b), FIG. 11(c), FIG. 11(d), FIG. 11(e), and FIG. 11(f), for example, an electronic device displays a combined card on the desktop, the file card 21 in the combined card displays a recently used file, such as a ppt document, and a usage time is 2022/01/10. As shown in (a) of FIG. 11(a), FIG. 11(b), FIG. 11(c), FIG. 11(d), FIG. 11(e), and FIG. 11(f), the electronic device receives an upward sliding operation performed by the user on the file card 21, and as shown in (b) of FIG. 11(a), FIG. 11(b), FIG. 11(c), FIG. 11(d), FIG. 11(e), and FIG. 11(f), in response to the user operation, the electronic device dynamically switches in the file card 21 to display a recently used file. As shown in (c) of FIG. 11(a), FIG. 11(b), FIG. 11(c), FIG. 11(d), FIG. 11(e), and FIG. 11(f), the ppt document in the file card 21 is switched for display as a word document, and the usage time corresponding to the word document is 2022/01/09.

In some other embodiments, as shown in (d) of FIG. 11(a), FIG. 11(b), FIG. 11(c), FIG. 11(d), FIG. 11(e), and FIG. 11(f), the electronic device receives a downward sliding operation performed by the user on the file card 21, and as shown in (e) of FIG. 11(a), FIG. 11(b), FIG. 11(c), FIG. 11(d), FIG. 11(e), and FIG. 11(f), in response to the user operation, the electronic device dynamically switches in the file card 21 to display a recently used file. As shown in (f) of FIG. 11(a), FIG. 11(b), FIG. 11(c), FIG. 11(d), FIG. 11(e), and FIG. 11(f), the word document in the file card 21 is switched back to the ppt document again.

Through the solution of the present application, the user can trigger the file card to switch for displaying a plurality of recently used files by sliding on the file card, which is convenient for the user to find files and improves the user experience.

In some embodiments, as shown in (a) of FIG. 12(a) and FIG. 12(b), the electronic device receives the operation (for example, a click operation) performed by the user on the "share" control in the file card 21. As shown in (b) of FIG. 12(a) and FIG. 12(b), in response to the user operation, the electronic device displays a file sharing interface 28, and the file sharing interface 28 displays various sharing objects, such as save as, intelligent screen, printer, my computer, browser, SMS message, email, and/or instant messaging APP. The user can choose a sharing object such as printer according to the actual usage need. Correspondingly, the electronic device can send a ppt document currently displayed in the file card 21 to the printer, and instruct the printer to print the ppt document. In this way, in actual implementation, by displaying the file card on the desktop and providing the "share" control, the file can be quickly shared and the user experience is improved.

In some other embodiments, as shown in (a) of FIG. 13(a) and FIG. 13(b), the electronic device receives the operation (for example, a click operation) performed by the user on the "move to" control in the file card 21. As shown in (b) of FIG. 13(a) and FIG. 13(b), in response to the user operation, the electronic device displays an interface 29, and the interface 29 displays a plurality of folders, such as "my file" and "my phone". Each folder can also include one or more folders, for example, as shown in (b) of FIG. 13(a) and FIG. 13(b), the folder "my phone" can also include a folder 1, a folder 2, a folder 3, a folder 4, and a folder 5. The user can choose a folder such as "my phone" according to the actual usage need. Correspondingly, the electronic device can move the ppt document currently displayed in the file card 21 to the folder "my phone". In this way, in actual implementation, by displaying the file card on the desktop and providing the "move to" control, the file can be quickly moved and the user experience is improved.

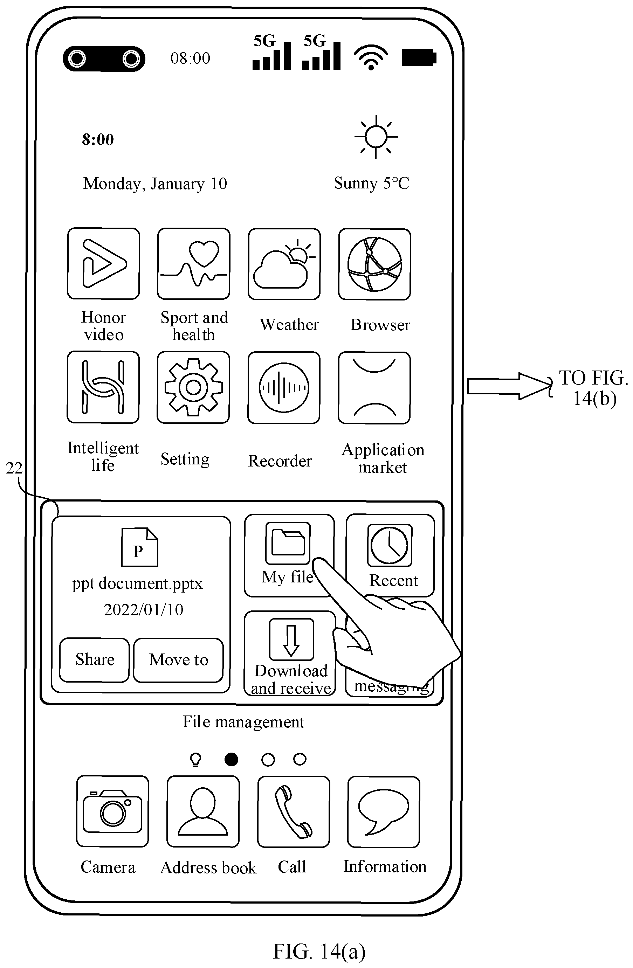

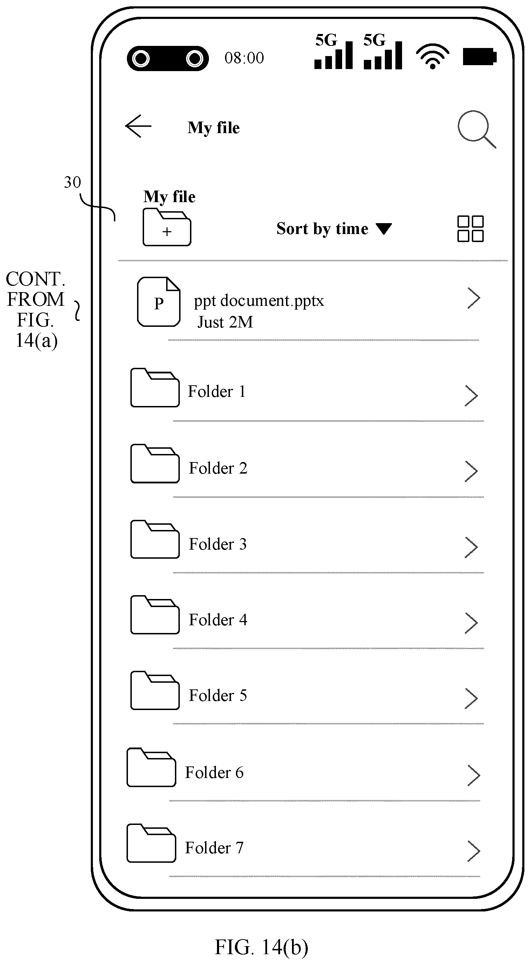

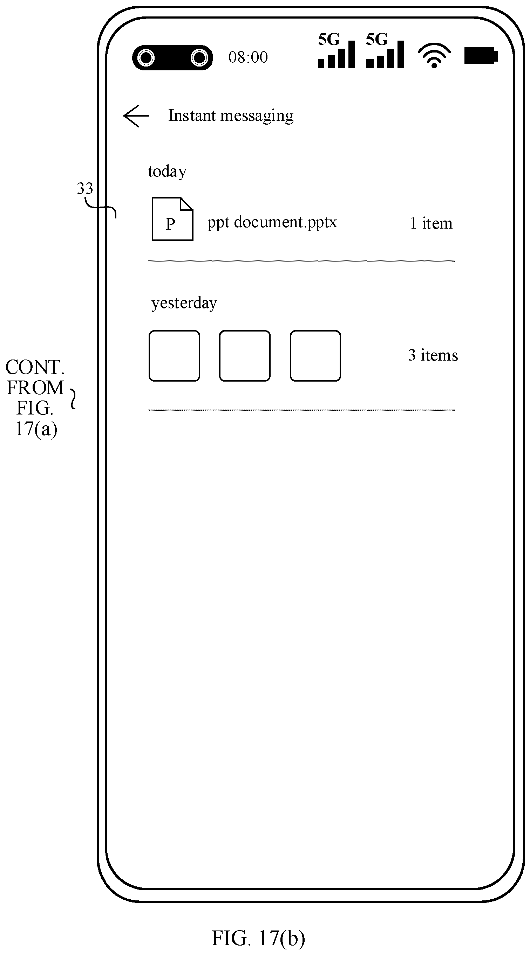

The functions supported by the file card in actual usage have been described above. Functions supported by the file card in actual usage are exemplarily described with reference to FIG. 14(a) and FIG. 14(b) to FIG. 17(a) and FIG. 17(b).

FIG. 14(a) and FIG. 14(b) are schematic diagrams of an interface for a "my file" folder in a folder card during application according to an embodiment of the present application. As shown in (a) of FIG. 14(a) and FIG. 14(b), for example, the combined card 22 is displayed on the desktop by the electronic device, if the electronic device receives the operation performed by the user on "my file" 201 in the combined card 22, as shown in (b) of FIG. 14(a) and FIG. 14(b), the electronic device can quickly jump to an interface 30 of the "my file" folder, and display folders and/or files in the preset "my file" folder of the electronic device to the user. In the "my file" folder, different files can be sorted by time or by name, and users can choose according to actual usage needs, which is convenient for file search.

As shown in (b) of FIG. 14(a) and FIG. 14(b), since the "my file" folder includes one or more folders preset by the user, and is used for classifying and storing various files of the user, the folder "my file" in the folder card is used, so that the user can quickly search for the "my file" folder, to facilitate the user to find files and improve user experience.

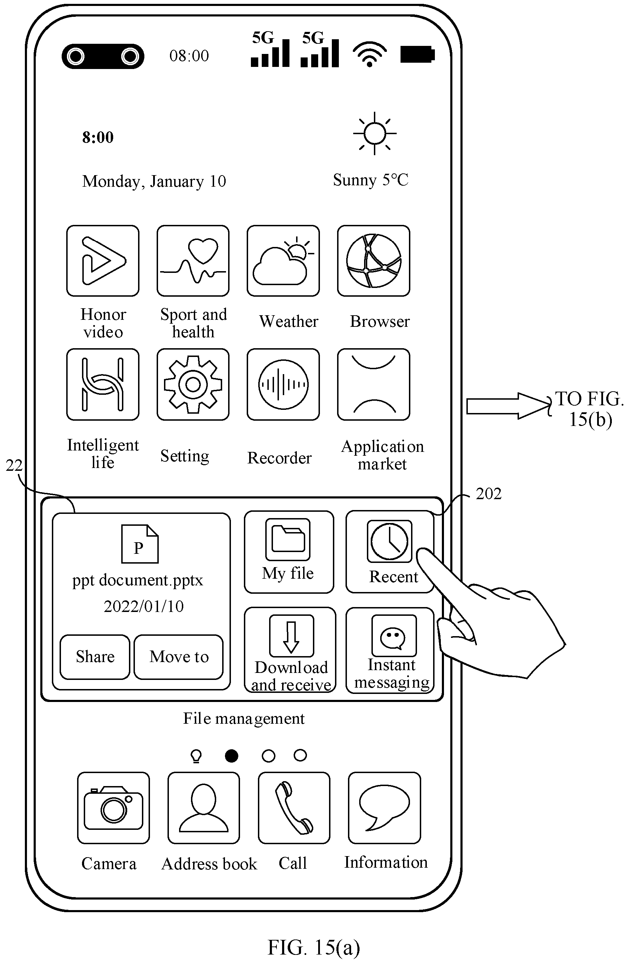

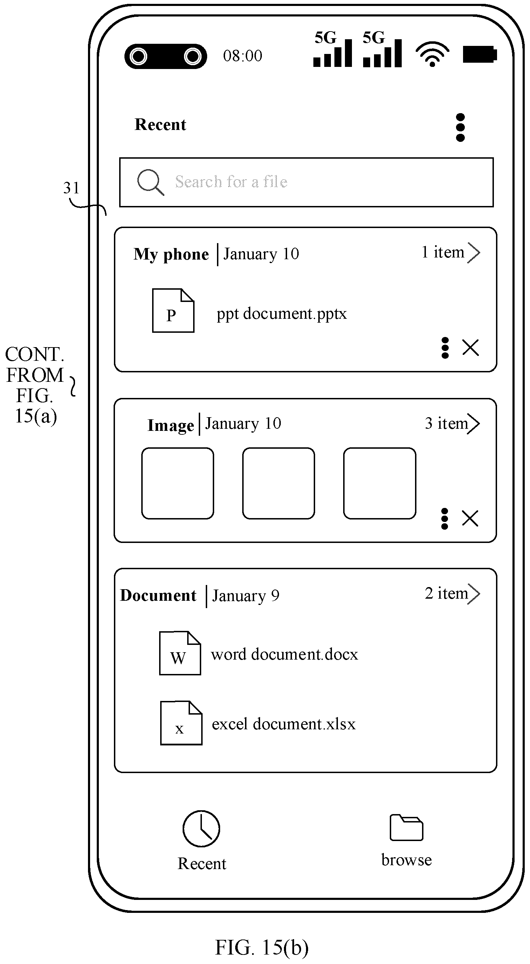

FIG. 15(a) and FIG. 15(b) are schematic diagrams of an interface of a "recent" folder in a folder card during application according to an embodiment of the present application. As shown in (a) of FIG. 15(a) and FIG. 15(b), for example, the combined card 22 is displayed on the desktop by the electronic device, if the electronic device receives the operation performed by the user on "recent" 202 in the combined card 22, as shown in (b) of FIG. 15(a) and FIG. 15(b), the electronic device can quickly jump to an interface 31 of the "recent" folder, and display all files recently operated on the electronic device to the user. As shown in (b) of FIG. 15(a) and FIG. 15(b), in the "recent" folder, all the files (such as documents, images, audios and/or videos) recently operated by the electronic device can be arranged in order according to operation times, for example, a file with the latest operation time can be arranged at the front, which is convenient for the user to find.

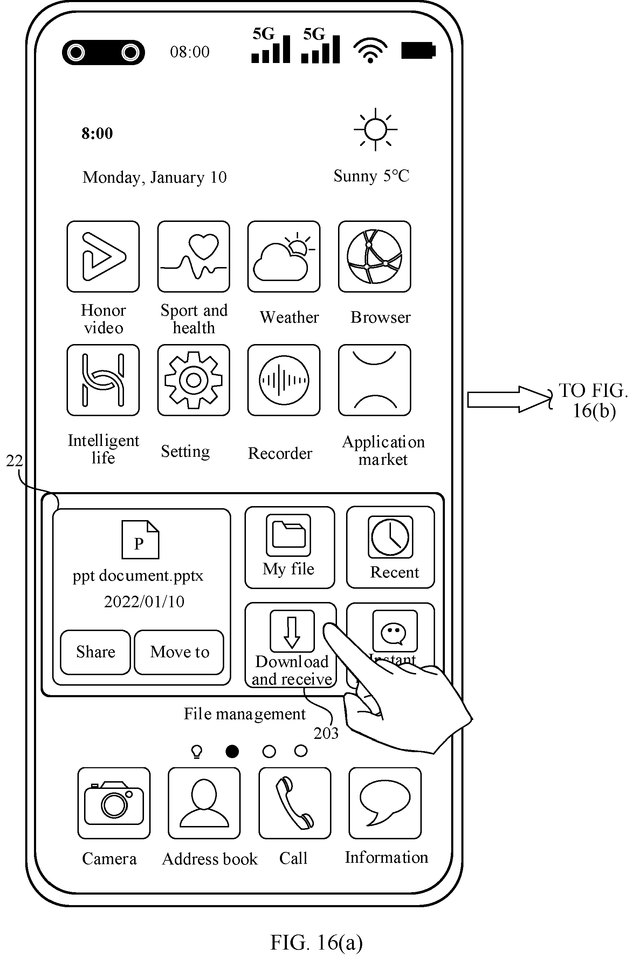

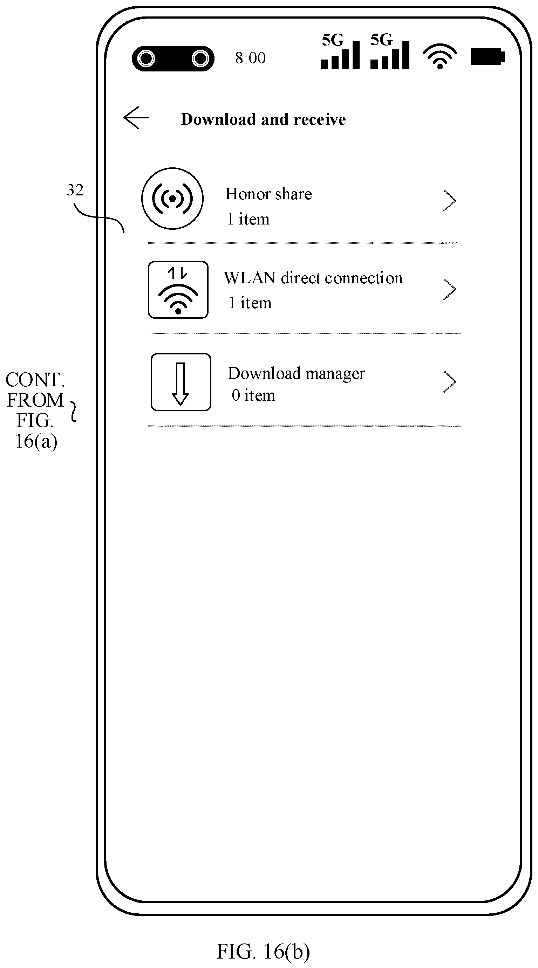

FIG. 16(a) and FIG. 16(b) are schematic diagrams of an interface of a "download and receive" in a folder card during application according to an embodiment of the present application. As shown in (a) of FIG. 16(a) and FIG. 16(b), for example, the combined card 22 is displayed on the desktop by the electronic device, if the electronic device receives the operation performed by the user on "download and receive" 203 in the combined card 22, as shown in (b) of FIG. 16(a) and FIG. 16(b), the electronic device can quickly jump to an interface 32 of the "download and receive" folder, and display all files recently downloaded and received on the electronic device to the user.

As shown in (b) of FIG. 16, in the "download and receive" folder, various download sources can be displayed, such as Honor share, wireless local area network (WLAN) direct connection, and download manager. In addition, each download source shows a number of downloads. For example, 1 download task has been completed through Honor share, 1 download task has been completed through WLAN direct connection, and 0 download tasks have been completed through download manager. In a case that a download source completes a plurality of download tasks, files downloaded by the plurality of download tasks may be arranged sequentially according to download times, for example, a file with the latest download time may be arranged at the front, which is convenient for the user to find.

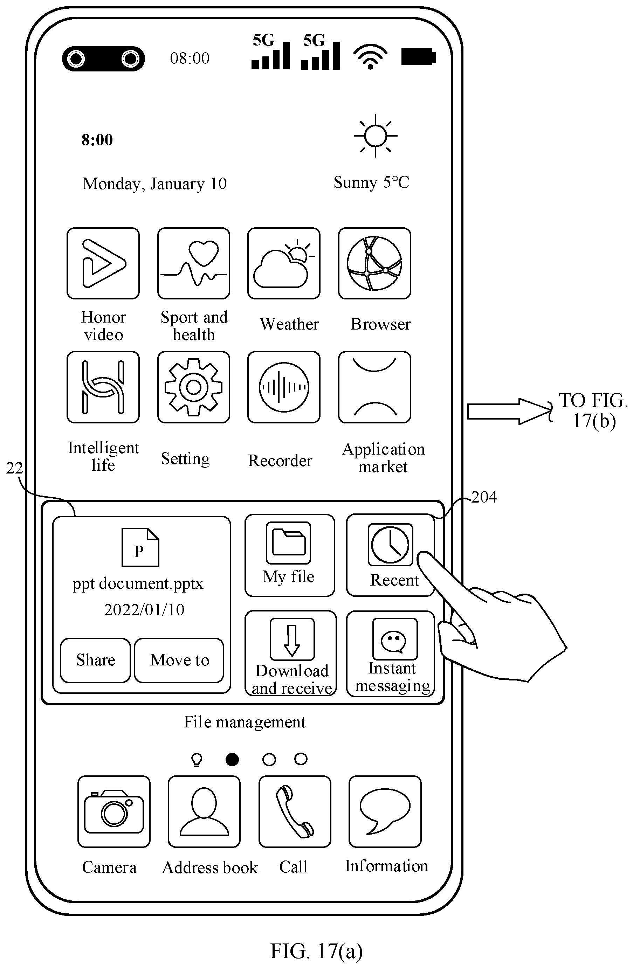

FIG. 17(a) and FIG. 17(b) are schematic diagrams of an interface for "instant messaging" in a folder card during application according to an embodiment of the present application. As shown in (a) of FIG. 17(a) and FIG. 17(b), for example, the combined card 22 is displayed on the desktop by the electronic device, if the electronic device receives the operation performed by the user on "instant messaging" 204 in the combined card 22, as shown in (b) of FIG. 17(a) and FIG. 17(b), the electronic device can quickly jump to an interface 33 of the folder corresponding to an instant messaging APP, and display all files downloaded through the instant messaging APP on the electronic device to the user.

As shown in (b) of FIG. 17(a) and FIG. 17(b), in the folder corresponding to the instant messaging APP, the files downloaded through the instant messaging APP can be arranged in the order of downloading, for example, the file with the latest download time can be arranged at the front, which is convenient for the user to find.

It should be noted that the various card forms described in the various embodiments above are illustrative examples. It can be understood that the embodiments of the present application include but are not limited to the card forms. In actual implementation, the embodiments of the present application can also use other card forms.

As mentioned above, the file card provided in this embodiment of the present application may include at least one of the following elements: file name, file type, file icon, latest file operation time, file size, share control or icon, move to a control or an icon, delete a control or an icon, copy to a control or an icon, edit a control or an icon, unread file number, or any other possible element.

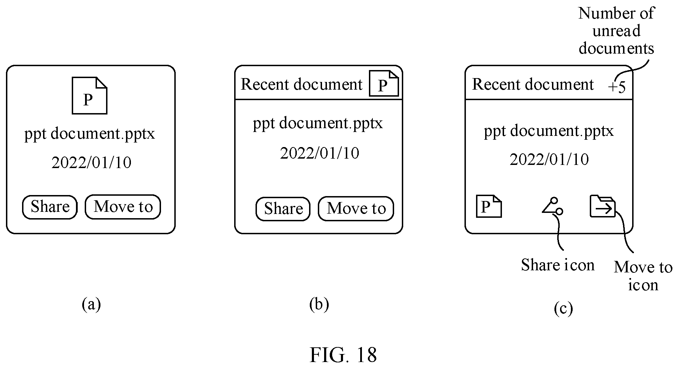

This embodiment of the present application does not limit the layout form of the file card, and the form can be varied. Exemplarily, the file card may be a file card shown in (a) of FIG. 18, or a file card shown in (b) of FIG. 18, or a file card shown in (c) of FIG. 18, or other layout forms are also possible.

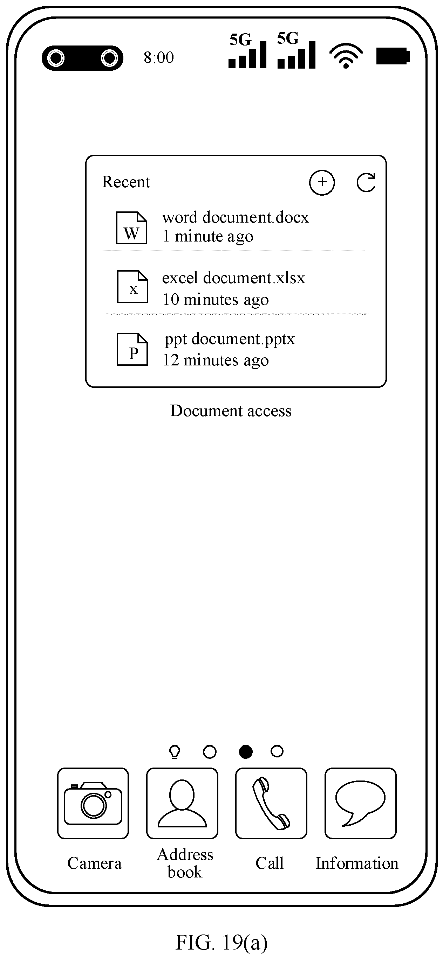

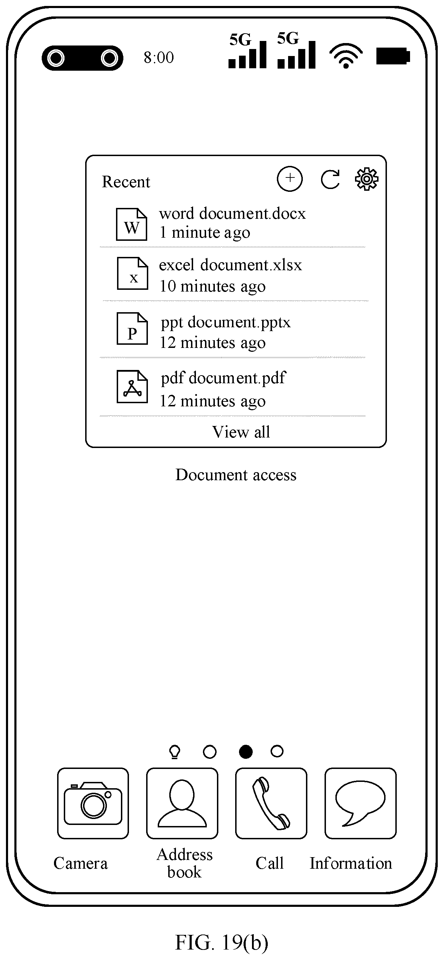

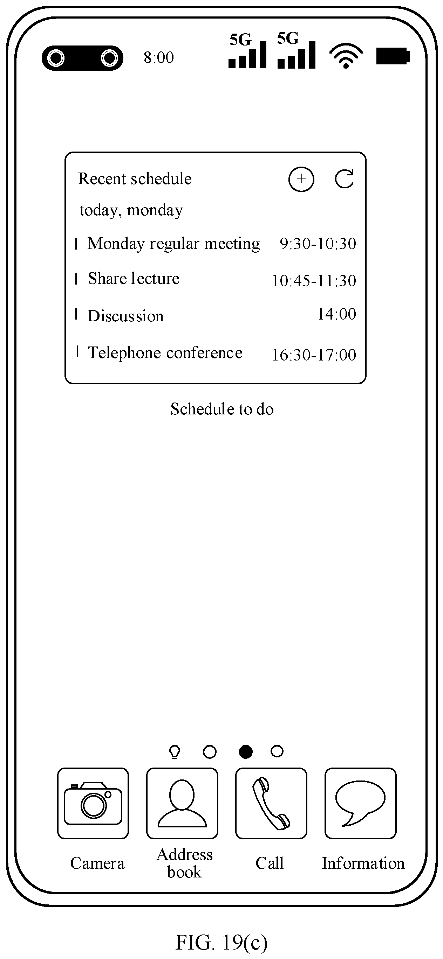

This embodiment of the present application does not limit the content form of the file card, and the form can be varied. The content form of the file card can be document access shown in (a) of FIG. 19(a), FIG. 19(b), and FIG. 19(c), document access shown in (b) of FIG. 19(a), FIG. 19(b), and FIG. 19(c), or schedule to do shown in (c) of FIG. 19(a), FIG. 19(b), and FIG. 19(c), or other content forms may also be possible.

It should be noted that in the above embodiment, for example, the file card displays a plurality of documents. It can be understood that content that can be displayed in the file card provided by this embodiment of the present application includes but is not limited to documents, and can also be images, audios, videos or other files, which can be specifically determined according to actual usage requirements, and is not limited in this embodiment of the present application.

It should be further noted that in the above embodiments, the file card or the folder card used to display files is used as an example for illustration. It can be understood that the application scenarios of the embodiments of the present application include but are not limited to the file management. In actual implementation, application scenarios of this embodiment of the present application may also include camera application management or other application scenarios. The following is an example of camera application management for illustration.

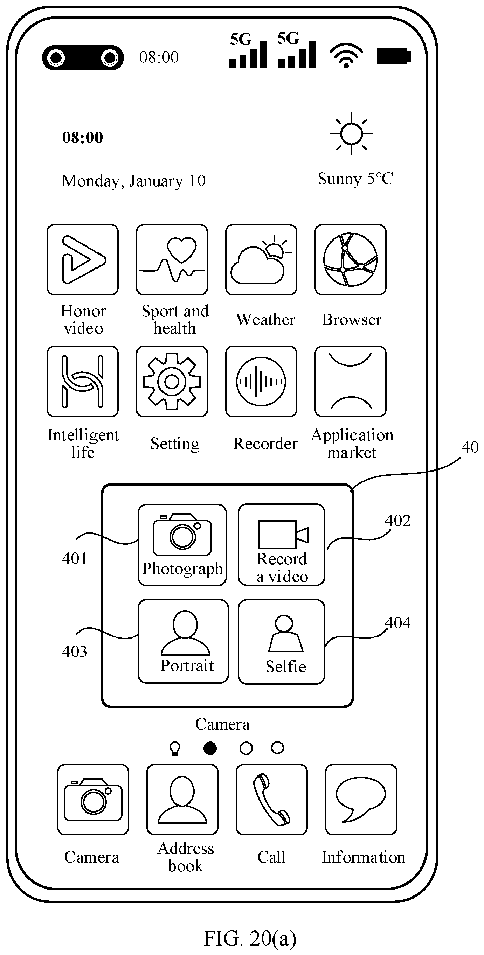

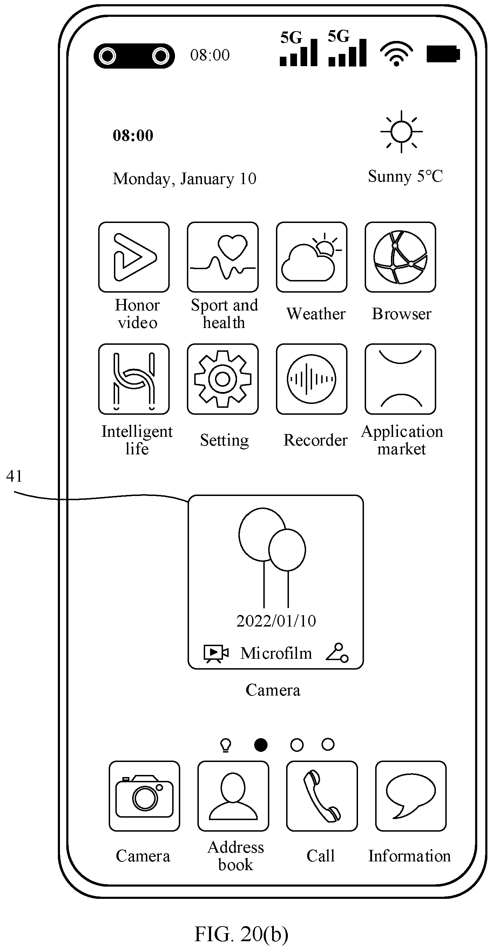

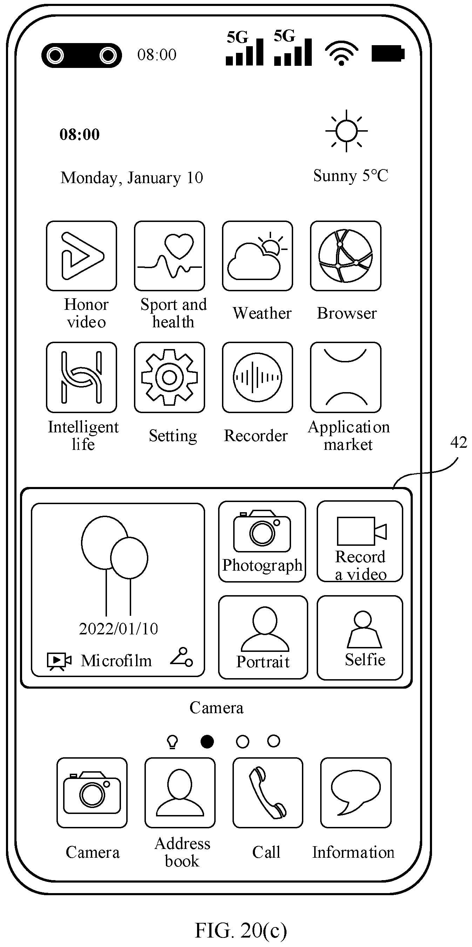

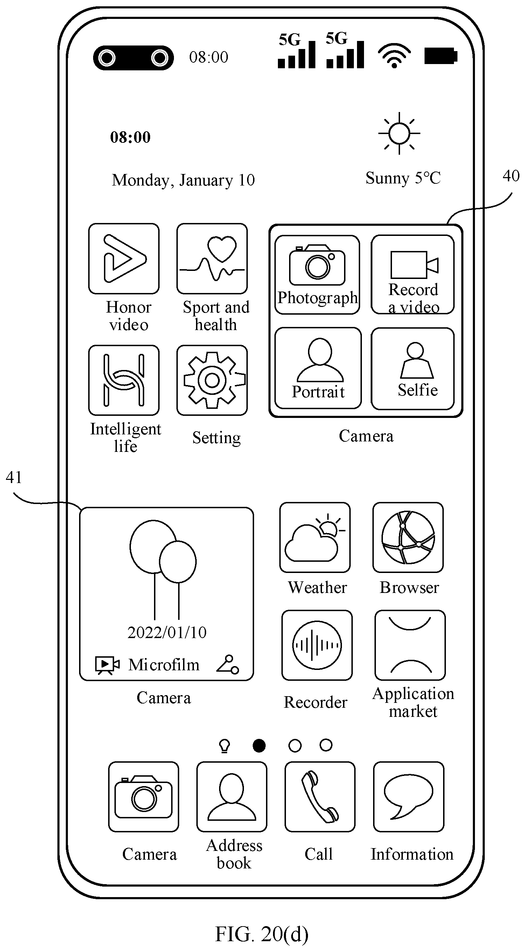

In some embodiments, as shown in (a) of FIG. 20(a), FIG. 20(b), FIG. 20(c), and FIG. 20(d), an electronic device can display a folder card 40 on the desktop, the folder card 40 is in the form of a 2×2 four-palace grid, and icons of four folders are respectively displayed in the four-palace grid: for example, "photograph" 401, "record a video" 402, "portrait" 403, and "selfie" 404 . In this embodiment of the present application, the following functions may be performed through the folder card 40:

Optionally, If the electronic device receives the operation performed by the user on "photograph" 401, the electronic device can quickly jump to the "photograph" folder to display, to the user, all images photographed by the electronic device through the photographing mode. In the "photograph" folder, all the images photographed through the photographing mode can be arranged in order according to photographing times, for example, an image with the latest photographing time can be arranged at the front, which is convenient for the user to view.

Optionally, if the electronic device receives the operation performed by the user on the "record a video" 402, the electronic device can quickly jump to the "record a video" folder, and display, to the user, all videos recorded by the electronic device through the video recording mode. In the "record a video" folder, all videos can be arranged in order according to photographing times, for example, a video with the latest photographing time can be arranged at the front, which is convenient for the user to view.

Optionally, if the electronic device receives the operation performed by the user on "portrait" 403, the electronic device can quickly jump to the "portrait" folder to display, to the user, all images photographed by the electronic device through the portrait mode. In the "portrait" folder, all the images photographed through the portrait mode can be arranged in order according to photographing times, for example, an image with the latest photographing time can be arranged at the front, which is convenient for the user to view.

Optionally, if the electronic device receives the operation performed by the user on "selfie" 404, the electronic device can quickly jump to the "selfie" folder to display, to the user, all images photographed by the electronic device through the selfie mode. In the "selfie" folder, all the images photographed through the selfie mode can be arranged in order according to photographing times, for example, an image with the latest photographing time can be arranged at the front, which is convenient for the user to view.

Similarly, some or all of the above four folders can be preset by the system. Alternatively, some or all of the above four folders may also be customized by the user.

For the specific description of folder cards for managing camera applications, refer to the detailed description of folder cards in the above embodiments, which will not be repeated herein.

In some other embodiments, as shown in (b) of FIG. 20(a), FIG. 20(b), FIG. 20(c), and FIG. 20(d), the electronic device may display a file card 41 on the desktop, and the file card 41 is used to display related information of an image or a video (for example, a microfilm) recently used (for example, photographed, downloaded or edited, taking photographing as an example) by the electronic device. In this embodiment of the present application, the file card 41 supports the following functions:

Optionally, a plurality of files in the file card 41 can be switched for display in response to a user operation. For example, the user may slide the file card 41 to trigger switching for displaying recently captured images or videos in the file card 41. The file in the file card 41 can be directly opened in response to a user operation without first jumping to an interface of a third-party application for opening the video or the image.

Optionally, a "share" control may be included in the file card 41. In response to the operation performed by the user on the "share" control, the electronic device can quickly call out a path available for sharing (such as an application icon). When the user selects a path, the electronic device can send the file currently displayed in the file card 41 to other electronic devices according to the selected path, so as to perform video or image sharing.

It should be noted that herein, the file card 41 has a sharing function as an example for illustration. In actual implementation, the file card 41 can also have a file collection function, or a file copy function, or a file deletion function, or any other function that meets the actual use requirement, which is not limited in this embodiment of the present application.

It should be further noted that in this embodiment of the present application, displaying an image or a video specifically refers to displaying related information of the image or video. For example, the related information of the image may include a name of the image, a photographing time, a size of the image and/or a type of the image.

The file card provided by the embodiment of the present application can present related information of images (photos or videos) that have been recently captured by the electronic device to the user. The user only needs to slide the file card to intuitively view, through the file card, all images that have been captured recently on the electronic device, and therefore the amount of information is relatively large.

In some other embodiments, as shown in (c) of FIG. 20(a), FIG. 20(b), FIG. 20(c), and FIG. 20(d), the electronic device can display a combined card 42 on the desktop, and the combined card 42 includes the folder card 40 in the implementation 1 and the file card 41 in the implementation 2. Through the combined card 42, the various functions of the folder card 40 described above can be performed, and it is convenient for the user to view images or videos captured in various modes of the camera. Moreover, various functions of the file card 41 can also be performed, which is convenient for the user to view various images or videos captured recently by the electronic device.

In some other embodiments, as shown in (d) of FIG. 20(a), FIG. 20(b), FIG. 20(c), and FIG. 20(d), the electronic device may display the folder card 40 and the file card 41 on the desktop respectively.

The form of the card on the desktop provided by this embodiment of the present application can be an independent folder card, an independent file card, or a card combining different forms. The card forms are diverse and flexible, and information of a plurality of files in different storage paths or locations can be displayed.

It should be noted that in this embodiment, four types of card forms on the desktop are exemplarily listed. It can be understood that this embodiment of the present application includes but is not limited to the four types of card forms on the desktop. In actual implementation, this embodiment of the present application can also support other card forms similar to the four types of card forms, which can be specifically determined according to actual usage requirements, and is not limited in this embodiment of the present application.

It should be further noted that For the card that manages a camera application on the desktop, for related descriptions of the process of adding a card on the desktop, the process of setting a folder path of a card on the desktop, and the process of using a function of a card on the desktop, refer to the detailed descriptions in the above embodiment, and will not be repeated herein.

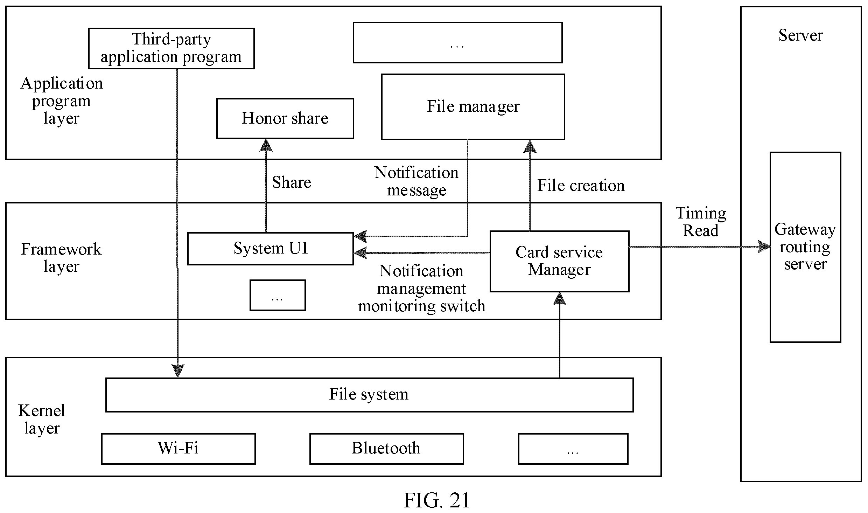

To perform the above solution, the diagram of the software architecture of this embodiment of the present application can be shown in FIG. 21, including: an application layer, a framework layer, and a kernel layer. The framework layer includes at least a system user interface (system UI) and a card service manager. The application layer includes at least a plurality of third-party APPs, Honor sharing APPs and file management APPs (that is, the file manager). The kernel layer includes at least a Bluetooth module, a Wi-Fi module and a file system.

After the electronic device is started, the card service manager is started, and a file monitor service FileMonitorService resident in the card service manager is used to obtain a switch of file management service. When the switch of the file management service is first turned on, configuration information of monitoring paths corresponding to each third-party APP is first obtained once from a gateway routing server (gatewayroutingserver, GRS) server through a cloud service. Subsequently, monitoring paths (that is, default storage paths for files received by the third-party APP) of each third-party APP are regularly obtained from the GRS server through a cloud service. When the switch of the file management service is turned on, a file observer (fileobserver) is used in the FileMonitorService to monitor the changes of the files under the monitoring path in the file system. After the file observer recognizes a newly added file, the file observer filters according to a preset corresponding file type, and filters out files of the file type that do not belong to the monitoring object. When the switch of the file management service is turned off, the monitoring path is no longer obtained, and changes of the files under the monitoring path are no longer obtained through the FileObserver. Optionally, The switch of the file management service is turned on by default, and can be manually turned off by the user in the file manager. After turning off, the file observer no longer monitors the changes of the files. A manner of turning off the file management service can be that the user pulls down to display a notification bar, and slides the card of the notification message to the left, the electronic device displays a setting key of the card of the notification message, the user clicks on the setting key to pop up a setting menu for the notification message, and the user clicks on a notification closing key in the setting menu to disable the file management service. The file system is used to manage all files in the electronic device, such as store files according to a path or delete files, where the files are received by a third-party APP. The card service manager is used to broadcast a message of a new file to the file manager after monitoring a valid newly added file, and the file manager sends a notification message and displays the notification message on the system UI. The system UI is used to display notification messages of new files and update the file-related information in the card on the desktop.

When the user clicks on the share control in the card on the desktop to operate, the system UI can pull up a sharing window for file sharing, or when the user clicks on the "move to" control in the card on the desktop to operate, the system UI can display a plurality of storage paths. When the user selects a storage path, the system UI can move files to the storage path through the file manager.

The electronic device in this embodiment of the present application may be a mobile terminal or a non-mobile terminal. For example, the electronic device can be mobile phones, tablet computers, notebook computers, laptop computers, in-vehicle terminals, wearable devices, ultra-mobile personal computers (ultra-mobile personal computer, UMPC), a netbook or a personal digital assistants (personal digital assistant, PDA), wireless headsets, wireless bracelets, wireless smart glasses, wireless watches, augmented reality (augmented reality, AR)/virtual reality (virtual reality, VR) devices, desktop computers, smart appliances (such as televisions, speakers, refrigerators, air purifiers, air conditioners, and rice cookers), or the like. A device type of the electronic device is not specifically limited in this embodiment of the present application.

The card display method provided in the embodiments of the present application may be performed by the foregoing electronic device, or a functional module and/or a functional entity that can implement the card display method in the electronic device. In addition, the solutions of the present application can be implemented in a hardware and/or software manner. Specifically, this may be determined based on an actual use requirement, and is not limited in this embodiment of the present application. Taking the electronic device as an example, the following exemplarily describes the card display method in the embodiments of the present application with reference to accompanying drawings.

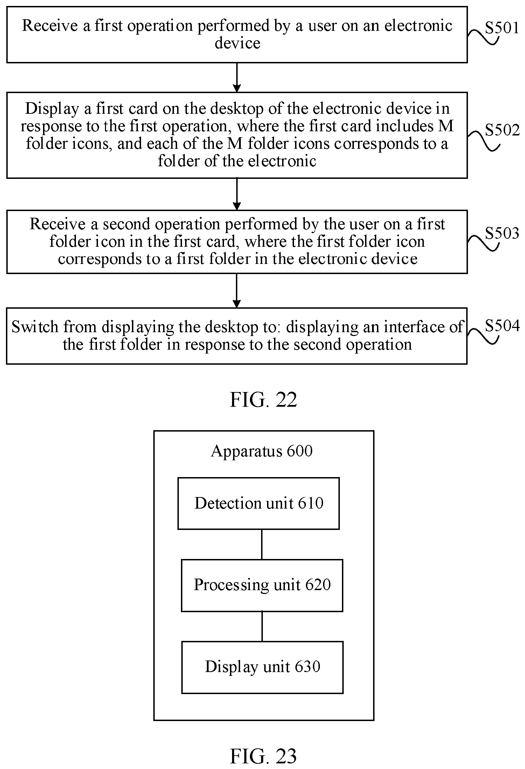

FIG. 22 is a schematic flowchart of a card display method according to an embodiment of the present application. As shown in FIG. 22, the method 100 includes the following steps S501 to S504:
S501: Receive a first operation performed by a user on an electronic device.
S502: Display a first card on the desktop of the electronic device in response to the first operation, where the first card includes M folder icons, each of the M folder icons corresponds to a folder of the electronic device.
M is a positive integer.
S503: Receive a second operation performed by the user on a first folder icon in the first card, where the first folder icon corresponds to a first folder in the electronic device.
S504: Switch from displaying the desktop to: displaying an interface of the first folder in response to the second operation.

In this embodiment of the present application, each folder in the first card may be set as a folder frequently used by the user or a folder for storing files downloaded or received by the electronic device. Exemplarily, the first folder may be any one of the following: folder 1, used to store a user personal file; folder 2, used to store a file downloaded by the electronic device within the latest preset period; folder 3, used to store all files downloaded and received by the electronic device; and folder 4, used to store all files downloaded through a first application installed in the electronic device. Alternatively, the first folder may be any other possible folder.

Through the solution of the present application, a card including a plurality of folders can be added on the desktop according to the need of the user. For example, each folder in the card can be set as a folder commonly used by the user or a folder for storing files downloaded or received by the electronic device. In this way, when needed, the user can quickly view corresponding information of some folders only through the card on the desktop. Compared with the solution in the related art that only displays content of recently downloaded files, the solution of the present application can display a larger amount of information. Besides, because the folder is displayed instead of specific file information, the confidentiality is good. The solution of the present application is convenient, quick, and secure in file management.

Optionally, the card display method provided in this embodiment of the present application can also include the following steps S505 and S506.

S505: Receive a third operation performed by the user on the first card.

The third operation may be an operation in which the user slides in a preset direction on the first card. Alternatively, the third operation is an operation in which the user touches the first card for a duration greater than or equal to a first duration. Certainly, the third operation may also be any other possible operation, which specifically may be determined based on actual use requirements and is not limited in the embodiments of the present application.

S506: Display a card menu bar in response to the third operation, where the card menu bar includes an editing option, a more card option, and/or a removing option.

Optionally, the card display method provided in this embodiment of the present application can also include the following steps S507 to S509A or step S509B.

S507: Receive a fourth operation performed by the user on the editing option.

S508: Display a first folder path option and a second folder path option in response to the fourth operation.

S509A: When receiving an operation performed by the user on the first folder path option, set, as M folders in the first card, M folders recommended by the system.

S509B: When receiving an operation performed by the user on the second folder path option, set N folders in the first card according to a folder selected by the user, where N is a positive integer less than or equal to M.

Either of S509A and S509B is executed.

Optionally, the card display method provided in this embodiment of the present application can also include the following steps S510 to S513.

S510: Receive a fifth operation performed by the user on the more card option.

S511: Display a plurality of card preview images in response to the fifth operation, where the plurality of card preview images respectively correspond to cards of different specifications.

S512: Receive a sixth operation performed by the user on a second card preview image of the plurality of card preview images, where the second card preview image corresponds to a second card.

S513: Add and display the second card on the desktop of the electronic device in response to the fifth operation.

Optionally, the card display method provided in this embodiment of the present application can also include the following steps S514 to S515.

S514: Receive a ninth operation performed by the user on the removing option.

S515: Remove the first card from the desktop in response to the ninth operation.

Through the proposal of the present application, cards of various specifications on the desktop are provided for users to choose. For example, a card on the desktop provides a common folder path customizable by a user, and/or a card on the desktop can support scrolling switching display of recently processed files. Users can choose to add cards suitable for their own usage habits to the desktop for display according to actual usage needs. Since a card on the desktop presents a folder form or a file name to the user, instead of specific file information, user personal information is not leaked. When needed, the user only needs to open the folder in the card on the desktop to view corresponding information, or simply slide the card on the desktop to intuitively view all the files recently used on the electronic device, which can display a large amount of information and is convenient, quick, and secure.

It should also be noted that, in the embodiments of the present application, "greater than" may be replaced with "greater than or equal to", and "less than or equal to" may be replaced with "less than". Alternatively, "greater than or equal to" may be replaced with "greater than", and "less than" may be replaced with "less than or equal to".

Each embodiment described herein may be an independent solution, or may be combined according to an internal logic, and such solutions all fall within the protection scope of the present application.

It may be understood that, the methods and operations implemented by the electronic device in the foregoing method embodiments may also be implemented by a component (for example, a chip or a circuit) that can be used in the electronic device.

The method embodiments provided in the present application are described above, and apparatus embodiments provided in the present application are described below. It should be understood that the description of the apparatus embodiments correspond to the description of the method embodiments. Therefore, for content not described in detail, reference may be made to the foregoing method embodiments. This is not repeated herein for brevity.

The solutions provided in the embodiments of the present application are mainly described above from a perspective of method steps. It may be understood that, to implement the foregoing functions, the electronic device implementing the method includes corresponding hardware structures and/or software modules for performing the functions. A person skilled in the art may aware that, in combination with the units and algorithm steps of the examples described in the embodiments disclosed in this specification, the present application can be implemented by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the protection scope of the present application.

In the embodiments, function modules of the electronic device may be divided based on the foregoing method example. For example, each function module may be divided according to each function, or two or more functions may be integrated into one processing module. The integrated module may be implemented in the form of hardware, or may be implemented in a form of a software functional module. It should be noted that module division in the embodiments of the present application is an example, and is only logical function division. During actual implementation, there may be another division manner. The following descriptions are made by using an example in which functional modules are divided corresponding to functions.

FIG. 23 is a schematic block diagram of a display apparatus 600 according to an embodiment of the present application. The apparatus 600 may be configured to perform actions performed by the electronic device in the foregoing method embodiments. The apparatus 600 includes a detection unit 610, a processing unit 620, and a display unit 630.

The detection unit 610 is configured to receive a first operation performed by a user on an electronic device.

The processing unit 620 instructs, in response to the first operation, the display unit 630 to display the first card.

The detection unit 610 is configured to display a first card on the desktop of the electronic device according to an instruction of the processing unit 620, where the first card includes M folder icons, each of the M folder icons corresponds to a folder of the electronic device, and M is a positive integer.

The detection unit 610 is further configured to receive a second operation performed by the user on a first folder icon in the first card, where the first folder icon corresponds to a first folder in the electronic device.

The processing unit 620 is further configured to instruct, in response to the second operation, the display unit 630 to display the interface of the first folder.

The display unit 630 is further configured to switch, according to an instruction of the processing unit 620, displaying the desktop to: displaying an interface of the first folder.

Through the solution of the present application, a card including a plurality of folders can be added on the desktop according to the need of the user. For example, each folder in the card can be set as a folder commonly used by the user or a folder for storing files downloaded or received by the electronic device. In this way, when needed, the user can quickly view corresponding information of some folders only through the card on the desktop. Compared with the solution in the related art that only displays content of recently downloaded files, the solution of the present application can display a larger amount of information. Besides, because the folder is displayed instead of specific file information, the confidentiality is good. The solution of the present application is convenient, quick, and secure in file management.

The apparatus 600 according to this embodiment of the present application may correspondingly perform the method described in the embodiments of the present application, and the foregoing and other operations and/or functions of the units in the apparatus 600 are respectively used for implementing corresponding procedures in the method. For brevity, details are not described herein again.

An embodiment of the present application further provides an electronic device, including: one or more processors; a memory; and a touch sensor, configured to detect a touch operation of a user and display an interface. The memory stores code, and the code, when executed by the one or more processors, causes the electronic device to perform the various steps in the above embodiments.

Exemplarily, when the electronic device is the electronic device shown in FIG. 1, the processor in the electronic device may be the processor 110 in FIG. 1, the memory in the electronic device may be the internal memory 121 in FIG. 1, and the touch screen in the electronic device may include the display screen 194 and the touch sensor 180K in FIG. 1.

In actual implementation, when electronic device 100 runs, the processor 110 executes computer executable instructions in the memory 121 to execute the operation steps of the above method through the electronic device 100.

Optionally, in some embodiments, the present application provides a chip, the chip is coupled with a memory, and the chip is configured to read and execute computer programs or instructions stored in the memory, so as to execute the methods in the foregoing embodiments.

Optionally, in some embodiments, the present application provides an electronic device, including a chip. The chip is configured to read and execute computer programs or instructions stored in a memory, so that the methods in each embodiment are executed.

Optionally, in some embodiments, an embodiment of the present application further provides a computer-readable storage medium, storing program code. The computer program code, when running on a computer, causes the computer to perform the method according to the foregoing embodiments.

Optionally, in some embodiments, the embodiments of the present application further provide a computer program product, including computer program code, the computer program code, when run on a computer, causing the computer to perform the method according to the foregoing embodiments.

The electronic device, the computer-readable storage medium, the computer program product, or the chip provided in the embodiments may be configured to perform the corresponding method provided above. Therefore, for beneficial effects that can be achieved, refer to the beneficial effects of the corresponding method provided above. Details are not described herein again.

In the embodiments of the present application, the electronic device includes a hardware layer, an operating system layer running on the hardware layer, and an application layer running on the operating system layer. The hardware layer may include hardware such as a central processing unit (central processing unit, CPU), a memory management unit (memory management unit, MMU), and a memory (which is also referred to as a main memory). The operating system in the operating system layer may be any one or more computer operating systems such as a Linux operating system, a Unix operating system, an Android operating system, an iOS operating system, or a Windows operating system that implement service processing by using a process (process). The application layer may include an application such as a browser, an address book, word processing software, or instant messaging software.

The embodiments of the present application do not specifically limit a specific structure of an execution entity of the methods provided in the embodiments of the present application, as long as the program in which the codes of the methods provided in the embodiments of the present application are recorded can be executed to communicate according to the embodiments of the present application. For example, the execution entity of the method provided in the embodiments of the present application may be an electronic device or may be functional modules in the electronic device that can invoke a program and execute the program.

Aspects or features of the present application may be implemented as a method, an apparatus or a product that uses standard programming and/or engineering technologies. The term "product" used in this specification may cover a computer program that can be accessed from any computer readable component, carrier or medium. The term "computer-readable medium" may include, but is not limited to: For example, the computer-readable medium may include but is not limited to: a magnetic storage component (such as a hard disk, a floppy disk, or a magnetic tape), an optical disc (for example, a compact disc (compact disc, CD), or a digital versatile disc (digital versatile disc, DVD)), a smart card, and a flash memory component (such as an erasable programmable read-only memory (erasable programmable read-only memory, EPROM), a card, a stick, or a key drive).

Various storage media described in this specification may indicate one or more devices and/or other machine-readable media that is used to store information. The term "machine-readable medium" may include but is not limited to: wireless channels and various other media capable of storing, containing, and/or carrying instructions and/or data.

A person of ordinary skill in the art may be aware that the units and steps in the examples described with reference to the embodiments disclosed in this specification may be implemented by electronic hardware or a combination of computer software and electronic hardware. Whether the functions are executed in a mode of hardware or software depends on particular applications and design constraint conditions of the technical solutions. A person skilled in the art may use different methods to implement the described functions for each particular application, but it should not be considered that the implementation goes beyond the protection scope of the present application.

A person skilled in the art can clearly understand that for convenience and conciseness of description, for specific working processes of the foregoing systems, devices and units, reference may be made to the corresponding processes in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatus or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in the embodiments of the present application may be integrated into one processing unit, or each of the units may be physically separated, or two or more units may be integrated into one unit.

When the function is implemented in the form of a software functional unit and sold or used as an independent product, the function may be stored in a computer-readable storage medium. Based on such an understanding, the technical solutions of the present application essentially, or the part contributing to the related art, or some of the technical solutions may be implemented in a form of a computer software product. The computer software product is stored in a storage medium, and includes several instructions for instructing a computer device (which may be a personal computer, a server, a network device, or the like) to perform all or some of the steps of the methods described in the embodiments of the present application. The storage medium may include but is not limited to: a USB flash drive, a removable hard disk, or a medium such as a ROM, a RAM, a magnetic disk, or an optical disc that can store program code.

Unless otherwise defined, meanings of all technical and scientific terms used in this specification are the same as those usually understood by a person skilled in the art to which the present application belongs. In the present application, terms used in the specification of the present application are merely intended to describe objectives of the specific embodiments, but are not intended to limit the present application.

The foregoing descriptions are merely specific implementations of the present application, but are not intended to limit the protection scope of the present application. Any variation or replacement readily figured out by a person skilled in the art within the technical scope disclosed in the present application shall fall within the protection scope of the present application. Therefore, the protection scope of the present application shall be used as protection scope of the claims.

## Claims

1. A card display method, comprising:
receiving (S501) a first operation performed by a user on an electronic device;
displaying (S502) a first card on the desktop of the electronic device in response to the first operation, wherein the first card comprises M folder icons, each of the M folder icons corresponds to a folder of the electronic device, and M is a positive integer;
receiving (S503) a second operation performed by the user on a first folder icon in the first card, wherein the first folder icon corresponds to a first folder in the electronic device; and
switching (S504) from displaying the desktop to: displaying an interface of the first folder in response to the second operation, wherein after the displaying a first card on the desktop of the electronic device, the method further comprises:
receiving (S505) a third operation performed by the user on the first card, wherein the third operation is an operation in which the user slides on the first card, or the third operation is a long press operation in which the user touches the first card; and
displaying (S506) a card menu bar in response to the third operation, wherein the card menu bar comprises at least one of the following: an editing option, a more card option, and a removing option;
wherein, when the card menu bar comprises the editing option, and after the displaying a card menu bar, the method further comprises:
receiving (S507) a fourth operation performed by the user on the editing option;
displaying (S508) a first folder path option and a second folder path option in response to the fourth operation; and
when receiving an operation performed by the user on the first folder path option, setting (S509A), as M folders in the first card, M folders recommended by the system; or
when receiving an operation performed by the user on the second folder path option, set (S509B) N folders in the first card according to a folder selected by the user, wherein N is a positive integer less than or equal to M.

2. The method according to claim 1, wherein the setting, when receiving an operation performed by the user on the second folder path option, N folders in the first card according to a folder selected by the user comprises:
displaying N folder setting items when receiving the operation performed by the user on the second folder path option;
displaying a folder selection interface when receiving an operation performed by the user on a first setting item of the N folder setting items, wherein one or more folder options are displayed in the folder selection interface, and each folder option corresponds to a folder; and
setting a folder corresponding to a target folder option in the folder selection interface as a folder in the first card when receiving an operation performed by the user on the target folder option.

3. The method according to claim 2, wherein the folder selection interface comprises a system folder option and/or an application folder option, the system folder option corresponds to a folder preset in the system in the electronic device, and the application folder option corresponds to a folder corresponding to an application installed in the electronic device;
wherein the target folder option is the system folder option and/or the application folder option.

4. The method according to any one of claims 1 to 3, wherein the first folder is any one of the following:
folder 1, used to store a user personal file;
folder 2, used to store a file downloaded by the electronic device within the latest preset period;
folder 3, used to store all files downloaded and received by the electronic device; and
folder 4, used to store all files downloaded through a first application installed in the electronic device.

5. The method according to claim 1, wherein, when the card menu bar comprises the more card option, and after the displaying a card menu bar, the method further comprises:
receiving a fifth operation performed by the user on the more card option;
displaying a plurality of card preview images in response to the fifth operation, wherein the plurality of card preview images respectively correspond to cards of different specifications;
receiving a sixth operation performed by the user on a second card preview image of the plurality of card preview images, wherein the second card preview image corresponds to a second card; and
adding and displaying the second card on the desktop of the electronic device in response to the sixth operation.

6. The method according to claim 5, wherein the second card is used to display file attribute information of a file recently downloaded by the electronic device, and the file attribute information comprises at least one of the following: a file name, a file download time, an occupied file space size, and a file type.

7. The method according to claim 5 or 6, wherein after the displaying the second card, the method further comprises:
receiving a seventh operation performed by the user on the second card; and
opening the recently downloaded file in response to the seventh operation, and displaying file content of the recently downloaded file.

8. The method according to any one of claims 5 to 7, wherein the second card comprises a first control, and the first control is used to trigger the transmission of a file displayed in the second card to another electronic device; and
after the displaying the second card, the method further comprises:
displaying a first interface when receiving an operation performed by the user on the first control, wherein the first interface comprises one or more sharing mode icons, and each sharing mode icon corresponds to a file transfer mode and/or a file transfer object; and
sending a file displayed in the second card to a first file transfer object when receiving an operation performed by the user on the first sharing mode icon and the first sharing mode icon corresponds to the first file transfer object; or
displaying a plurality of file transfer objects when receiving an operation performed by the user on the second sharing mode icon and the second sharing mode icon corresponds to a first file transfer mode; and sending a file displayed in the second card to a first object of the plurality of file transfer objects in the first file transfer mode when receiving an operation performed by the user on the first object;
wherein the first sharing mode icon and the second sharing mode icon are icons of the one or more sharing mode icons respectively.

9. The method according to any one of claims 5 to 8, wherein the second card comprises a second control, and the second control is used to trigger moving the file displayed in the second card to a storage path in the electronic device; and
after the displaying the second card, the method further comprises:
displaying a second interface when receiving an operation performed by the user on the second control, wherein the second interface comprises one or more folder identifiers, and each folder identifier corresponds to a folder and a storage path of the folder; and
when receiving an operation performed by the user on a first folder identifier, moving, according to a storage path corresponding to the first folder identifier, a file displayed in the second card to a folder corresponding to the first folder identifier.

10. The method according to any one of claims 1 to 9, wherein the first card comprises a first area and a second area, wherein the first area is used to display the M folder icons, and the second area is used to display file attribute information of a file recently downloaded on the electronic device; wherein
the file attribute information comprises at least one of the following: a file name, a file download time, an occupied file space size, and a file type.

11. An electronic device, comprising a processor, coupled to a memory and configured to execute a computer program or instructions stored in the memory, to cause the electronic device to implement the method according to any one of claims 1 to 10.

12. A computer-readable storage medium, storing a computer program, wherein the computer program, when executed on an electronic device, causes the electronic device to perform the method according to any one of claims 1 to 10.

## Patentansprüche

1. Ein Verfahren zur Anzeige von Karten, umfassend:
Empfangen (S501) einer ersten Bedienung, die von einem Benutzer an einem elektronischen Gerät durchgeführt wird;
Anzeigen (S502) einer ersten Karte auf dem Desktop des elektronischen Geräts als Reaktion auf die erste Bedienung, wobei die erste Karte M Ordnersymbole umfasst, wobei jedes der M Ordnersymbole einem Ordner des elektronischen Geräts entspricht und M eine positive ganze Zahl ist;
Empfangen (S503) einer zweiten Bedienung, die von dem Benutzer an einem ersten Ordnersymbol in der ersten Karte durchgeführt wird, wobei das erste Ordnersymbol einem ersten Ordner im elektronischen Gerät entspricht; und
Umschalten (S504) von der Anzeige des Desktops zu: Anzeigen einer Benutzeroberfläche des ersten Ordners als Reaktion auf die zweite Bedienung, wobei das Verfahren zusätzlich umfasst, nachdem die erste Karte auf dem Desktop des elektronischen Geräts angezeigt wurde:
Empfangen (S505) einer dritten Bedienung, die vom Benutzer an der ersten Karte durchgeführt wird, wobei die dritte Bedienung entweder darin besteht, dass der Benutzer auf der ersten Karte wischt, oder die dritte Bedienung eine Langdruck-Bedienung ist, bei der der Benutzer die erste Karte berührt; und
Anzeigen (S506) einer Karten-Menüleiste als Reaktion auf die dritte Bedienung, wobei die Karten-Menüleiste mindestens eine der folgenden Optionen umfasst: eine Bearbeitungsoption, eine Weitere-Karte-Option und eine Entfernen-Option;
wobei, wenn die Karten-Menüleiste die Bearbeitungsoption umfasst, und nach Anzeige der Karten-Menüleiste, das Verfahren weiterhin umfasst:
Empfangen (S507) einer vierten Bedienung, die vom Benutzer an der Bearbeitungsoption durchgeführt wird;
Anzeigen (S508) einer ersten Ordnerpfad-Option und einer zweiten Ordnerpfad-Option als Reaktion auf die vierte Bedienung; und
wenn eine Bedienung des Benutzers an der ersten Ordnerpfad-Option empfangen wird, Festlegen (S509A) von M vom System empfohlenen Ordnern als M Ordner in der ersten Karte; oder
wenn eine Bedienung des Benutzers an der zweiten Ordnerpfad-Option empfangen wird, Festlegen (S509B) von N Ordnern in der ersten Karte entsprechend einem vom Benutzer ausgewählten Ordner, wobei N eine positive ganze Zahl ist, die kleiner oder gleich M ist.

2. Verfahren nach Anspruch 1, wobei das Festlegen, wenn eine Bedienung des Benutzers an der zweiten Ordnerpfad-Option empfangen wird, von N Ordnern in der ersten Karte entsprechend einem vom Benutzer ausgewählten Ordner Folgendes umfasst:
Anzeigen von N Ordner-Einstellungselementen, wenn die Bedienung des Benutzers an der zweiten Ordnerpfad-Option empfangen wird;
Anzeigen einer Ordnerauswahlschnittstelle beim Empfang einer vom Benutzer ausgeführten Operation auf einem ersten Einstellungsobjekt der N Ordner-Einstellungsobjekte, wobei eine oder mehrere Ordneroptionen in der Ordnerauswahlschnittstelle angezeigt werden und jede Ordneroption einem Ordner entspricht; und
Festlegen eines Ordners, der der Zielordneroption in der Ordnerauswahlschnittstelle entspricht, als Ordner in der ersten Karte, wenn eine vom Benutzer ausgeführte Operation auf der Zielordneroption empfangen wird.

3. Das Verfahren nach Anspruch 2, wobei die Ordnerauswahlschnittstelle eine Systemordneroption und/oder eine Anwendungsordneroption umfasst, wobei die Systemordneroption einem im System des elektronischen Geräts voreingestellten Ordner entspricht und die Anwendungsordneroption einem Ordner entspricht, der einer im elektronischen Gerät installierten Anwendung zugeordnet ist;
wobei die Zielordneroption die Systemordneroption und/oder die Anwendungsordneroption ist.

4. Das Verfahren nach einem der Ansprüche 1 bis 3, wobei der erste Ordner einer der folgenden ist:
Ordner 1, dient zur Speicherung einer persönlichen Datei des Benutzers;
Ordner 2, dient zur Speicherung einer Datei, die vom elektronischen Gerät innerhalb des zuletzt voreingestellten Zeitraums heruntergeladen wurde;
Ordner 3, dient zur Speicherung aller vom elektronischen Gerät heruntergeladenen und empfangenen Dateien; und
Ordner 4, dient zur Speicherung aller Dateien, die über eine erste auf dem elektronischen Gerät installierte Anwendung heruntergeladen wurden.

5. Das Verfahren nach Anspruch 1, wobei die Kartenmenüleiste die Option 'Weitere Karten' umfasst und nach dem Anzeigen einer Kartenmenüleiste umfasst das Verfahren ferner:
Empfangen einer fünften vom Benutzer auf der Option 'Weitere Karten' ausgeführten Operation;
Anzeigen mehrerer Karten-Vorschaubilder als Reaktion auf die fünfte Operation, wobei die mehreren Karten-Vorschaubilder jeweils Karten unterschiedlicher Spezifikationen entsprechen;
Empfangen einer sechsten vom Benutzer auf einem zweiten Karten-Vorschaubild der mehreren Karten-Vorschaubilder ausgeführten Operation, wobei das zweite Karten-Vorschaubild einer zweiten Karte entspricht; und
Hinzufügen und Anzeigen der zweiten Karte auf dem Desktop des elektronischen Geräts als Reaktion auf die sechste Operation.

6. Das Verfahren nach Anspruch 5, wobei die zweite Karte verwendet wird, um Dateiattributinformationen einer vom elektronischen Gerät zuletzt heruntergeladenen Datei anzuzeigen, wobei die Dateiattributinformationen mindestens eine der folgenden Angaben umfassen: einen Dateinamen, eine Datei-Downloadzeit, eine belegte Dateispeichergröße und einen Dateityp.

7. Das Verfahren nach Anspruch 5 oder 6, wobei nach dem Anzeigen der zweiten Karte das Verfahren ferner umfasst:
Empfangen einer siebten vom Benutzer an der zweiten Karte ausgeführten Operation; und
Öffnen der kürzlich heruntergeladenen Datei als Reaktion auf die siebte Operation und Anzeigen des Dateiinhalts der kürzlich heruntergeladenen Datei.

8. Verfahren nach einem der Ansprüche 5 bis 7, wobei die zweite Karte ein erstes Steuerelement umfasst und das erste Steuerelement dazu verwendet wird, die Übertragung einer in der zweiten Karte angezeigten Datei an ein anderes elektronisches Gerät auszulösen; und
Nach der Anzeige der zweiten Karte umfasst das Verfahren ferner:
Anzeigen einer ersten Benutzeroberfläche beim Empfang einer vom Benutzer auf dem ersten Steuerelement ausgeführten Operation, wobei die erste Benutzeroberfläche ein oder mehrere Sharing-Modus-Symbole umfasst und jedes Sharing-Modus-Symbol einem Dateiübertragungsmodus und/oder einem Dateiübertragungsobjekt entspricht; und
Senden einer in der zweiten Karte angezeigten Datei an ein erstes Dateiübertragungsobjekt beim Empfang einer vom Benutzer auf dem ersten Sharing-Modus-Symbol ausgeführten Operation, wobei das erste Sharing-Modus-Symbol dem ersten Dateiübertragungsobjekt entspricht; oder
Anzeigen mehrerer Dateiübertragungsobjekte beim Empfang einer vom Benutzer auf dem zweiten Sharing-Modus-Symbol ausgeführten Operation, wobei das zweite Sharing-Modus-Symbol einem ersten Dateiübertragungsmodus entspricht; und Senden einer in der zweiten Karte angezeigten Datei an ein erstes Objekt der mehreren Dateiübertragungsobjekte im ersten Dateiübertragungsmodus beim Empfang einer vom Benutzer auf dem ersten Objekt ausgeführten Operation;
wobei das erste Sharing-Modus-Symbol und das zweite Sharing-Modus-Symbol jeweils Symbole der einen oder mehreren Sharing-Modus-Symbole sind.

9. Verfahren nach einem der Ansprüche 5 bis 8, wobei die zweite Karte ein zweites Steuerelement umfasst und das zweite Steuerelement dazu verwendet wird, das Verschieben der in der zweiten Karte angezeigten Datei in einen Speicherpfad des elektronischen Geräts auszulösen; und
Nach der Anzeige der zweiten Karte umfasst das Verfahren ferner:
Anzeigen einer zweiten Benutzeroberfläche beim Empfang einer vom Benutzer auf dem zweiten Steuerelement ausgeführten Operation, wobei die zweite Benutzeroberfläche eine oder mehrere Ordnerkennungen umfasst und jede Ordnerkennung einem Ordner und einem Speicherpfad des Ordners entspricht; und
Beim Empfang einer vom Benutzer auf einer ersten Ordnerkennung ausgeführten Operation wird eine in der zweiten Karte angezeigte Datei entsprechend dem einem ersten Ordnerkennung zugeordneten Speicherpfad in den entsprechenden Ordner verschoben.

10. Das Verfahren nach einem der Ansprüche 1 bis 9, wobei die erste Karte einen ersten Bereich und einen zweiten Bereich umfasst, wobei der erste Bereich zur Anzeige der M Ordner-Symbole verwendet wird und der zweite Bereich zur Anzeige von Datei-Attributinformationen einer kürzlich auf dem elektronischen Gerät heruntergeladenen Datei verwendet wird; wobei
die Datei-Attributinformationen mindestens einen der folgenden Punkte umfassen: einen Dateinamen, einen Datei-Download-Zeitpunkt, eine belegte Dateigröße und einen Dateityp.

11. Elektronisches Gerät, das einen Prozessor umfasst, der mit einem Speicher verbunden ist und so konfiguriert ist, dass er ein im Speicher gespeichertes Computerprogramm oder Anweisungen ausführt, um das elektronische Gerät dazu zu veranlassen, das Verfahren nach einem der Ansprüche 1 bis 10 auszuführen.

12. Computerlesbares Speichermedium, das ein Computerprogramm speichert, wobei das Computerprogramm, wenn es auf einem elektronischen Gerät ausgeführt wird, das elektronische Gerät dazu veranlasst, das Verfahren nach einem der Ansprüche 1 bis 10 durchzuführen.

## Revendications

1. Procédé d'affichage de carte, comprenant :
la réception (S501) d'une première opération effectuée par un utilisateur sur un dispositif électronique ;
l'affichage (S502) d'une première carte sur le bureau du dispositif électronique en réponse à la première opération, la première carte comprenant M icônes de dossiers, chacune des M icônes de dossiers correspondant à un dossier du dispositif électronique, et M étant un entier positif ;
la réception (S503) d'une deuxième opération effectuée par l'utilisateur sur une première icône de dossier dans la première carte, la première icône de dossier correspondant à un premier dossier du dispositif électronique ; et
le passage (S504) de l'affichage du bureau à : l'affichage d'une interface du premier dossier en réponse à la deuxième opération, le procédé comprenant, après l'affichage d'une première carte sur le bureau du dispositif électronique :
la réception (S505) d'une troisième opération effectuée par l'utilisateur sur la première carte, la troisième opération étant une opération où l'utilisateur fait glisser sur la première carte, ou la troisième opération étant une opération de pression longue où l'utilisateur touche la première carte ; et
l'affichage (S506) d'une barre de menu de carte en réponse à la troisième opération, la barre de menu de carte comprenant au moins l'un des éléments suivants : une option d'édition, une option de carte supplémentaire et une option de suppression ;
dans ce cas, lorsque la barre de menu de carte comprend l'option d'édition, et après l'affichage d'une barre de menu de carte, le procédé comprend en outre :
la réception (S507) d'une quatrième opération effectuée par l'utilisateur sur l'option d'édition ;
l'affichage (S508) d'une première option de chemin de dossier et d'une deuxième option de chemin de dossier en réponse à la quatrième opération ; et
lors de la réception d'une opération effectuée par l'utilisateur sur la première option de chemin de dossier, le paramétrage (S509A), en tant que M dossiers de la première carte, des M dossiers recommandés par le système ; ou
lors de la réception d'une opération effectuée par l'utilisateur sur la deuxième option de chemin de dossier, paramétrer (S509B) N dossiers dans la première carte selon un dossier sélectionné par l'utilisateur, N étant un entier positif inférieur ou égal à M.

2. Procédé selon la revendication 1, dans lequel la configuration, lors de la réception d'une opération effectuée par l'utilisateur sur la deuxième option de chemin de dossier, de N dossiers dans la première carte selon un dossier sélectionné par l'utilisateur comprend :
l'affichage de N éléments de configuration de dossier lors de la réception de l'opération effectuée par l'utilisateur sur la deuxième option de chemin de dossier ;
affichage d'une interface de sélection de dossier lors de la réception d'une opération effectuée par l'utilisateur sur un premier élément de paramétrage parmi les N éléments de paramétrage de dossier, où une ou plusieurs options de dossier sont affichées dans l'interface de sélection de dossier, chaque option de dossier correspondant à un dossier ; et
définition d'un dossier correspondant à une option de dossier cible dans l'interface de sélection de dossier comme dossier dans la première carte lors de la réception d'une opération effectuée par l'utilisateur sur l'option de dossier cible.

3. Le procédé selon la revendication 2, dans lequel l'interface de sélection de dossier comprend une option de dossier système et/ou une option de dossier d'application, l'option de dossier système correspondant à un dossier prédéfini dans le système de l'appareil électronique, et l'option de dossier d'application correspondant à un dossier lié à une application installée sur l'appareil électronique ;
dans lequel l'option de dossier cible est l'option de dossier système et/ou l'option de dossier d'application.

4. Le procédé selon l'une quelconque des revendications 1 à 3, dans lequel le premier dossier est l'un des suivants :
dossier 1, utilisé pour stocker un fichier personnel de l'utilisateur ;
dossier 2, utilisé pour stocker un fichier téléchargé par l'appareil électronique durant la dernière période prédéfinie ;
dossier 3, utilisé pour stocker tous les fichiers téléchargés et reçus par l'appareil électronique ; et
dossier 4, utilisé pour stocker tous les fichiers téléchargés via une première application installée sur l'appareil électronique.

5. Le procédé selon la revendication 1, dans lequel, lorsque la barre de menu de cartes comprend l'option de carte supplémentaire, et après l'affichage d'une barre de menu de cartes, le procédé comprend en outre :
réception d'une cinquième opération effectuée par l'utilisateur sur l'option de carte supplémentaire ;
affichage d'une pluralité d'images d'aperçu de cartes en réponse à la cinquième opération, chaque image d'aperçu de carte correspondant respectivement à des cartes de différentes spécifications ;
réception d'une sixième opération effectuée par l'utilisateur sur une seconde image d'aperçu de carte parmi la pluralité d'images d'aperçu de cartes, la seconde image d'aperçu de carte correspondant à une seconde carte ; et
ajout et affichage de la seconde carte sur le bureau de l'appareil électronique en réponse à la sixième opération.

6. Le procédé selon la revendication 5, dans lequel la seconde carte est utilisée pour afficher les informations d'attribut de fichier d'un fichier récemment téléchargé par l'appareil électronique, et les informations d'attribut de fichier comprennent au moins l'un des éléments suivants : un nom de fichier, une date de téléchargement du fichier, la taille de l'espace occupé par le fichier et un type de fichier.

7. Le procédé selon la revendication 5 ou 6, dans lequel, après l'affichage de la seconde carte, le procédé comprend en outre :
réception d'une septième opération effectuée par l'utilisateur sur la seconde carte ; et
ouverture du fichier récemment téléchargé en réponse à la septième opération, et affichage du contenu du fichier récemment téléchargé.

8. Le procédé selon l'une quelconque des revendications 5 à 7, dans lequel la seconde carte comprend un premier contrôle, et le premier contrôle est utilisé pour déclencher la transmission d'un fichier affiché dans la seconde carte vers un autre dispositif électronique ; et
après l'affichage de la seconde carte, le procédé comprend en outre :
affichage d'une première interface lorsqu'une opération effectuée par l'utilisateur sur le premier contrôle est reçue, dans laquelle la première interface comprend une ou plusieurs icônes de mode de partage, et chaque icône de mode de partage correspond à un mode de transfert de fichier et/ou à un objet de transfert de fichier ; et
envoi d'un fichier affiché dans la seconde carte à un premier objet de transfert de fichier lorsqu'une opération effectuée par l'utilisateur sur la première icône de mode de partage est reçue et que la première icône de mode de partage correspond au premier objet de transfert de fichier ; ou
affichage de plusieurs objets de transfert de fichier lorsqu'une opération effectuée par l'utilisateur sur la seconde icône de mode de partage est reçue et que la seconde icône de mode de partage correspond à un premier mode de transfert de fichier ; et envoi d'un fichier affiché dans la seconde carte à un premier objet parmi les multiples objets de transfert de fichier dans le premier mode de transfert de fichier lorsqu'une opération effectuée par l'utilisateur sur le premier objet est reçue ;
dans lequel la première icône de mode de partage et la seconde icône de mode de partage sont respectivement des icônes de l'une ou plusieurs icônes de mode de partage.

9. Le procédé selon l'une quelconque des revendications 5 à 8, dans lequel la seconde carte comprend un second contrôle, et le second contrôle est utilisé pour déclencher le déplacement du fichier affiché dans la seconde carte vers un chemin de stockage dans le dispositif électronique ; et
après l'affichage de la seconde carte, le procédé comprend en outre :
affichage d'une seconde interface lorsqu'une opération effectuée par l'utilisateur sur le second contrôle est reçue, dans laquelle la seconde interface comprend un ou plusieurs identifiants de dossier, et chaque identifiant de dossier correspond à un dossier et à un chemin de stockage du dossier ; et
lorsqu'une opération effectuée par l'utilisateur sur un premier identifiant de dossier est reçue, déplacement, selon un chemin de stockage correspondant au premier identifiant de dossier, d'un fichier affiché dans la seconde carte vers un dossier correspondant au premier identifiant de dossier.

10. Procédé selon l'une quelconque des revendications 1 à 9, dans lequel la première carte comprend une première zone et une seconde zone, la première zone étant utilisée pour afficher les icônes des M dossiers, et la seconde zone étant utilisée pour afficher les informations d'attribut du fichier récemment téléchargé sur le dispositif électronique ; dans lequel
les informations d'attribut du fichier comprennent au moins l'un des éléments suivants : un nom de fichier, une heure de téléchargement du fichier, une taille d'espace occupé par le fichier et un type de fichier.

11. Un dispositif électronique, comprenant un processeur, relié à une mémoire et configuré pour exécuter un programme informatique ou des instructions stockés dans la mémoire, afin d'amener le dispositif électronique à mettre en œuvre le procédé selon l'une quelconque des revendications 1 à 10.

12. Un support de stockage lisible par ordinateur, stockant un programme informatique, ledit programme informatique, lorsqu'il est exécuté sur un dispositif électronique, amenant ledit dispositif électronique à exécuter le procédé selon l'une quelconque des revendications 1 à 10.
